# EUROPEAN PATENT APPLICATION

(11) **EP 4 589 353 A1**
(43) Date of publication of application: **23.07.2025**
(21) Application number: 23865683.9
(22) Date of filing: 03.07.2023
(51) Int. Cl.: G02B 7/09, G02B 27/64, G03B 3/10, G03B 30/00, H04N 23/55, G02B 7/02, H02K 33/18, G02B 7/10

(54) **LENS DRIVING DEVICE, CAMERA DEVICE, AND OPTICAL DEVICE**

(30) Priority: 15.09.2022 KR 20220116712; 27.09.2022 KR 20220122771
(71) Applicant: LG INNOTEK CO. LTD, Gangseo-gu Seoul 07796 (KR)
(72) Inventor: NOH, Yun Ho, Seoul 07796 (KR); KWON, Tae Hoon, Seoul 07796 (KR); SON, Byung Wook, Seoul 07796 (KR)
(74) Representative: DREISS Patentanwälte PartG mbB
(86) International application number: PCT/KR2023/009334
(87) International publication number: WO 2024/058379

(57) **Abstract**

A first embodiment of the present invention relates to a lens driving device comprising: a base; a housing being disposed on the base; a bobbin being disposed inside the housing; a first ball being disposed between the side surface of the housing and the base; a second ball being disposed between the upper side of the bobbin and the housing; a first elastic member being coupled to a portion of the upper side of the bobbin; a second elastic member being coupled to the lower side of the housing; and a wire connecting the first elastic member and the second elastic member.

## Description

### [Technical Field]

The present embodiment relates to a lens driving device, a camera device, and an optical apparatus.

### [Background Art]

A camera device is a device that photographs a picture or video of a subject and is installed in an optical apparatus such as a smartphone, a drone, a vehicle, and the like.

An auto focus function that automatically adjusts a focus according to a distance to a subject is applied to the camera device. In addition, hand shake correction function is applied to prevent a phenomenon in which focus is shaking due to a user's hand shake.

The auto focus function and hand shake correction function may be performed through electromagnetic interaction between a magnet and a coil.

However, in a conventional lens driving device, when disposing a magnet and a coil for performing an auto focus function, a magnet that does not require electrical connection is disposed in a moving part and a coil is disposed in a fixed part. In this case, there is a problem in that current consumption for performing the auto focus function increases because a magnet having a larger weight than a coil is disposed in the moving part.

In particular, in recent years, the lens diameter has increased according to the high-pixel image sensors, and accordingly, the weight of the lens is also increased, thereby increasing problems.

In addition, in the conventional lens driving device, the height of the camera device in an optical axis direction increases as a guide structure for OIS-x-axis driving and a guide structure for OIS-y-axis driving are disposed as separate layers.

Meanwhile, the auto focus function is performed as a lens moves in an optical axis direction against the image sensor, and the movement of the lens in the optical axis direction may be guided by a ball. At this time, an attractive force between the magnet and the yoke may be used to hold the ball between the fixed part and the moving part.

However, in this case, there is a problem in that a centering force exists in the optical axis direction.

Furthermore, there may be a possibility for the moving part to be tilted by the contact point of the ball.
(Patent Literature) KR 10-2015-0118005 A

### [Detailed Description of the Invention]

### [Technical Subject]

A first embodiment of the present invention is intended to provide a lens driving device in which current consumption for performing an autofocus function is reduced by disposing a coil that is lighter than a magnet in a moving part.

In addition, it is intended to provide a lens driving device having a minimized height in an optical axis direction by integrally forming a guide structure for OIS-x-axis driving and a guide structure for OIS-y-axis driving.

A second embodiment of the present invention is intended to provide a lens driving device that pressurizes the ball through an elastic member

In addition, a second embodiment of the present invention is intended to provide a lens driving device that pressurizes the ball through an elastic member so that there is no centering force being generated in an optical axis direction when the ball is pressurized through the yoke and the magnet.

In addition, a second embodiment of the present invention is intended to provide a lens driving device in which rotation and tilt of a moving part are prevented by disposing a ball guide structure in diagonally.

### [Technical Solution]

A lens driving device according to a first embodiment of the present invention may comprise" a base; a housing being disposed on the base; a bobbin being disposed inside the housing; a first ball being disposed between the side surface of the housing and the base; a second ball being disposed between the housing and an upper side of the bobbin; a first elastic member being coupled to a portion of the upper side of the bobbin; a second elastic member being coupled to a lower side of the housing; and a wire connecting the first elastic member and the second elastic member.

The base may comprise a first guide for guiding the first ball to move.

The side surface of the housing may comprise a second guide for guiding the first ball to move.

The first guide and the second guide may comprise grooves.

The housing may comprise a first housing comprising an upper plate having a metal member and a second housing being disposed on the first housing and having a protrusion guiding the second ball.

A lens driving device according to a first embodiment of the present invention comprises: a fixed part; a first moving part being disposed inside the fixed part; a second moving part being disposed inside the first moving part; a first driving part for moving the first moving part in an optical axis direction; and a second driving part for moving the second moving part in a direction perpendicular to the optical axis direction, wherein the first driving part comprises a first driving unit being disposed in the first moving part and a second driving unit being disposed in the fixed part, and wherein the second driving part may comprise a third driving unit being disposed in the second moving part and a fourth driving unit being disposed in the first moving part.

The fourth driving unit may comprise a coil.

The coil may move together with the first moving part.

The first driving unit may comprise a first magnet, and the second driving unit may comprise a first coil.

The second driving part may comprise a fifth driving unit being disposed in the second moving part and spaced apart from the third driving unit, and a sixth driving unit being disposed in the first moving part and spaced apart from the fourth driving unit.

When viewed from above, the first driving unit, the second driving unit, the fifth driving unit, and the sixth driving unit may be overlapped with one another in one direction.

The third driving unit and the fourth driving unit move the second moving part in a first direction perpendicular to the optical axis direction, and the fifth driving unit and the sixth driving unit may move the second moving part in a second direction perpendicular to the optical axis direction and the first direction.

It comprises: a first substrate being disposed in the fixed part; and a second substrate being disposed in the first moving part, wherein the coil is disposed in the second substrate, and wherein the first substrate may comprise an outer side portion being disposed in the fixed part and a connecting portion being extended from the outer side portion and coupled to the second substrate.

A lens driving device according to a first embodiment of the present invention may comprise: a fixed part; a first moving part being disposed inside the fixed part; a second moving part being disposed inside the first moving part; a first support member being disposed between the fixed part and the first moving part and guiding the first moving part to move in an optical axis direction; a second support member being disposed between the first moving part and the second moving part and guiding the second moving part to move in a direction perpendicular to the optical axis direction; and a third support member having one side coupled to the first moving part and the other side coupled to the second moving part.

The first moving part comprises a first elastic member, the second moving part may comprise a second elastic member, and the third support member may be coupled to the first elastic member and the second elastic member.

The third support member may comprise a wire.

It comprises: a first driving part that moves the first moving part; and a second driving part that moves the second moving part, wherein the first driving part comprises a first coil and a first magnet, wherein the second driving part comprises a second coil and a second magnet, and wherein the first coil and the second coil may be disposed in the first moving part.

The first magnet is disposed in the fixed part, and the second magnet may be disposed in the second moving part.

A camera device according to a first embodiment of the present invention may comprise: a printed circuit board; an image sensor being disposed on the printed circuit board; the lens driving device being disposed on the printed circuit board; and a lens being coupled to the lens driving device.

An optical apparatus according to a first embodiment of the present invention may comprise: a main body; the camera device being disposed on the main body; and a display disposed on the main body and outputting at least one of a video and an image captured by the camera device.

The lens driving device according to the second embodiment of the present invention may comprise: a fixed part; a moving part being disposed inside the fixed part; a coil and a magnet for moving the moving part in an optical axis direction; a ball being disposed between the fixed part and the moving part; a plate member being in contact with the ball; and an elastic member that pressurizes the plate member toward the ball.

The plate member is disposed between the ball and the fixed part, and the elastic member is disposed between the plate member and the fixed part to push the plate member against the fixed part.

The fixed part comprises a pillar part and an outer wall portion; and the ball may comprise a first ball being disposed between the moving part and the pillar part of the fixed part, and a second ball being disposed between the moving part and the outer wall portion of the fixed part.

The plate member is disposed between the first ball and the pillar part of the fixed part, and the elastic member may be disposed between the plate member and the pillar part of the fixed part.

The first ball comprises a plurality of first balls being disposed in an optical axis direction; the plurality of first balls comprise a first uppermost ball being disposed highest and a first lowermost ball being disposed lowest; and the height of a point at which the elastic member pressurizes the plate member may be disposed between the height of the first uppermost ball and the height of the first lowermost ball.

The second ball comprises a plurality of second balls disposed in the optical axis direction, and the plurality of second balls may comprise a second uppermost ball being disposed highest and a second lowermost ball being disposed lowest.

The height of a point where the elastic member pressurizes the plate member may be lower than the height of a ball being disposed lower among the first uppermost ball and the second uppermost ball.

The height of a point at which the elastic member pressurizes the plate member may be higher than the height of a ball being disposed higher among the first lowermost ball and the second lowermost ball.

The plurality of first balls may comprise a ball being disposed between the first uppermost ball and the first lowermost ball having a smaller diameter than the first uppermost ball.

The elastic member comprises: a first bent part; a second bent part; and a third bent part being disposed between the first bent part and the second bent part, wherein the first bent part and the second bent part of the elastic member are disposed in the fixed part, and wherein the third bent part of the elastic member may be disposed in the plate member.

The fixed part comprises a first corner region and a second corner region being disposed in a diagonal direction with respect to an optical axis, and the ball may be disposed in the first corner region and the second corner region of the fixed part.

The moving part comprises a first groove and a second groove at an opposite side of the first groove, wherein the fixed part comprises a first groove being formed in the pillar part and a second groove being formed to face the first groove in the outer wall portion, wherein the elastic member is disposed in the first groove of the fixed part, wherein the first ball is disposed in the first groove of the moving part, and wherein the second ball may be disposed between the second groove of the fixed part and the second groove of the moving part.

The plate member may be disposed between the elastic member and the first ball.

The lens driving device comprises an inner side portion being disposed on an opposite side of the first groove of the pillar part of the fixed part, and an outer side portion being disposed on an opposite side of the second groove of the outer wall portion of the fixed part. And, it may comprise a reinforcing member comprising a connecting portion connecting the inner side portion and the outer side portion.

The lens driving device may comprise a cover being coupled to the moving part and being overlapped with the first ball and the second ball in an optical axis direction.

The lens driving device comprises a first substrate being disposed in the moving part, the magnet may be disposed in the fixed part, and the coil may be disposed on the first substrate.

The lens driving device comprises: an outer side portion being disposed in the fixed part; a coupling portion being coupled to the first substrate; and a second substrate comprising a connecting portion connecting the outer side portion and the coupling portion, wherein at least a portion of the connecting portion of the second substrate may move together with the first substrate.

The lens driving device comprises a substrate being disposed in the fixed part, the magnet is disposed in the moving part, and the coil may be disposed on the substrate.

A camera device according to a second embodiment of the present invention may comprise: a printed circuit board; an image sensor being disposed in the printed circuit board; a lens driving device being disposed on the printed circuit board; and a lens being coupled to the lens driving device.

An optical apparatus according to a second embodiment of the present invention may comprise: a main body; a camera device being disposed in the main body; and a display being disposed in the main body and outputting any one or more of a video and an image photographed by the camera device.

### [Advantageous Effects]

Through the first embodiment of the present invention, current consumption for performing the auto focus function can be reduced as the coil, which is lighter in weight than the magnet, is disposed in the moving part.

In addition, since the guide structure for OIS-x-axis driving and the guide structure for OIS-y-axis driving are integrally formed, the height of the lens driving device in an optical axis direction can be minimized.

Through this, the height at which the camera device is protruded from the smartphone can be minimized.

Through the second embodiment of the present invention, it is possible to replace the ball pressurizing structure through the attraction force between the yoke and the magnet.

Through this, since the centering force in an optical axis direction being generated when the ball is pressurized through the yoke and magnet disappears, that is, since there is no force to return to the centering position, even it is minute, the consumption of current consumed in AF driving can be reduced and the accuracy of AF driving can be enhanced.

In addition, in a second embodiment of the present invention, since the ball guide structure is disposed diagonally, rotation and tilt of the moving part can be prevented.

In addition, in a second embodiment of the present invention, current consumption for performing the auto focus function can be reduced as the coil, which is lighter in weight than the magnet, is disposed in the moving part.

Furthermore, in a modified embodiment, a lens driving device having a simplified configuration and structure can be provided in comparison with the second embodiment of the present invention. Through this, manufacturing cost can be reduced.

### [Brief Description of Drawings]

FIG. 1 is a conceptual diagram of a lens driving device according to a first embodiment of the present invention.
FIG. 2 is a perspective view of a lens driving device according to a first embodiment of the present invention.
FIG. 3 is a cross-sectional view viewed from A-A in FIG. 2.
FIG. 4 is a cross-sectional view viewed from B-B in FIG. 2.
FIG. 5 is a cross-sectional view viewed from C-C in FIG. 2.
FIG. 6 is a cross-sectional view viewed from D-D in FIG. 2.
FIG. 7 is a cross-sectional view of a lens driving device according to a first embodiment of the present invention cut in a direction perpendicular to an optical axis and viewed from above.
FIG. 8 is an exploded perspective view of a lens driving device according to a first embodiment of the present invention.
FIG. 9 is an exploded perspective view of a lens driving device according to a first embodiment of the present invention viewed from a direction different from that of FIG. 8.
FIG. 10 is an exploded perspective view of a holder member and a pre-pressurizing member of an AF carrier according to a first embodiment of the present invention.
FIG. 11 is an exploded perspective view of a holder member and a pre-pressurizing member of the AF carrier viewed from a direction different from that of FIG. 10.
FIG. 12(a) and 12(b) are perspective views of an OIS moving part viewed from different directions.
FIG. 13 is a perspective view of a state in which a cover is omitted from a lens driving device according to a first embodiment of the present invention.
FIG. 14 is a perspective view of a state in which a cover of a lens driving device viewed from a direction different from that of FIG. 13 is omitted.
FIG. 15 is a perspective view illustrating a fixed part and related components of a lens driving device according to a first embodiment of the present invention.
FIG. 16 is a perspective view illustrating a moving part and related components of a lens driving device according to a first embodiment of the present invention.
FIG. 17 is a bottom perspective view of a moving part and related components of a lens driving device viewed from a direction different from that of FIG. 16.
FIG. 18 is a perspective view illustrating an AF moving part and related components of a lens driving device according to a first embodiment of the present invention.
FIG. 19 is a perspective view illustrating an AF moving part and related components of a lens driving device viewed from a direction different from that of FIG. 18.
FIG. 20 is a bottom view illustrating an AF moving part and related components of a lens driving device according to a first embodiment of the present invention.
FIG. 21 is a perspective view illustrating an OIS moving part and related components of a lens driving device according to a first embodiment of the present invention.
FIG. 22 is a plan view illustrating an OIS moving part and related components of a lens driving device according to a first embodiment of the present invention.
FIG. 23 is a perspective view illustrating a substrate and a coil of a lens driving device according to a first embodiment of the present invention.
FIG. 24 is a perspective view illustrating a substrate and a coil of a lens driving device viewed from a direction different from that of FIG. 23.
FIG. 25 is a perspective view illustrating a coil and a magnet of a lens driving device according to a first embodiment of the present invention.
FIG. 26 is a side view illustrating a coil and a substrate of a lens driving device according to a first embodiment of the present invention.
FIG. 27 is a side view illustrating an OIS moving part pressurized through a pre-pressurizing member of a lens driving device according to a first embodiment of the present invention.
FIG. 28 is a perspective view illustrating an upper elastic member, a lower elastic member, and a wire of the lens driving device according to the first embodiment of the present invention.
FIGS. 29 to 31 are views for explaining autofocus driving of a lens driving device according to a first embodiment of the present invention. FIG. 29 is a cross-sectional view of a moving part in an initial state in which no current is applied to an AF coil. FIG. 30 is a cross-sectional view illustrating a state in which a moving part moves upward in an optical axis direction when a forward current is applied to an AF coil. FIG. 31 is a cross-sectional view illustrating a moving part moving downward in an optical axis direction when a reverse current is applied to an AF coil.

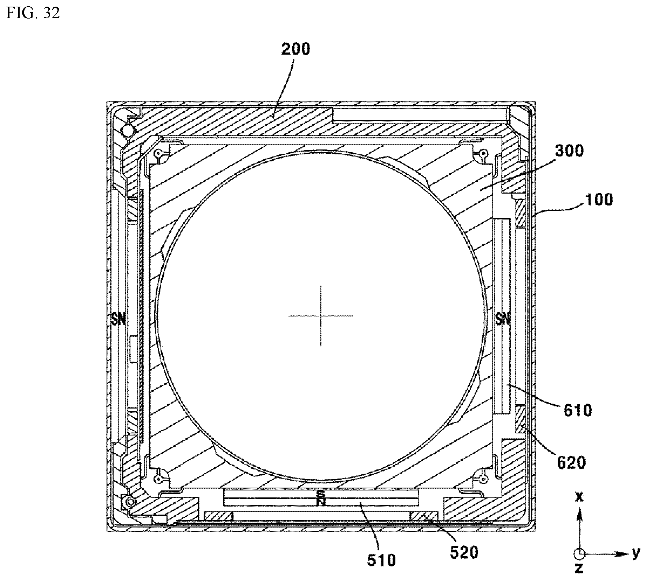

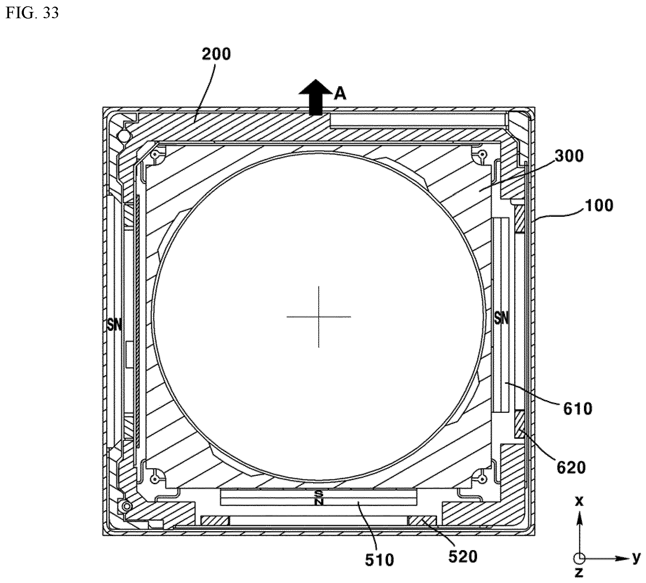

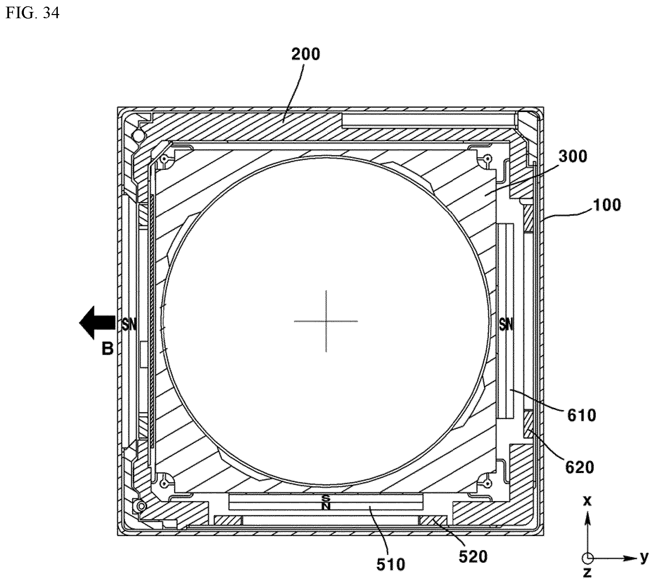

FIGS. 32 to 34 are views for explaining hand shake compensation driving of a lens driving device according to a first embodiment of the present invention. FIG. 32 is a cross-sectional view illustrating the appearance of an OIS moving part in an initial state in which no current is applied to an OIS-x coil and an OIS-y coil. FIG. 33 is a cross-sectional view illustrating a state in which an OIS moving part moves in an x-axis direction perpendicular to an optical axis as current is applied to an OIS-x coil. FIG. 34 is a cross-sectional view illustrating a state in which a current is applied to an OIS-y coil so that an OIS moving part moves in a y-axis direction perpendicular to both the optical axis and the x-axis.
FIG. 35 is an exploded perspective view of a camera device according to a first embodiment of the present invention.
FIG. 36 is a perspective view of an optical apparatus according to a first embodiment of the present invention.
FIG. 37 is a perspective view of an optical apparatus according to a modified embodiment.
FIG. 38 is a perspective view of a lens driving device according to a second embodiment of the present invention.
FIG. 39 is a sectional view seen from A-A in FIG. 38.
FIG. 40 is a sectional view seen from B-B in FIG. 38.
FIG. 41 is a sectional view seen from C-C in FIG. 38.
FIG. 42 is a cross-sectional view seen from D-D in FIG. 38.
FIG. 43 is an exploded perspective view of a lens driving device according to a second embodiment of the present invention.
FIG. 44 is an exploded perspective view of FIG. 43 viewed from another direction.
FIG. 45 is a perspective view of a state in which a cover is omitted from a lens driving device according to a second embodiment of the present invention.
FIG. 46 is a perspective view of FIG. 45 viewed from another direction.
FIG. 47 is a perspective view illustrating a fixed part and related components of a lens driving device according to a second embodiment of the present invention.
FIG. 48 is a perspective view of FIG. 47 viewed from another direction.
FIG. 49 is a perspective view illustrating a moving part and related components of a lens driving device according to a second embodiment of the present invention.
FIG. 50 is a perspective view of FIG. 49 viewed from another direction.
FIG. 51 is a cross-sectional perspective view illustrating a driving part and related components of a lens driving device according to a second embodiment of the present invention.
FIG. 52 is a plan view of a state in which a cover is omitted from a lens driving device according to a second embodiment of the present invention.
FIG. 53 is an enlarged plan view of a part of FIG. 52 in a state where the cover is omitted.
FIG. 54 is a cross-sectional perspective view illustrating a ball and related components of a lens driving device according to a second embodiment of the present invention.
FIG. 55 is a perspective view illustrating a ball and related components of a lens driving device according to a second embodiment of the present invention.
FIG. 56 is a perspective view illustrating a ball accommodating structure of a base of a lens driving device according to a second embodiment of the present invention.
FIG. 57 is a perspective view illustrating a state in which the ball, plate member, elastic member, and reinforcing member are disposed in FIG. 56.
FIG. 58 is a perspective view of FIG. 57 viewed from another direction;
FIG. 59 is a perspective view illustrating a moving part and a ball of a lens driving device according to a second embodiment of the present invention.
FIG. 60 is a perspective view of FIG. 59 viewed from another direction;
FIG. 61(a) is a view comparing the heights of the ball and the pressurizing point in a state in which the moving part moves upward, and FIG. 61(b) is a diagram comparing the heights of the ball and the pressurizing point in a state in which the moving part moves downward.
FIG. 62 is a perspective view of a lens driving device according to a modified embodiment.
FIG. 63 is a sectional view seen from A-A in FIG. 62;
FIG. 64 is a sectional view seen from B-B in FIG. 62;
FIG. 65 is an exploded perspective view of a lens driving device according to a modified embodiment.
FIG. 66 is an exploded perspective view of FIG. 65 viewed from another direction;
FIG. 67 is a plan view and a partially enlarged view of a state in which a cover is omitted from a lens driving device according to a modified embodiment.
FIGS. 68 to 70 are views for explaining autofocus driving of a lens driving device according to a second embodiment of the present invention. FIG. 68 is a cross-sectional view of a moving part in an initial state in which no current is applied to the AF coil. FIG. 69 is a cross-sectional view illustrating a state in which a moving part moves upward in an optical axis direction when a forward current is applied to an AF coil. FIG. 70 is a cross-sectional view illustrating a moving part moving downward in an optical axis direction when a reverse current is applied to the AF coil.

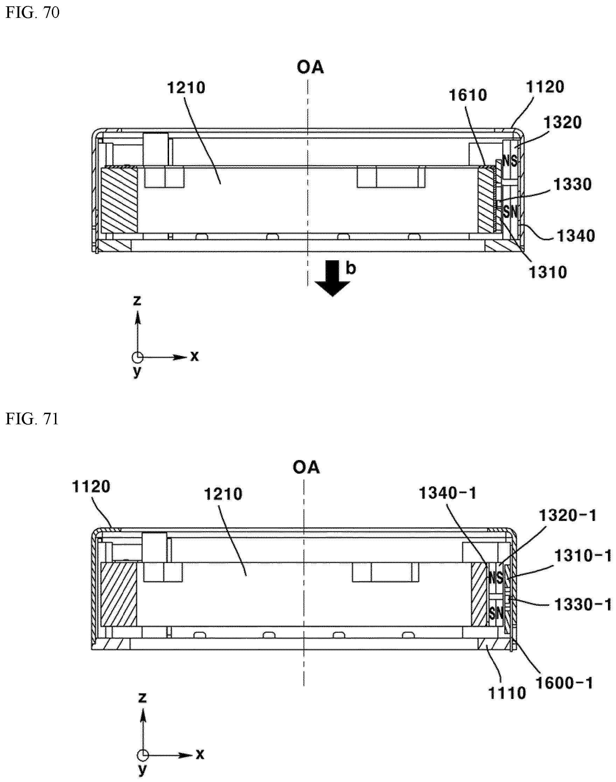

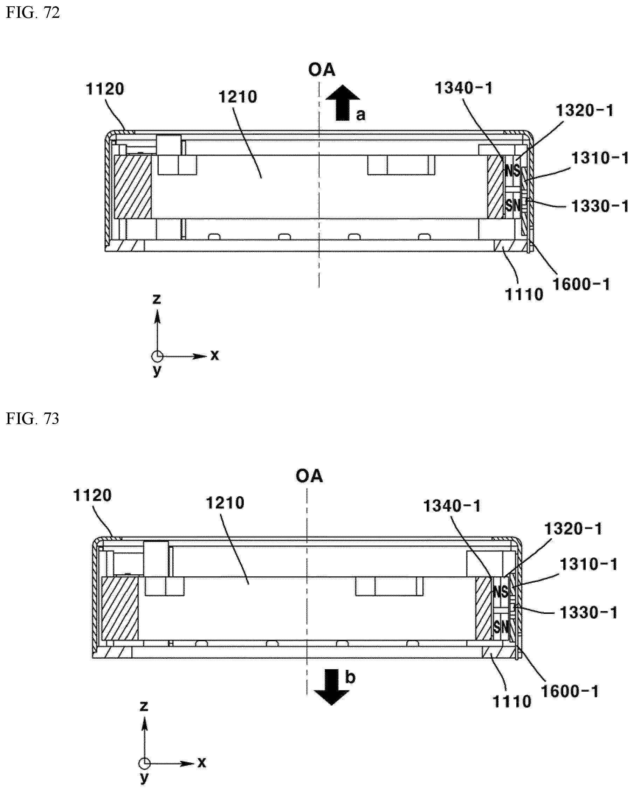

FIGS. 71 to 73 are diagrams for explaining autofocus driving of a lens driving device according to a second embodiment of the present invention. FIG. 71 is a cross-sectional view illustrating the state of the moving part in an initial state in which no current is applied to the AF coil. FIG. 72 is a cross-sectional view illustrating a state in which a moving part moves upward in an optical axis direction when a forward current is applied to an AF coil. FIG. 73 is a cross-sectional view illustrating a moving part being moved downward in an optical axis direction when a reverse current is applied to the AF coil.
FIG. 74 is an exploded perspective view of a camera device according to a second embodiment of the present invention.
FIG. 75 is a perspective view of an optical apparatus according to a second embodiment of the present invention.
FIG. 76 is a perspective view of an optical apparatus according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction with respect to one component may be comprised.

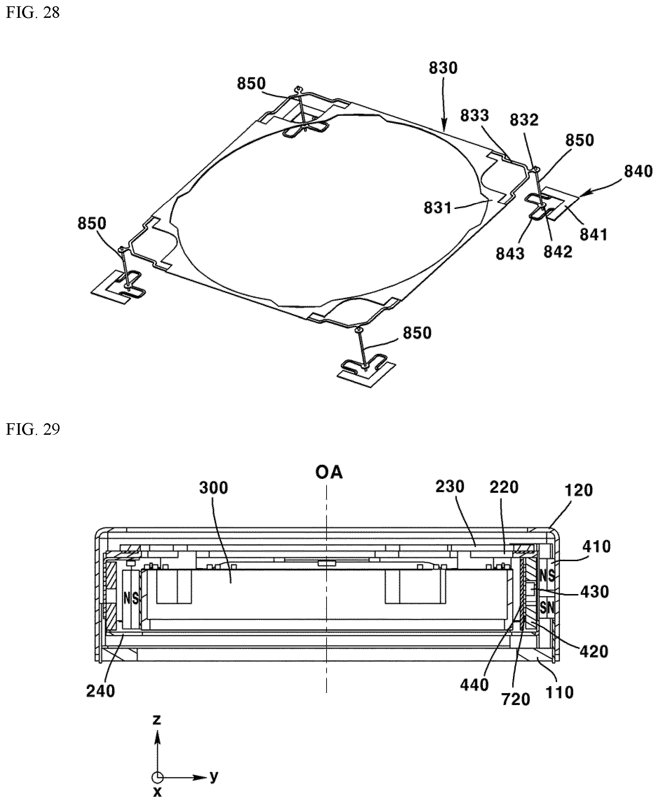

An 'optical axis (see **OA** of FIG. 29) direction' used below is defined as an optical axis direction of a lens and/or an image sensor being coupled to a lens driving device.

The 'vertical direction' used below may be a direction parallel to or the same direction as an optical axis direction. A vertical direction may correspond to a 'z-axis direction'. A 'horizontal direction' used below may be a direction perpendicular to a vertical direction. That is, a horizontal direction may be a direction perpendicular to an optical axis. Accordingly, a horizontal direction may comprise an 'x-axis direction' and a 'y-axis direction'.

The 'auto focus (AF) function' used below is defined as a function that adjusts the distance to an image sensor by moving a lens in an optical axis direction according to the distance of a subject so that a clear image of the subject can be obtained on the image sensor, thereby automatically focusing on the subject. In addition, 'closed-loop auto focus (CLAF) control' is defined as real-time feedback control of the position of a lens by detecting the distance between an image sensor and a lens to enhance the accuracy of focus control.

An 'optical image stabilization (OIS) function' used below is defined as a function that moves or tilts a lens in a direction perpendicular to an optical axis to offset the hand shake in order to prevent an image or a video from shaking due to a user's hand shake. In addition, 'closed-loop auto focus (CLAF) control' is defined as a real-time feedback control of lens position by detecting the position of the lens relative to an image sensor to enhance the accuracy of image stabilization.

Hereinafter, any one of the "AF moving part **200"** and the "OIS moving part **300"** may be referred to as a "first moving part" and the other may be referred to as a "second moving part".

Hereinafter, any one of the "AF driving part" and the "OIS driving part" may be referred to as a "first driving part" and the other may be referred to as a "second driving part".

Hereinafter, any one of the "AF driving part", the "OIS-x driving part" and the "OIS-y driving part" is referred to as a "first driving part", the other may be referred to as a "second driving part", and the other may be referred to as a "third driving part".

Hereinafter, one of the "AF magnet", the "OIS-x magnet" and the "OIS-y magnet" is referred to as a "first magnet", the other is referred to as a "second magnet", and the other may be referred to as a "third magnet".

Hereinafter, one of the "AF coil **420",** the "OIS-x coil **520"** and the "OIS-y coil **620"** is referred to as a "first coil", the other is referred to as a "second coil", and the other may be referred to as a "third coil".

Hereinafter, one among the "AF magnet **410",** the "OIS-x magnet **510",** the "OIS-y magnet **610",** the "AF coil **420",** the "OIS-x coil **520"** and the "OIS-y coil **620"** is referred to as "first driving unit", the other is referred to as a "second driving unit", the other is referred to as a "third driving unit", the other is referred to as a "fourth driving unit", the other is referred to as a "fifth driving unit", and the other may be referred to as a "sixth driving unit".

Hereinafter, any one of the "outer substrate **710"** and the "inner substrate **720"** may be referred to as a "first substrate" and the other may be referred to as a "second substrate".

Hereinafter, any one of the "AF guide ball **810"** and the "OIS guide ball **820"** may be referred to as a "first ball" and the other may be referred to as a "second ball".

Hereinafter, any one of the "holder member **220"** and the "pre-pressurizing member **230"** is referred to as a "first member" and the other may be referred to as a "second member". In addition, hereinafter, any one of the "holder member **220"** and the "pre-pressurizing member **230"** may be referred to as a "first housing" and the other may be referred to as a "second housing".

Hereinafter, any one of the "upper elastic member **830"** and the "lower elastic member **840"** is referred to as a "first elastic member" and the other may be referred to as a "second elastic member".

Hereinafter, one among the "upper elastic member **830",** the "lower elastic member **840",** and the "wire **850"** is referred to as a "first support member", the other is referred to as a "second support member", and the other may be referred to as a "third support member".

Hereinafter, one among the "AF sensor **430",** the "OIS-x sensor **530",** and the "OIS-y sensor **630"** is referred to as a "first sensor", the other is referred to as a "second sensor", and the other may be referred to as a "third sensor".

Hereinafter, one among the "AF yoke **440",** the "OIS-x yoke **540",** and the "OIS-y yoke **640"** is referred to as a "first yoke", the other is referred to as a "second yoke", and the other may be referred to as a "third yoke".

Hereinafter, one of the "inner groove **1111-1"** and the "outer groove **1112-1"** is referred to as a "first groove", and the other may be referred to as a "second groove".

Hereinafter, one of the "inner groove **1211"** and the "outer groove **1212"** is referred to as a "first groove", and the other may be referred to as a "second groove".

Hereinafter, one of the "inner ball **1410"** and the "outer ball **1420"** is referred to as a "first ball", and the other may be referred to as a "second ball".

Hereinafter, one of the "uppermost inner ball **1411"** and the "uppermost outer ball **1421"** is referred to as a "first uppermost ball", and the other may be referred to as a "second uppermost ball".

Hereinafter, one of the "lowermost inner ball **1412"** and the "lowermost outer ball **1422"** is referred to as a "first lowermost ball", and the other may be referred to as a "second lowermost ball".

Hereinafter, one among the "upper bent part **1521",** the "lower bent part **1522",** and the "connection bent part **1523"** is referred to as a "first bent part", the other is referred to as a "second bent part", and the other may be referred to as a "third bent part".

Hereinafter, any one of the "inner substrate **1610"** and the "outer substrate **1620"** may be referred to as a "first substrate" and the other may be referred to as a "second substrate".

Hereinafter, a configuration of a lens driving device according to a first embodiment of the present invention will be described with reference to the drawings.

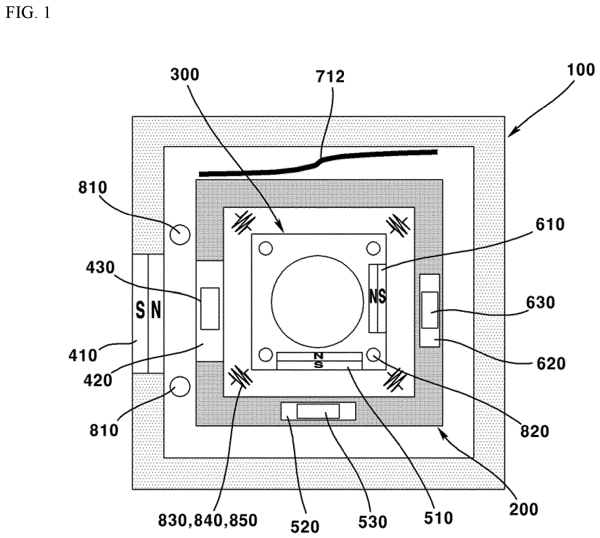

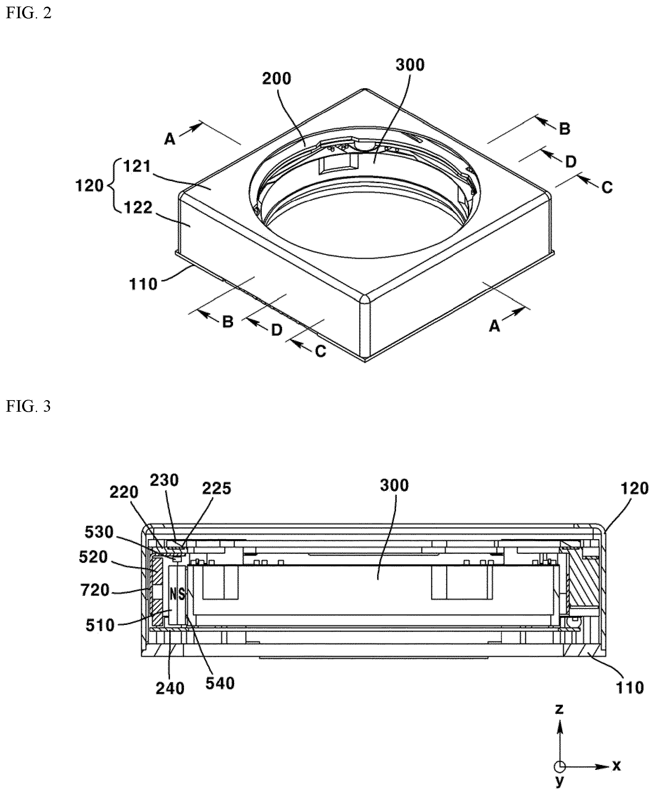

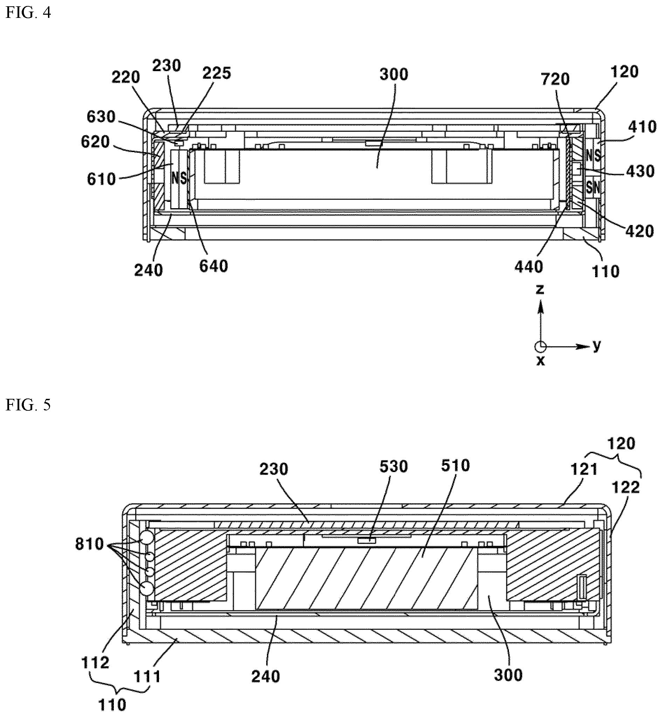

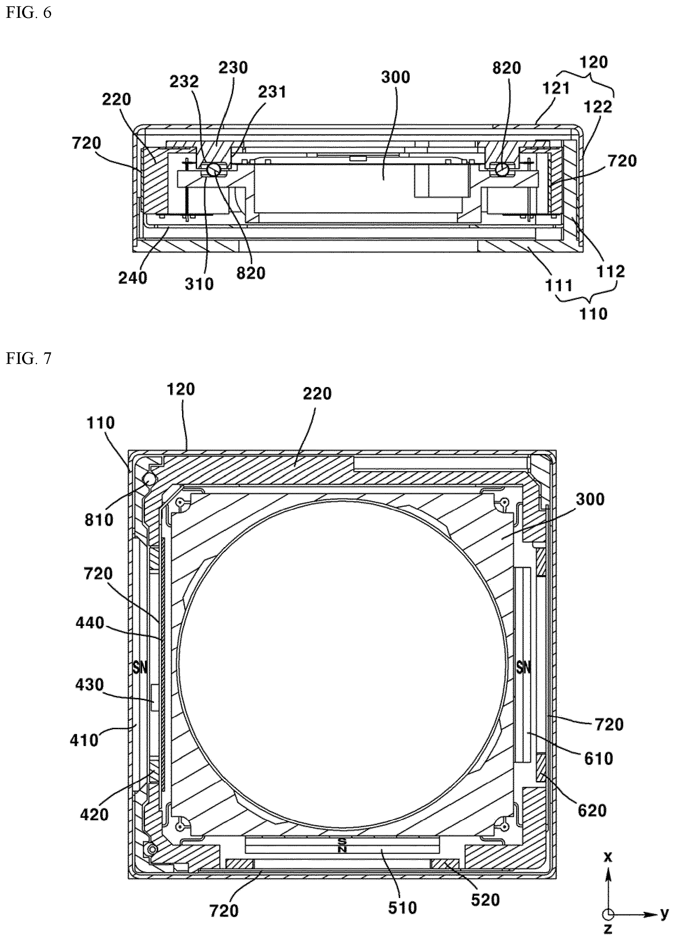

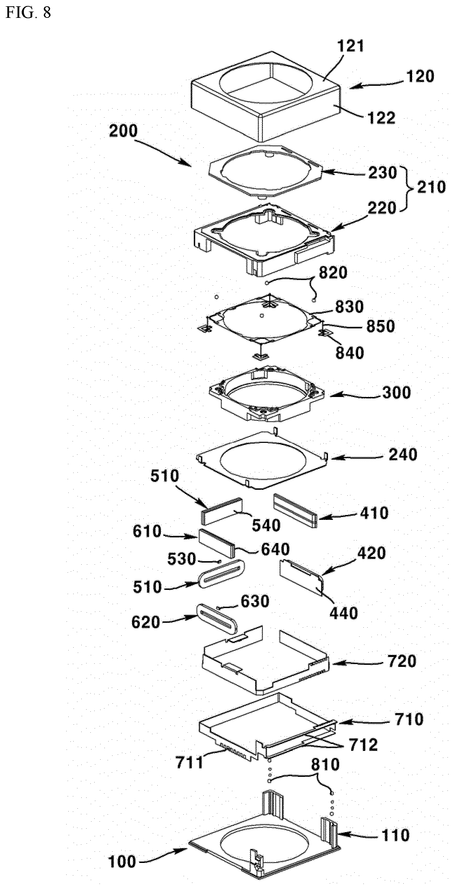

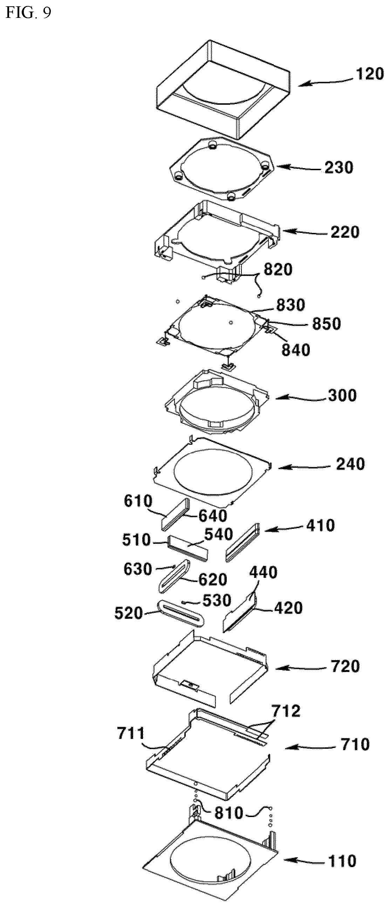

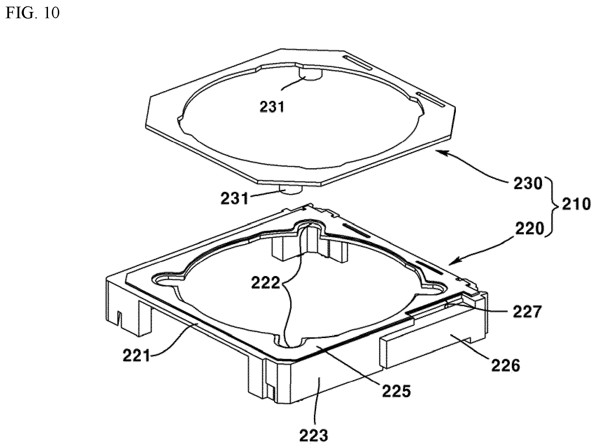

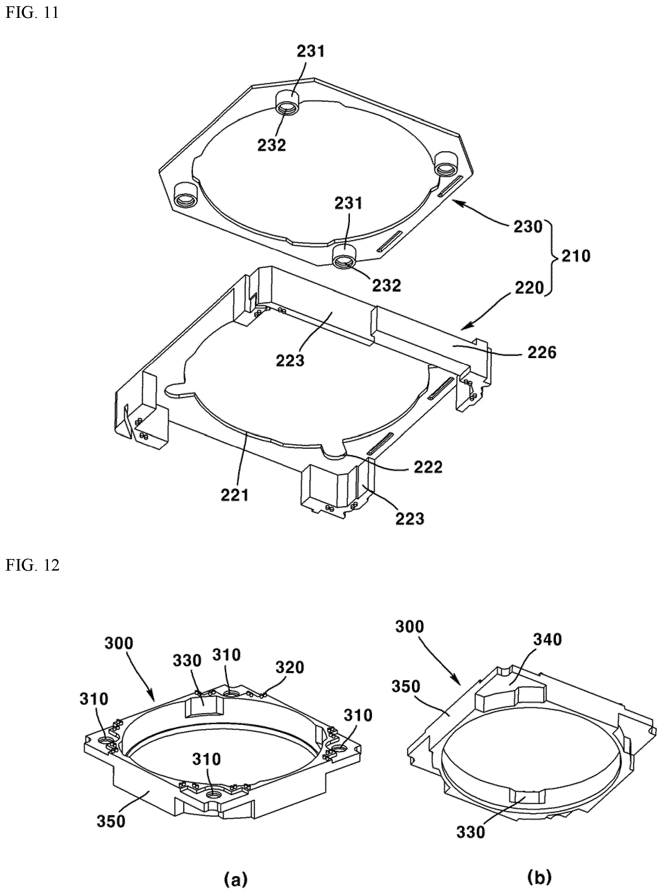

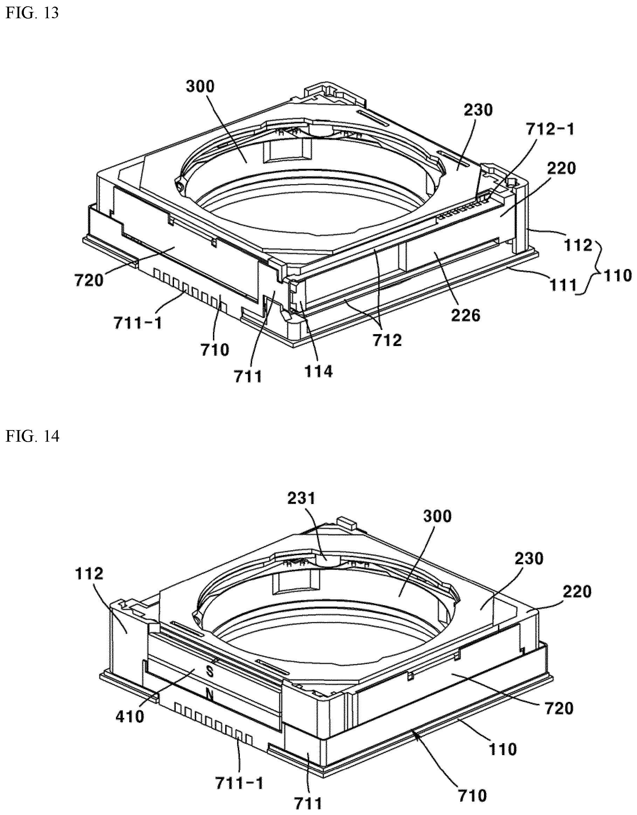

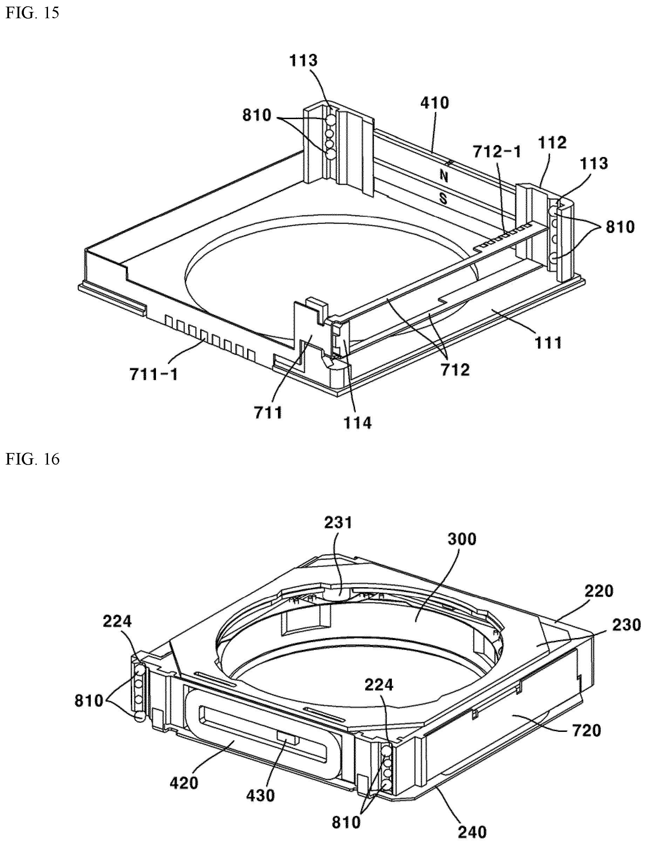

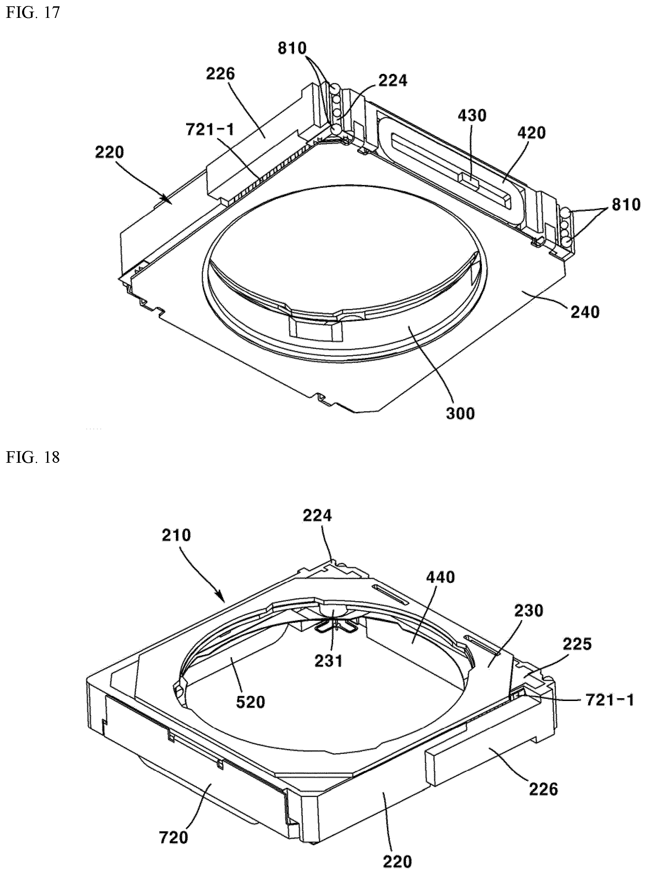

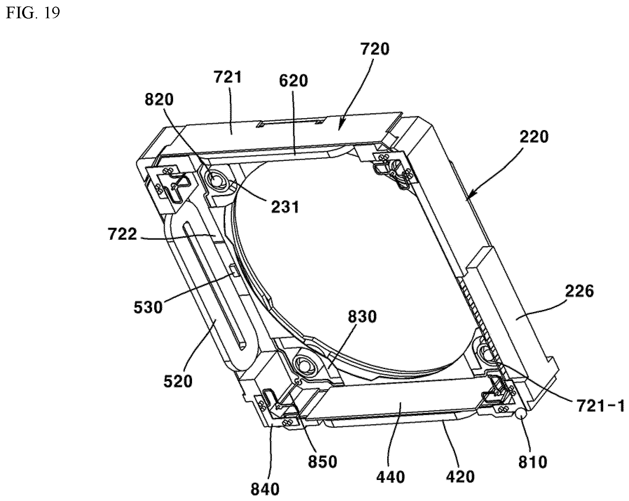

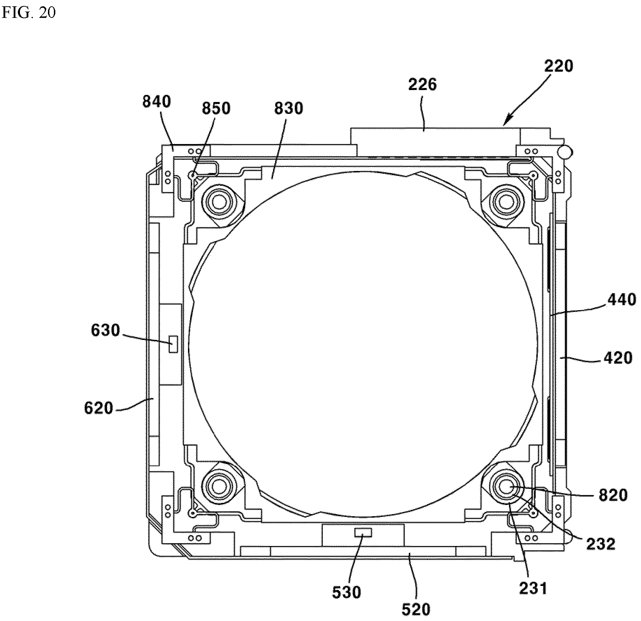

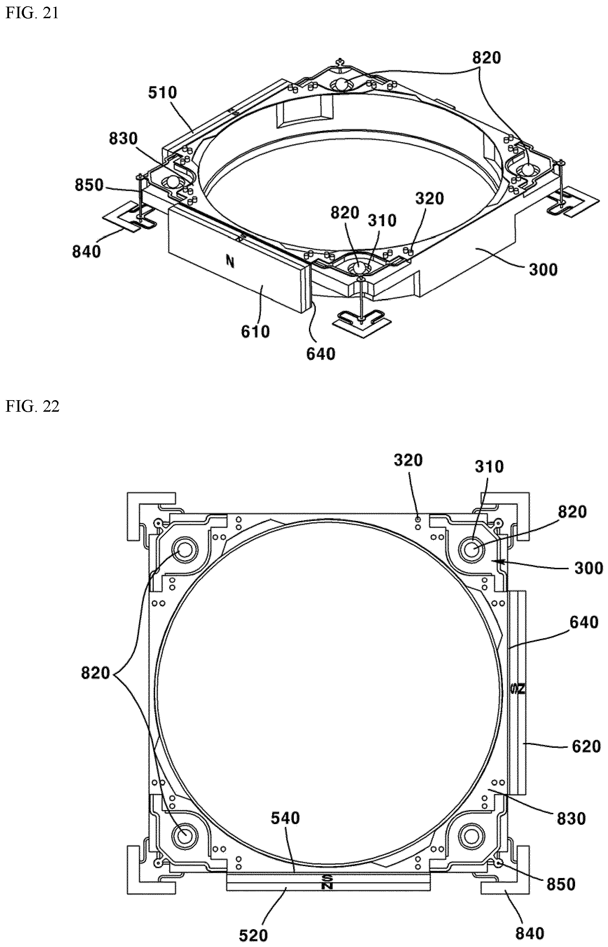

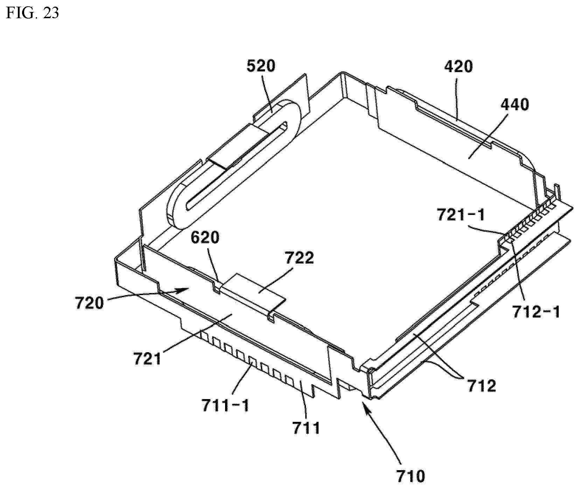

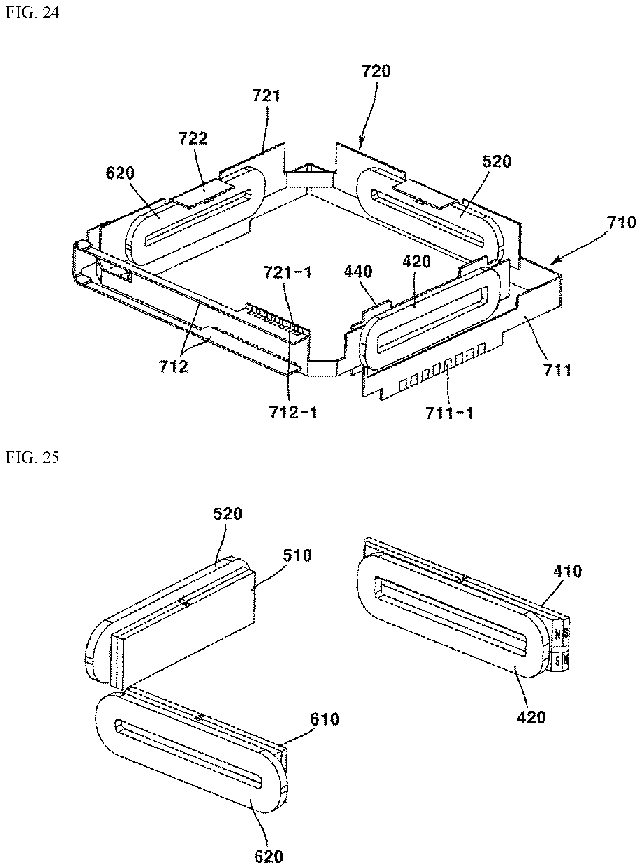

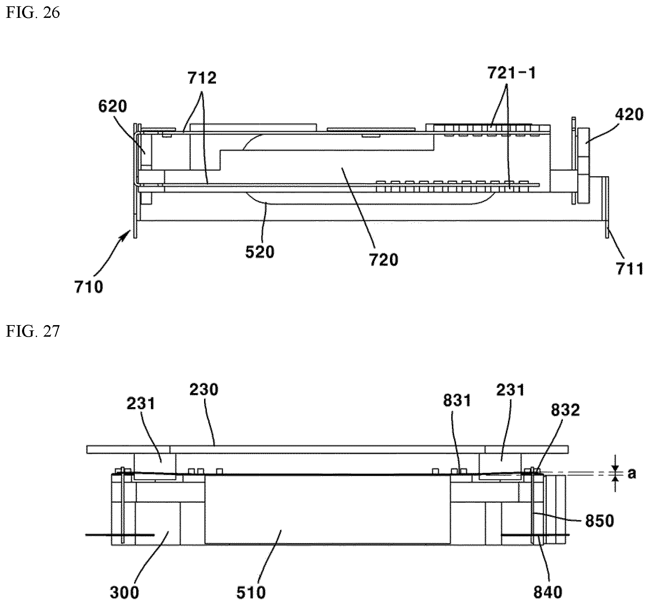

FIG. 1 is a conceptual diagram of a lens driving device according to a first embodiment of the present invention; FIG. 2 is a perspective view of a lens driving device according to a first embodiment of the present invention; FIG. 3 is a cross-sectional view viewed from A-A in FIG. 2; FIG. 4 is a cross-sectional view viewed from B-B in FIG. 2; FIG. 5 is a cross-sectional view viewed from C-C in FIG. 2; FIG. 6 is a cross-sectional view viewed from D-D in FIG. 2; FIG. 7 is a cross-sectional view of a lens driving device according to a first embodiment of the present invention cut in a direction perpendicular to an optical axis and viewed from above; FIG. 8 is an exploded perspective view of a lens driving device according to a first embodiment of the present invention; FIG. 9 is an exploded perspective view of a lens driving device according to a first embodiment of the present invention viewed from a direction different from that of FIG. 8; FIG. 10 is an exploded perspective view of a holder member and a pre-pressurizing member of an AF carrier according to a first embodiment of the present invention; FIG. 11 is an exploded perspective view of a holder member and a pre-pressurizing member of the AF carrier viewed from a direction different from that of FIG. 10; FIG. 12(a) and 12(b) are perspective views of an OIS moving part viewed from different directions; FIG. 13 is a perspective view of a state in which a cover is omitted from a lens driving device according to a first embodiment of the present invention; FIG. 14 is a perspective view of a state in which a cover of a lens driving device viewed from a direction different from that of FIG. 13 is omitted; FIG. 15 is a perspective view illustrating a fixed part and related components of a lens driving device according to a first embodiment of the present invention; FIG. 16 is a perspective view illustrating a moving part and related components of a lens driving device according to a first embodiment of the present invention; FIG. 17 is a bottom perspective view of a moving part and related components of a lens driving device viewed from a direction different from that of FIG. 16; FIG. 18 is a perspective view illustrating an AF moving part and related components of a lens driving device according to a first embodiment of the present invention; FIG. 19 is a perspective view illustrating an AF moving part and related components of a lens driving device viewed from a direction different from that of FIG. 18; FIG. 20 is a bottom view illustrating an AF moving part and related components of a lens driving device according to a first embodiment of the present invention; FIG. 21 is a perspective view illustrating an OIS moving part and related components of a lens driving device according to a first embodiment of the present invention; FIG. 22 is a plan view illustrating an OIS moving part and related components of a lens driving device according to a first embodiment of the present invention; FIG. 23 is a perspective view illustrating a substrate and a coil of a lens driving device according to a first embodiment of the present invention; FIG. 24 is a perspective view illustrating a substrate and a coil of a lens driving device viewed from a direction different from that of FIG. 23; FIG. 25 is a perspective view illustrating a coil and a magnet of a lens driving device according to a first embodiment of the present invention; FIG. 26 is a side view illustrating a coil and a substrate of a lens driving device according to a first embodiment of the present invention; FIG. 27 is a side view illustrating an OIS moving part pressurized through a pre-pressurizing member of a lens driving device according to a first embodiment of the present invention; and FIG. 28 is a perspective view illustrating an upper elastic member, a lower elastic member, and a wire of the lens driving device according to the first embodiment of the present invention.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed part **100.** The fixed part **100** may be a relatively fixed part when the moving part moves. The moving part may move against the fixed part **100.**

The lens driving device **10** may comprise a base **110.** The fixed part **100** may comprise a base **110.** The base **110** may be disposed below the AF carrier **210.** The base **110** may be disposed below the OIS carrier **300.** The base **110** may be coupled with cover **120.** The AF carrier **210** and the OIS carrier **300** may be disposed on the base **110.** The AF carrier **210** and the OIS carrier **300** may be disposed on a lower plate portion **111** of the base **110.** The AF carrier **210** and the OIS carrier **300** may be disposed inside the base **110.** The AF carrier **210** and the OIS carrier **300** may be disposed inside the side wall part **112** of the base **112.**

The base **110** may comprise a lower plate portion **111.** The base **110** may comprise a side wall part **112.** The side wall part **112** may be a 'side part'. The side wall part **112** may be a 'side plate'. The side wall part **112** may be a 'side wall'. The side wall part **112** of the base **110** may be extended from an upper surface of the lower plate part **111.**

The side wall part **112** of the base **110** may comprise a plurality of side walls. The side wall part **112** of the base **110** may comprise four side walls. The side wall part **112** of the base **110** may comprise first to fourth side walls. The side wall part **112** of the base **110** may comprise a first side wall and a second side wall being disposed opposite to each other, and a third side wall and a fourth side wall being disposed opposite to each other. At this time, the AF magnet **410** may be disposed on the first side plate of the base **110.** The OIS-x magnet **510** may be disposed at a position corresponding to the third side plate of the base **110.** The OIS-y magnet **610** may be disposed at a position corresponding to the second side plate of the base **110.**

The base **110** may comprise a groove **113.** The groove **113** may be an 'AF guide ball accommodating groove'. An AF guide ball **810** may be disposed in the groove **113.** The groove **113** may be directly in contact with the AF guide ball **810.** The groove **113** may be disposed in an optical axis direction. The groove **113** may comprise a plurality of grooves. The groove **113** may comprise two grooves. The two grooves may be disposed parallel to each other. The groove **113** may comprise a first groove being in contact with the AF guide ball **810** at two points and a second groove being in contact with the AF guide ball **810** at one point. As a modified embodiment, both the first groove and the second groove may be in contact with the AF guide ball **810** at two points. The base **110** may comprise a first guide for guiding the AF guide ball **810** to move. The first guide may comprise a groove **113.**

The base **110** may comprise a protruded part **114.** The protruded part **114** may be protruded to the outer side. The connecting portion **712** of the outer substrate **710** may be disposed on an upper side and a lower side of the protruded part **114.** A groove may be formed in the protruded part **114** so as not to interfere even when the connecting portion **712** of the outer substrate **710** moves.

The base **110** may comprise a step. The step may be formed at a lower end portion of an outer side surface of the base **110.** The step may be protruded from an outer side surface of the base **110.** The side plate **122** of the cover **120** may be disposed in the step of the base **110.**

The lens driving device **10** may comprise a cover **120.** The fixed part **100** may comprise a cover **120.** The cover **120** may be disposed on the base **110.** The cover **120** may be disposed on the base **110.** The cover **120** may be coupled to the base **110.** The cover **120** may be fixed to the base **110.** The cover **120** may accommodate the AF carrier **210** therein. The cover **120** may accommodate the OIS carrier **300** therein. The cover **120** may be a shield member. The cover **120** may be a shield can.

The cover **120** may comprise an upper plate **121.** The upper plate **121** may be disposed on a moving part. The upward movement of the moving part may be limited by contacting of the moving part with the upper plate **121.** The upper plate **121** may comprise a hole through which light passes.

The cover **120** may comprise a side plate **122.** The side plate **122** may be extended from the upper plate **121.** The side plate **122** may be disposed on the base **110.** The side plate **122** may be disposed on a step portion being protruded from a lower end portion of an outer side surface of the base **110.** The side plate **122** may comprise a plurality of side plates. The side plate **122** may comprise four side plates. The side plate **122** may comprise a first side plate and a second side plate being disposed opposite to each other, and a third side plate and a fourth side plate being disposed opposite to each other.

The lens driving device **10** may comprise a moving part. The moving part may be disposed in the fixed part **100.** The moving part may be disposed inside the fixed part **100.** The moving part may be disposed on the fixed part **100.** The moving part may be movably disposed in the fixed part **100.** The moving part may move based on the fixed part **100** by the driving part. The moving part can move during AF driving. The moving part can move during OIS driving. A lens may be coupled to the moving part.

The lens driving device **10** may comprise an AF moving part **200.** The AF moving part **200** may be disposed in the fixed part **100.** The AF moving part **200** may be disposed inside the fixed part **100.** The AF moving part **200** may be disposed on the fixed part **100.** The AF moving part **200** may be disposed between the fixed part **100** and the OIS moving part **300.** The AF moving part **200** may be movably disposed in the fixed part **100.** The AF moving part **200** may move in an optical axis direction against the fixed part **100** by the AF driving part **400.** The AF moving part **200** may move during AF driving.

The lens driving device **10** may comprise an AF carrier **210.** The AF moving part **200** may comprise an AF carrier **210.** The AF carrier **210** may be an 'AF holder'. The AF carrier **210** may be a 'housing'. The AF carrier **210** may be disposed inside the base **110.** AF carrier **210** may be disposed on the base **110.** The AF carrier **210** may be disposed inside the cover **120.** The AF carrier **210** may be disposed between the base **110** and the OIS carrier **300.** The AF carrier **210** may be movably disposed in an optical axis direction.

The AF carrier **210** may comprise a frame, a first upper plate, and a second upper plate. At this time, the frame may be a body part. The frame may be the holder member **220.** The first upper plate may be a metal member **225.** The second upper plate may be a pre-pressurizing member **230.** The AF carrier **210** may be a housing. The housing may comprise a first housing and a second housing. At this time, the first housing may comprise the holder member **220** and the second housing may comprise the pre-pressurizing member **230.** The OIS carrier **300** may be a bobbin. The OIS guide ball **820** may be disposed between the housing and the bobbin. The AF guide ball **810** may be disposed between a side surface of the housing and the cover **120.** The AF guide ball **810** may be disposed between a side surface of the housing and a base or pillar of the base.

The lens driving device **10** may comprise a holder member **220.** The AF carrier **210** may comprise a holder member **220.** The holder member **220** may be formed separately from the pre-pressurizing member **230.** A lower elastic member **840** may be coupled to the holder member **220.**

The AF carrier **210** may comprise an upper plate **221.** The upper plate **221** may be disposed on the OIS carrier **300.** The upper plate **221** may be disposed between the OIS carrier 300 and the upper plate **121** of the cover **120.** The upper plate **221** may be disposed on the OIS moving part.

The AF carrier **210** may comprise a groove **222.** The holder member **220** may comprise a groove **222.** The upper plate **221** of the holder member **220** may comprise a groove **222.** The groove **222** may be formed in the upper plate **221** of the holder member **220.** The groove **222** may open inwardly. A pre-pressurizing member **230** may be inserted into the groove **222.** A protruded part **231** of the pre-pressurizing member **230** may be inserted into the groove **222.** The groove **222** may be formed as a hole. The groove **222** may be replaced with a hole. That is, as a modified embodiment, the AF carrier **210** may comprise a hole into which the protruded part **231** of the pre-pressurizing member **230** is inserted.

The AF carrier **210** may comprise a side wall **223.** The sidewall **223** may be extended downward from an upper plate **221.** An inner substrate **720** may be disposed on a side wall **223.** An AF coil **420** may be disposed on the side wall **223.** An OIS-x coil **520** may be disposed on a side wall **223.** An OIS-y coil **620** may be disposed on a side wall **223.** The side wall **223** may comprise a groove that avoids the coil. The side wall **223** may comprise a plurality of side walls. The side wall **223** may comprise four side walls. The side wall **223** may comprise a first sidewall and a second sidewall being disposed opposite to each other, and a third sidewall and a fourth sidewall being disposed opposite to each other.

The AF carrier **210** may comprise a groove **224.** The holder member **220** may comprise a groove **224.** The groove **224** may be an 'AF guide ball accommodating groove'. An AF guide ball **810** may be disposed in the groove **224.** The groove **224** may be directly in contact with the AF guide ball **810.** The groove **224** may be disposed in an optical axis direction. The groove **224** may comprise a plurality of grooves. The grooves **224** may comprise two grooves. The two grooves may be disposed parallel to each other. The groove **224** may comprise a first groove being in contact with the AF guide ball **810** at two points and a second groove being in contact with the AF guide ball **810** at one point. As a modified embodiment, both the first groove and the second groove may be in contact with the AF guide ball **810** at two points. The side surface of the AF carrier **210** may comprise a second guide for guiding the AF guide ball **810** to move. The second guide may comprise a groove **224.**

The AF carrier **210** may comprise a metal member **225.** The holder member **220** may comprise a metal member **225.** The metal member **225** may be insert-injected into the holder member **220.** At least a portion of the metal member **225** may be disposed on an upper surface of the holder member **220.** The metal member **225** may be disposed to reinforce the strength of the holder member **220.**

The AF carrier **210** may comprise a protruded part **226.** The holder member **220** may comprise a protruded part **226.** The protruded part **226** may be formed on an outer side surface of the AF carrier **210.** The protruded part **226** may be protruded outward from the AF carrier **210.** A connecting portion **712** may be disposed on an upper surface and a lower surface of the protruded part **226.**

The AF carrier **210** may comprise a hole **227.** The hole **227** may be disposed adjacent to an upper surface of the protruded part **226.**

The lens driving device **10** may comprise a pre-pressurizing member **230.** The AF carrier **210** may comprise a pre-pressurizing member **230.** The pre-pressurizing member **230** may be coupled to an upper surface of the holder member **220.** The pre-pressurizing member **230** may be coupled with the holder member **220.** The pre-pressurizing member **230** may be inserted and coupled to the holder member **220** from above. The pre-pressurizing member **230** may apply pressure to the OIS guide ball **820.** The pre-pressurizing member **230** may be in contact with the OIS guide ball **820.** The pre-pressurizing member **230** may be directly in contact with the OIS guide ball **820.** The pre-pressurizing member **230** may pressurize to the OIS guide ball **820** by being coupled to the holder member **220.**

The AF carrier **210** may comprise a protruded part **231.** The pre-pressurizing member **230** may comprise a protruded part **231.** The protruded part **231** may be coupled to the groove **222** of the holder member **220.** The protruded part **231** of the pre-pressurizing member **230** may be inserted into a groove **222** of the holder member **220** from above. The protruded part **231** of the pre-pressurizing member **230** may be disposed in a groove **222** of the holder member **220.** At least a part of the protruded part **231** of the pre-pressurizing member **230** may be disposed in a groove **222** of the holder member **220.** The OIS guide ball **820** may be disposed on a lower end portion of the protruded part **231** of the pre-pressurizing member **230.** The protruded part **231** may comprise a plurality of protrusions. The protruded part **231** may comprise four protrusions.

The AF carrier **210** may comprise a groove **232**. The pre-pressurizing member **230** may comprise a groove **232**. The groove **232** may be an 'OIS guide ball accommodating groove'. The groove **232** may be formed in the protruded part **231.** The groove **232** may be formed on a lower surface of the protruded part **231.** The groove **232** may be formed at an end portion of the protruded part **231.** The groove **232** may be concavely formed on a lower surface of the protruded part **231.** An OIS guide ball **820** may be disposed in the groove **232.** The groove **232** may be directly in contact with the plate member **825.**

The lens driving device **10** may comprise a cover **240.** The AF moving part **200** may comprise a cover **240.** The cover **240** may be coupled with the AF carrier **210.** The cover **240** may be coupled to a lower surface of the AF carrier **210.** The cover **240** may be coupled to the AF carrier **210** at a lower side. The cover **240** may comprise a hook. The hook of the cover **240** may be coupled to the AF carrier **210.** The hook of the cover **240** is protruded upward and may be coupled to a side surface of the AF carrier **210.**

Hereinafter, any one of the 'groove **222',** 'groove **224'** and 'groove **232'** of the AF carrier **210** is referred to as a 'first groove', the other is referred to as a 'second groove', and yet the other can be referred to as the 'third groove'.

The lens driving device **10** may comprise an OIS moving part. The OIS moving part may be disposed in the fixed part **100.** The OIS moving part may be disposed inside the fixed part **100.** The OIS moving part may be disposed on the fixed part **100.** The OIS moving part may be disposed inside the AF moving part **200.** The OIS moving part may be movably disposed. The OIS moving part may move in a direction perpendicular to the optical axis against the fixed part 100 and the AF moving part **200** by the OIS driving part. The OIS moving part may move during OIS driving.

The lens driving device **10** may comprise an OIS carrier **300.** The OIS moving part may comprise an OIS carrier **300.** The OIS carrier **300** may be an 'OIS holder'. The OIS carrier **300** may be a 'bobbin'. The OIS carrier **300** may be disposed inside the AF carrier **210.** The OIS carrier **300** may be disposed inside the base **110.** The OIS carrier **300** may be disposed on the base **110.** The OIS carrier **300** may be disposed inside the cover **120.** The OIS carrier **300** may be movably disposed in a direction perpendicular to the optical axis.

The OIS carrier **300** may comprise an outer side surface. The OIS carrier **300** may comprise a plurality of side surfaces. The OIS carrier **300** may comprise a first side surface and a second side surface being disposed opposite to each other, and a third side surface and a fourth side surface being disposed opposite to each other. The AF coil **420** may be disposed between a first side surface of the OIS carrier **300** and the AF magnet **410.** The OIS-x magnet **510** may be disposed on a third side surface of the OIS carrier **300.** The OIS-y magnet **610** may be disposed on a second side surface of the OIS carrier **300.**

The OIS carrier **300** may comprise a groove. The groove may be an 'upper elastic member interference prevention groove'. A groove may be formed on an upper surface of the OIS carrier **300.** The groove may be concavely formed on an upper surface of the OIS carrier **300.** The groove may be disposed at a position corresponding to the upper elastic member **830** to prevent interference between the OIS carrier **300** and the upper elastic member **830.**

The OIS carrier **300** may comprise a groove **310.** The groove **310** may be an 'OIS guide ball accommodating groove'. An OIS guide ball **820** may be disposed in the groove **310.** The groove **310** may be directly in contact with the OIS guide ball **820.** The groove **310** may be disposed in a direction perpendicular to the optical axis. The groove **310** may be recessed in an optical axis direction. The groove **310** may comprise a plurality of grooves. The groove **310** may comprise four grooves. The groove **310** may be in contact with the OIS guide ball **820** at one point. Or, the groove **310** may be in contact with the OIS guide ball **820** at two points. The number of contact points between the OIS carrier **300** and the OIS guide ball **820** may vary due to the movement of the OIS guide ball **820.** The groove **310** may be formed on an upper surface of the OIS carrier **300.** The groove **310** may be open upward.

The OIS carrier **300** may comprise a lateral stopper. The lateral stopper may limit the stroke of the OIS carrier **300** in a lateral direction. That is, when the OIS carrier 300 moves to the maximum, the lateral stopper of the OIS carrier **300** may be in contact with one or more of the AF carrier **210** and the base **110.** The lateral stopper may be formed on an outer side surface of the OIS carrier **300.** The lateral stopper may be protruded outward from a side surface of the OIS carrier **300.**

The OIS carrier **300** may comprise a protrusion **320.** The protrusion **320** may be coupled with the upper elastic member **830.** The protrusion **320** may be a 'coupling protrusion'. The upper elastic member **830** may comprise a hole into which the protrusion **320** of the OIS carrier **300** is inserted. The protrusion **320** may be formed on an upper surface of the OIS carrier **300.**

The OIS carrier **300** may comprise a groove **330.** The groove **313** may be a 'lens adhesive accommodating groove'. The groove **330** may be formed on an inner circumferential surface of the OIS carrier **300.** The groove **330** may be concavely formed on an inner circumferential surface of the OIS carrier **300.** An adhesive may be injected between the lens and the OIS carrier **300** through the groove **330.** An adhesive for bonding the lens and the OIS carrier **300** may be disposed in the groove **330.**

The OIS carrier **300** may comprise a groove **340.** The groove **340** may be formed on a lower surface of the OIS carrier **300.** The groove **340** may be opened outward.

The OIS carrier **300** may comprise a mounting part **350.** The mounting part **350** may be a 'magnet mounting part'. The magnets **510** and **620** may be disposed on the mounting part **350.** The mounting part **350** may be formed as a groove, for an example.

Hereinafter, any one of the 'groove **310',** 'groove **330'** and 'groove **340'** of the OIS carrier **300** is referred to as a 'first groove', and the other is referred to as a 'second groove', and yet the other may be referred to as the 'third groove'.

The lens driving device **10** may comprise a driving part. The driving part may move the moving part against the fixed part **100.** The driving part may comprise the AF driving part. The driving part may comprise an AF driving part. The driving part may comprise an OIS-x driving part. The driving part may comprise an OIS-y driving part. The driving part may comprise a coil and a magnet.

The lens driving device **10** may comprise an AF driving part. The AF driving part may move the AF moving part **200** in an optical axis direction. The AF driving part may move the AF carrier **210** in an optical axis direction. The AF driving part may move the AF carrier **210** in an optical axis direction through electromagnetic force. The AF driving part may comprise a coil and a magnet.

In a first embodiment of the present invention, the AF carrier **210** and the OIS carrier **300** can move in an optical axis direction by the interaction between the AF coil **420** and the AF magnet **410.** The AF coil **420,** the AF carrier **210,** and the OIS carrier **300** may move integrally in an optical axis direction.

The lens driving device **10** may comprise an AF magnet **410.** The AF driving part **400** may comprise an AF magnet **410.** The AF magnet **410** may be an 'AF magnet'. The AF magnet **410** may be a permanent magnet. The AF magnet **410** may be disposed in the fixed part **100.** The AF magnet **410** may be disposed on the base **110.** The AF magnet **410** may be disposed in the cover **120.** The AF magnet **410** may be disposed in the side plate **122** of the cover **120.** The AF magnet **410** may be disposed on an outer side surface of the base **110.** The AF magnet **410** may be disposed on an inner side surface of the base **110.** The AF magnet **410** may be fixed to the base **110.** AF magnet **410** may be coupled to the base **110.** The AF magnet **410** may be attached to the base **110** with an adhesive. The AF magnet **410** may be disposed inside the cover **120.** The AF magnet **410** may interact with the AF coil **420.** The AF magnet **410** may interact with the AF coil **420** electromagnetically. The AF magnet **410** may be disposed at a position corresponding to the AF coil **420.** The AF magnet **410** and the AF coil **420** may face each other. The AF magnet **410** may face the AF coil **420.** The AF magnet **410** may be overlapped with the AF coil **420** in a direction perpendicular to the optical axis.

The AF magnet **410** may be a 4-pole magnet. The AF magnet **410** may comprise a 4-pole magnetized magnet. The AF magnet **410** may comprise a first magnet part comprising an N pole and an S pole, and a second magnet part comprising an N pole and an S pole. The first magnet part and the second magnet part may be disposed in a vertical direction. The first magnet part and the second magnet part are disposed spaced apart from each other in a vertical direction, and a neutral part may be disposed between the first magnet part and the second magnet part.

The lens driving device **10** may comprise an AF coil **420.** The AF driving part **400** may comprise an AF coil **420.** The AF coil **420** may interact with the AF magnet **410.** The AF coil **420** may face the AF magnet **410.** The AF coil **420** and the AF magnet **410** may face each other. The AF coil **420** may be disposed at a position corresponding to the AF magnet **410.** The AF coil **420** may be overlapped with the AF magnet **410** in a direction perpendicular to the optical axis. The AF coil **420** may be disposed on an inner substrate **720.** The AF coil **420** may be disposed in the AF carrier **210.** The AF coil **420** may be disposed in the AF moving part **200.**

In a first embodiment of the present invention, the AF coil **420** can move in an optical axis direction. The AF coil **420** may move in an optical axis direction through interaction with the AF magnet **410.** The AF coil **420** may move together with the AF moving part **200.** The AF coil **420** may move in an optical axis direction together with the AF moving part **200.** During the AF driving process, the AF coil **420** may move along with the AF moving part **200** in an optical axis direction. The AF coil **420** may be disposed in the AF moving part **200.** The AF coil **420** may be fixed to the AF moving part **200.** The AF coil **420** may be coupled to the AF moving part **200.**

The lens driving device **10** may comprise an AF sensor **430.** The AF driving part **400** may comprise an AF sensor **430.** The AF sensor **430** may be a Hall sensor. The AF sensor **430** may be disposed in the inner substrate **720.** The AF sensor **430** may detect the AF magnet **410.** The AF sensor **430** may detect movement of the AF magnet **410.** The movement amount or position of the AF magnet **410** detected by the AF sensor **430** may be used for feedback of auto focus driving.

The AF sensor **430** may be a driver IC. The driver IC may comprise a sensing unit. The sensing unit may comprise a Hall IC. The driver IC may be electrically connected to the AF coil **420.** The driver IC may supply current to the AF coil **420.**

The AF sensor **430** may be disposed inside the AF coil **420.** The AF sensor **430** may be overlapped with a neutral portion of the AF magnet **410** in a direction perpendicular to the optical axis. As a modified embodiment, the AF sensor **430** may be disposed outside the AF coil **420.** The AF sensor **430** may be overlapped with the AF coil **420** in an optical axis direction. The AF sensor **430** may be overlapped with the AF coil **420** in a direction perpendicular to the optical axis.

The lens driving device **10** may comprise an AF yoke **440.** The AF yoke **440** may be disposed at a position corresponding to the AF magnet **410.** An attractive force may act between the AF yoke **440** and the AF magnet **410.** The contact between the AF guide ball **810** and the base **110** and the AF carrier **210** can be maintained as it is by the attractive force between the AF yoke **440** and the AF magnet **410.** The AF yoke **440** may be disposed in the inner substrate **720.** The AF yoke **440** may be disposed inside the AF coil **420.**

The lens driving device **10** may comprise an OIS driving part. The OIS driving part may move the OIS moving part **300** in a direction perpendicular to the optical axis direction. The OIS driving part may move the OIS carrier **300** in a direction perpendicular to the optical axis. The OIS driving part may move the OIS carrier **300** in a direction perpendicular to the optical axis through electromagnetic force.

The lens driving device **10** may comprise an OIS-x driving part. The OIS driving part may comprise an OIS-x driving part. The OIS-x driving part may move the OIS carrier **300** in an x-axis direction perpendicular to the optical axis. The OIS-x driving part may move the OIS carrier **300** in an x-axis direction perpendicular to the optical axis through electromagnetic force. The OIS-x driving part may comprise a coil and a magnet.

In a first embodiment of the present invention, the OIS-x magnet **510** and the OIS-x coil **520** may move the OIS moving part **300** in a first direction perpendicular to the optical axis direction. At this time, the first direction may be an x-axis direction. Due to the interaction between the OIS-x coil **520** and the OIS-x magnet **510,** the OIS carrier **300** can move in an x-axis direction perpendicular to the optical axis direction. The OIS-x magnet **510** and the OIS carrier **300** may integrally move in an x-axis direction.

The lens driving device **10** may comprise an OIS-x magnet **510.** The OIS driving part may comprise an OIS-x magnet **510.** The OIS-x magnet **510** may be 'OIS-x magnet'. The OIS-x magnet **510** may be a permanent magnet. The OIS-x magnet **510** may be disposed in the OIS moving part. The OIS-x magnet **510** may be spaced apart from the AF magnet **410.** The OIS-x magnet 510 may be disposed in the OIS carrier **300.** The OIS-x magnet **510** may be disposed on an outer side surface of the OIS carrier **300.** The OIS-x magnet **510** may be fixed to the OIS carrier **300.** The OIS-x magnet **510** may be coupled to the OIS carrier **300.** The OIS-x magnet **510** may be attached to the OIS carrier **300** with an adhesive. The OIS-x magnet **510** may be disposed inside the cover **120.** The OIS-x magnet **510** may interact with the OIS-x coil **520.** The OIS-x magnet **510** may interact electromagnetically with the OIS-x coil **520.** The OIS-x magnet **510** may be disposed at a position corresponding to the OIS-x coil **520.** The OIS-x magnet **510** and the OIS-x coil **520** may face each other. The OIS-x magnet **510** may face the OIS-x coil **520.** The OIS-x magnet **510** may be overlapped with the OIS-x coil **520** in a direction perpendicular to the optical axis. The OIS-x magnet **510** may be overlapped with the OIS-x coil **520** in an x-axis direction. The OIS-x magnet **510** can move in an x-axis direction perpendicular to the optical axis.

The second magnet **610** may be a two-pole magnet. The OIS-x magnet **510** may comprise a two-pole magnetized magnet. The OIS-x magnet **510** may comprise an N pole and an S pole.

The lens driving device **10** may comprise an OIS-x coil **520.** The OIS driving part may comprise an OIS-x coil **520.** The OIS-x coil **520** may interact with the OIS-x magnet **510.** The OIS-x coil **520** may move the OIS-x magnet **510** in an x-axis direction perpendicular to the optical axis. The OIS-x coil **520** may move the OIS-x magnet **510** in an x-axis direction through interaction with the OIS-x magnet **510.** The OIS-x coil **520** may face the OIS-x magnet **510.** The OIS-x coil **520** and the OIS-x magnet **510** may face each other. The OIS-x coil **520** may be disposed at a position corresponding to the OIS-x magnet **510.** The OIS-x coil **520** may be overlapped with the OIS-x magnet **510** in a direction perpendicular to the optical axis. The OIS-x coil **520** may be disposed in the inner substrate **720.** The OIS-x coil **520** may be disposed in the AF carrier **210.**

In a first embodiment of the present invention, the OIS-x coil **520** may move together with the AF moving part **200.** The OIS-x coil **520** may move in an optical axis direction together with the AF moving part **200.** During the AF driving process, the OIS-x coil **520** may move along with the AF moving part **200** in an optical axis direction. The OIS-x coil **520** may be disposed in the AF moving part **200.** The OIS-x coil **520** may be fixed to the AF moving part **200.** The OIS-x coil **520** may be coupled to the AF moving part **200.**

The lens driving device **10** may comprise an OIS-x sensor **530.** The OIS driving part may comprise an OIS-x sensor **530.** The OIS-x sensor **530** may be disposed in the inner substrate **720.** The OIS-x sensor **530** may comprise a Hall sensor. The OIS-x sensor **530** may detect the OIS-x magnet **510.** The OIS-x sensor **530** may detect the magnetic force of the OIS-x magnet **510.** The OIS-x sensor **530** may be disposed above the OIS-x magnet **520.** The OIS-x sensor **530** may be overlapped with the OIS-x magnet **520** in an optical axis direction. In a modified embodiment, the OIS-x sensor **530** may be disposed inside the OIS-x coil **520.** The OIS-x sensor **530** may be overlapped with the OIS-x coil **520** in an optical axis direction. The OIS-x sensor **530** may be overlapped with the OIS-x coil **520** in a direction perpendicular to the optical axis. The OIS-x sensor **530** may face the OIS-x magnet **510.** The OIS-x sensor **530** may be disposed at a position corresponding to the OIS-x magnet **510.** The OIS-x sensor **530** may detect the movement of the OIS-x magnet **510.** The movement amount or position of the OIS-x magnet **510** detected by the OIS-x sensor **530** may be used for feedback of hand shake correction driving in an x-axis direction.

The lens driving device **10** may comprise an OIS-x yoke **540.** The OIS-x yoke **540** may be disposed in the OIS-x magnet **510.** The OIS-x yoke **540** may be disposed between the OIS-x magnet **510** and the OIS carrier **300.** The OIS-x yoke **540** may enhance the interaction force with the OIS-x coil **520** by preventing magnetic flux leakage of the OIS-x magnet **510.**

The lens driving device **10** may comprise an OIS-y driving part. The OIS driving part may comprise an OIS-y driving part. The OIS-y driving part may move the OIS carrier **300** in a y-axis direction perpendicular to both the optical axis and the x-axis direction. The OIS-y driving part may move the OIS carrier **300** in a y-axis direction perpendicular to both the optical axis and the x-axis direction through electromagnetic force. The OIS-y driving part may comprise a coil and a magnet.

In a first embodiment of the present invention, the OIS-y magnet **610** and the OIS-y coil **620** may move the OIS moving part in a second direction perpendicular to the optical axis direction and the first direction. At this time, the second direction may be a y-axis direction. Due to the interaction between the OIS-y coil **620** and the OIS-y magnet **610,** the OIS carrier **300** can move in a y-axis direction perpendicular to both the optical-axis direction and the x-axis direction. The OIS-y magnet **610** and the OIS carrier **300** may move integrally in a y-axis direction. The OIS-y magnet **610** may be overlapped with the AF magnet **410** in a second direction. The OIS-y magnet **610** may be overlapped with the AF magnet **410** in a y-axis direction.

The lens driving device **10** may comprise an OIS-y magnet **610.** The OIS-y driving part may comprise an OIS-y magnet **610.** The OIS-y magnet **610** may be 'OIS-y magnet'. The OIS-y magnet **610** may be a permanent magnet. The OIS-y magnet **520** may be disposed in the OIS moving part. The OIS-y magnet **610** may be spaced apart from the OIS-x magnet **510.** The OIS-y magnet **610** may be spaced apart from the AF magnet **410.** The OIS-y magnet **610** may be disposed in the OIS carrier **300.** The OIS-y magnet **610** may be disposed on an outer side surface of the OIS carrier **300.** The OIS-y magnet **610** may be fixed to the OIS carrier **300.** The OIS-y magnet **610** may be coupled to the OIS carrier **300.** The OIS-y magnet **610** may be attached to the OIS carrier **300** with an adhesive. The OIS-y magnet **610** may be disposed inside the cover **120.** The OIS-y magnet **610** may interact with the OIS-y coil **620.** The OIS-y magnet **610** may interact electromagnetically with the OIS-y coil **620.** The OIS-y magnet **610** may be disposed at a position corresponding to the OIS-y coil **620.** The OIS-y magnet **610** and the OIS-y coil **620** may face each other. The OIS-y magnet **610** may face the OIS-y coil **620.** The OIS-y magnet 610 may be overlapped with the OIS-y coil **620** in a direction perpendicular to the optical axis. The OIS-y magnet **610** may be overlapped with the OIS-y coil **620** in a y-axis direction. The OIS-y magnet **610** may move in a y-axis direction.

The OIS-y magnet **610** may be a two-pole magnet. The OIS-y magnet **610** may comprise a two-pole magnetized magnet. The OIS-y magnet **610** may comprise an N pole and an S pole.

The lens driving device **10** may comprise an OIS-y coil **620.** The OIS-y driving part may comprise an OIS-y coil **620.** The OIS-y coil **620** may interact with the OIS-y magnet **610.** The OIS-y coil **620** may be disposed at an opposite side of the AF coil **420** with respect to the optical axis. The OIS-y coil **620** may move the OIS-y magnet **610** in a y-axis direction perpendicular to both the optical axis and the x-axis. The OIS-y coil **620** may move the OIS-y magnet **610** in a y-axis direction through interaction with the OIS-y magnet **610.** The OIS-y coil **620** may face the OIS-y magnet **610.** The OIS-y coil **620** and the OIS-y magnet **610** may face each other. The OIS-y coil **620** may be disposed at a position corresponding to the OIS-y magnet **610.** The OIS-y coil **620** may be overlapped with the OIS-y magnet **610** in a direction perpendicular to the optical axis. The OIS-y coil **620** may be disposed in the inner substrate **720.** The OIS-y coil **620** may be disposed in the AF carrier **200.**

In a first embodiment of the present invention, the OIS-y coil **620** may move together with the AF moving part **200.** The OIS-y coil **620** may move in an optical axis direction together with the AF moving part **200.** During the AF driving process, the OIS-y coil **620** may move along with the AF moving part **200** in an optical axis direction. The OIS-y coil **620** may be disposed in the AF moving part **200.** The OIS-y coil **620** may be fixed to the AF moving part **200.** The OIS-y coil **620** may be coupled to the AF moving part **200.**

The lens driving device **10** may comprise an OIS-y sensor **630.** The OIS-y driving part may comprise an OIS-y sensor **630.** The OIS-y sensor **630** may be disposed in the inner substrate **720.** The OIS-y sensor **630** may comprise a Hall sensor. The OIS-y sensor **630** may detect the OIS-y magnet **610.** The OIS-y sensor **630** may detect the magnetic force of the OIS-y magnet **610.** The OIS-y sensor **630** may be disposed above the OIS-y magnet **620.** The OIS-y sensor **630** may be overlapped with the OIS-y magnet **620** in an optical axis direction. The OIS-y sensor **630** may be overlapped with the OIS-y magnet **620** in a direction perpendicular to the optical axis. In a modified embodiment, the OIS-y sensor **630** may be disposed inside the OIS-y coil **620.** The OIS-y sensor **630** may be overlapped with the OIS-y coil **620** in an optical axis direction. The OIS-y sensor **630** may face the OIS-y magnet **610.** The OIS-y sensor **630** may be disposed at a position corresponding to the OIS-y magnet **610.** The OIS-y sensor **630** may detect the movement of the OIS-y magnet **610.** The movement amount or position of the OIS-y magnet **610** detected by the OIS-y sensor **630** may be used for feedback of hand shake correction driving in a y-axis direction.

The lens driving device **10** may comprise an OIS-y yoke **640.** The OIS-y yoke **640** may be disposed in the OIS-y magnet **610.** The OIS-y yoke **640** may be disposed between the OIS-y magnet **610** and the OIS carrier **300.** The OIS-y yoke **640** may prevent magnetic flux leakage of the OIS-y magnet **610** to enhance interaction force with the OIS-y coil **620.**

When viewed from above, the AF magnet **410,** the AF coil **420,** the OIS-y magnet **610,** and the OIS-y coil **620** may be sequentially disposed on an imaginary straight line. When viewed from an upper surface, the AF magnet **410,** the AF coil **420,** the OIS-y magnet **610,** and the OIS-y coil **620** may be sequentially disposed on an imaginary straight line. When viewed from above, the AF magnet **410,** the AF coil **420,** the OIS-y magnet **610,** and the OIS-y coil **620** may be disposed in order. When viewed from above, the AF magnet **410,** the AF coil **420,** the OIS-y magnet **610,** and the OIS-y coil **620** may be sequentially disposed in a y-axis direction. When viewed from above, the AF magnet **410,** the AF coil **420,** the OIS-y magnet **610,** and the OIS-y coil **620** may be overlapped in a y-axis direction.

The lens driving device **10** may comprise substrates **710** and **720.** The substrates **710** and **720** may comprise a flexible printed circuit board (FPCB). The substrates **710** and **720** may be electrically connected to the coils **420, 520,** and **620.** The substrates **710** and **720** may be electrically connected to the sensors **430, 530,** and **630.**

The lens driving device **10** may comprise an outer substrate **710.** An outer substrate **710** may be disposed on the base **110.** The outer substrate **710** may be electrically connected to the coils **420, 520,** and **620.** The outer substrate **710** may be electrically connected to the sensors **430, 530,** and **630.** The outer substrate **710** may connect the AF carrier **210** and the base **110.** The outer substrate **710** may elastically connect the AF carrier **210** and the base **110.** The outer substrate **710** may connect the fixed part **100** and the inner substrate **720.** The outer substrate **710** may movably support the AF carrier **210** against the base **110.** The outer substrate **710** may guide the AF carrier **210** to move in an optical axis direction against the base **110.** The outer substrate **710** may comprise a flexible substrate. The outer substrate **710** may comprise a flexible printed circuit board (FPCB). The outer substrate **710** may comprise an elastic portion. The outer substrate **710** may comprise an elastic member. The outer substrate **710** may comprise an outer side portion **711** being disposed in the fixed part **100** and a connecting portion **712** being extended from the outer side portion **711** and coupled to the inner substrate **720.**

The outer substrate **710** may comprise an outer side portion **711.** The outer side portion **711** may be disposed on the base **110.** The outer side portion **711** may be formed to surround the side surface of the base **110.** The outer side portion **711** may be disposed on three side surfaces of the base **110.** The outer side portion **711** may comprise two terminal units. The two terminal units may be disposed opposite to each other with respect to the optical axis. The terminal unit may comprise a terminal **712-1.**

The outer substrate **710** may comprise a terminal **711-1.** The outer side portion **711** of the outer substrate **710** may comprise a terminal **711-1.** The terminal **711-1** may be electrically connected to the terminal **712-1.** The terminal **711-1** may be disposed in a lower end portion of the base **110.** The terminal **711-1** may be coupled to the printed circuit board **50.** The terminal **711-1** may be coupled to a terminal of the printed circuit board **50** through soldering. The terminal **711-1** may be coupled to a terminal of the printed circuit board **50** through a conductive member. The terminal **711-1** may be connected to a terminal of the printed circuit board **50.** The terminal **711-1** may be electrically connected to a terminal of the printed circuit board **50.**

The outer substrate **710** may comprise a connecting portion **712.** The connecting portion **712** may be an 'extension part'. The connecting portion **712** may be a 'leg part'. The connecting portion **712** may be extended from the outer side portion **711.** At least a portion of the connecting portion **712** may move along with the AF carrier **210.** The extension part may be extended from the outer side portion **711.** At least a portion of the extension part may move together with the AF carrier **210.** At least a portion of the connecting portion **712** may be disposed perpendicular to the optical axis direction. The connecting portion **712** of the outer substrate **710** may be coupled with the inner substrate **720** so that the inner substrate **720** can move in an optical axis direction. At least a portion of the connecting portion **712** may be disposed parallel to an optical axis direction.

The connecting portion **712** may comprise a plurality of connecting portions. The connecting portion **712** may comprise a first connecting portion and a second connecting portion. The second connecting portion may be disposed below the first connecting portion.

The outer substrate **710** may comprise a terminal **712-1.** The connecting portion **712** of the outer substrate **710** may comprise a terminal **712-1.** The terminal **712-1** may be coupled with the terminal **721-1** of the inner substrate **720.** The terminal **712-1** of the outer substrate **710** may be coupled to the terminal **721-1** of the inner substrate **720** through soldering. The terminal **712-1** of the outer substrate **710** may be coupled to the terminal **721-1** of the inner substrate **720** through a conductive member. The terminal **712-1** of the outer substrate **710** may be connected to the terminal **721-1** of the inner substrate **720.** The terminal **712-1** of the outer substrate **710** may be electrically connected to the terminal **721-1** of the inner substrate **720.**

Hereinafter, any one of the 'terminal **711-1'** and the 'terminal **712-1'** of the outer substrate **710** may be referred to as a 'first terminal', and the other may be referred to as a 'second terminal'.

The lens driving device **10** may comprise an inner substrate **720.** The inner substrate **720** may be electrically connected to the coils **420, 520,** and **620.** The inner substrate **720** may be electrically connected to the sensors **430, 530,** and **630.** The inner substrate **720** may be disposed in the AF moving part **200.** The inner substrate **720** may be disposed in the AF carrier **210.** The inner substrate **720** may be fixed to the AF carrier **210.** The inner substrate **720** may be coupled to the AF carrier **210.** The inner substrate **720** may be attached to the AF carrier **210** with an adhesive. The inner substrate **720** may comprise a flexible substrate. The inner substrate **720** may comprise a flexible printed circuit board (FPCB). The inner substrate **720** may comprise an elastic portion. The inner substrate **720** may comprise an elastic member.

The inner substrate **720** may comprise a side plate portion **721.** The side plate portion **721** may be disposed on a side surface of the AF carrier **210.** The side plate portion **721** may be disposed on an outer side surface of the AF carrier **210.** In another embodiment, the side plate portion **721** may be disposed on an inner surface of the AF carrier **210.** The side plate portion **721** of the inner substrate **720** may comprise a plurality of portions. The side plate portion **721** may comprise first to fourth portions.

The inner substrate **720** may comprise a first portion. The first portion may be disposed in the AF carrier **210.** The AF coil **420** may be disposed in a first portion of the inner substrate **720.** The AF sensor **430** may be disposed in a first portion of the inner substrate **720.** The AF yoke **440** may be disposed on a first portion of the inner substrate **720.**

The inner substrate **720** may comprise a second portion. The second portion can be placed at an opposite side of the first portion. The second portion may be disposed in the AF carrier **200.** The second portion may be disposed on a second side surface of the AF carrier **200.** The OIS-y coil **620** may be disposed in a second portion of the inner substrate **720.** The OIS-y sensor **630** may be disposed in a second portion of the inner substrate **720.** More specifically, the OIS-y sensor **630** may be disposed in the upper plate portion **722** which is bent and disposed above a second portion of the inner substrate **720.** The OIS-y sensor **630** may be disposed on a lower surface of the upper plate portion **722.**

The inner substrate **720** may comprise a third portion. A third portion may be disposed in the AF carrier **200.** The third portion may be disposed on a third side surface of the AF carrier **200.** The OIS-x coil **520** may be disposed in a third portion of the inner substrate **720.** The OIS-x sensor **530** may be disposed in a third portion of the inner substrate **720.** In more detail, the OIS-x sensor **530** may be disposed in the upper plate portion **722** bent from an upper side of the third portion of the inner substrate **720.** The OIS-x sensor **530** may be disposed on a lower surface of the upper plate portion **722.**

The inner substrate **720** may comprise a fourth portion. The fourth portion may be disposed at an opposite side of the third portion. The fourth portion may be disposed in the AF carrier **200.** The fourth portion may be disposed on a fourth side surface of the AF carrier **200.**

The inner substrate **720** may comprise a terminal **721-1.** The terminal **721-1** may be disposed in the fourth portion of the inner substrate **720.** The terminal **721-1** may be electrically connected to the coils **420, 520,** and **620.** The terminal **721-1** may be electrically connected to the sensors **430, 530,** and **630.**

The lens driving device **10** may comprise a guide member. The guide member may comprise a ball. The guide member may comprise a pin. The guide member may comprise a cylindrical member. The guide member may guide the movement of the moving part against the fixed part **100** in a specific direction.

The lens driving device **10** may comprise an AF guide ball **810.** The AF guide ball **810** may guide the movement of the AF moving part **200** against the fixed part **100** in an optical axis direction. The AF guide ball **810** may guide the movement of the AF carrier **210** against the base **110** in an optical axis direction. The AF guide ball **810** may be disposed between the fixed part **100** and the AF moving part **200.** The AF guide ball **810** may be disposed between the base **110** and the AF carrier **210.** The AF guide ball **810** may be disposed between the side surface of the AF carrier **210** and the base **110.** The AF guide ball **810** may be disposed between the pillars of the cover **120** and the base **110.** The AF guide ball **810** may be disposed between the base **110** and the AF carrier **210** in a y-axis direction. The AF guide ball **810** may be disposed in the groove **113** of the base **110.** The AF guide ball **810** may be disposed in the groove **224** of the AF carrier **210.** The AF guide ball **810** may comprise a first ball in contact with the base **110** and the AF carrier **210** at four points, and a second ball in contact with the base **110** and the AF carrier **210** at three points. The AF guide ball **810** may have a spherical shape. The AF guide ball **810** may be formed of metal. Grease may be applied to the surface of the AF guide ball **810.**

The AF guide ball **810** may comprise a plurality of balls. The AF guide ball **810** may comprise eight balls. The four AF guide balls **810** is disposed at one side of the AF magnet **410** and the remaining four AF guide balls **810** may be disposed at the other side of the AF magnet 410.

The lens driving device **10** may comprise an OIS guide ball **820.** The OIS guide ball **820** may guide the movement of the OIS carrier **300** against the AF carrier **210** in a direction perpendicular to the optical axis. The OIS guide ball **820** may be disposed between the AF moving part **200** and the OIS moving part. The OIS guide ball **820** may be disposed between the AF carrier **210** and the OIS carrier **300.** The OIS guide ball **820** may be disposed between the AF carrier **210** and the OIS carrier **300** in an optical axis direction.

The OIS guide ball **820** may be disposed between the pre-pressurizing member **230** of the AF carrier **210** and the OIS carrier **300.** The OIS guide ball **820** may be pressurized between the AF carrier **210** and the OIS carrier **300** by the pressurizing force of the elastic members **830, 840,** and **850.** The pre-pressurizing member **230** may pressurize the OIS guide ball **820** downward while being coupled to the holder member **220.** The pre-pressurizing member **230** may pressurize the OIS guide ball **820** in a direction of the OIS carrier **300** while being coupled to the holder member **220.** At this time, the OIS carrier **300** may pressurize the OIS guide ball **820** in a direction of the pre-pressurizing member **230** by the restoring force of the elastic members **830, 840,** and **850.** Accordingly, the OIS guide ball **820** may be pressurized between the pre-pressurizing member **230** and the OIS carrier **300.**

The OIS guide ball **820** may guide the movement of the OIS moving part **300** in an x-axis direction and a y-axis direction. The OIS guide ball **820** may guide the OIS carrier **300** to move in an x-axis direction and a y-axis direction perpendicular to an optical axis direction against the AF carrier **210.** That is, the OIS guide ball **820** may guide the OIS carrier **300** to move in an x-axis direction and a y-axis direction. In other words, the OIS guide ball **820** may guide the movement in both the x-axis direction and the y-axis direction. For reference, compared to the comparative example in which the ball for guiding the x-axis direction and the ball for guiding the y-axis direction are separately provided, the size of the lens driving device **10** can be minimized in a first embodiment of the present invention in which a structure for guiding the x-axis direction and a structure for guiding the y-axis direction are integrally provided. In particular, the height of the lens driving device **10** in an optical axis direction can be reduced. Through this, the height being protruded from the smartphone, that is, the shoulder height can be minimized. The OIS guide ball **820** may comprise a plurality of guide members. The OIS guide ball **820** may comprise four guide members.

As a modified embodiment, the OIS guide ball **820** may separately comprise a guide ball for guiding the driving in an x-axis direction and a guide ball for guiding the driving in a y-axis direction.

The lens driving device **10** may comprise an elastic member. The elastic member may be formed to pressurize the OIS guide ball **820.** The elastic member may be formed to guide both an OIS-x-axis driving and an OIS-y-axis driving only with the OIS guide ball **820.** The elastic member may comprise a leaf spring. The elastic member may comprise a wire. The elastic member may have elasticity. The elastic member may be formed of metal.

The first support member may be disposed between the fixed part **100** and the AF moving part **200.** The first support member may guide the AF moving part **200** to move in an optical axis direction. The second support member may be disposed between the AF moving part **200** and the OIS moving part **300.** The second support member may guide the OIS moving part **300** to move in a direction perpendicular to the optical axis direction. One side of the third support member may be coupled to the AF moving part **200** and the other side may be coupled to the OIS moving part **300.**

The AF moving part **200** may comprise a first elastic member. The OIS moving part **300** may comprise a second elastic member. The third support member may couple the first elastic member and the second elastic member. The third support member may comprise a wire **850.**

The lens driving device **10** may comprise an upper elastic member **830.** The upper elastic member **830** may be an 'upper spring'. The upper elastic member **830** may be a leaf spring. The upper elastic member **830** may have elasticity. The upper elastic member **830** may be disposed in the OIS moving part. The upper elastic member **830** may be disposed on an upper surface of the OIS moving part. The upper elastic member **830** may be disposed on an upper surface of the OIS carrier **300.** The upper elastic member **830** may be disposed in the OIS carrier **300.** The upper elastic member **830** may be disposed above the OIS carrier **300.** The upper elastic member **830** may be disposed in the OIS carrier 300. The upper elastic member **830** may be disposed perpendicular to the optical axis.

The upper elastic member **830** may comprise an inner side portion **831.** The inner side portion **831** may be coupled with the OIS moving part.

The upper elastic member **830** may comprise an outer side portion **832.** The outer side portion **832** may be coupled with the wire **850.**

The upper elastic member **830** may comprise a connecting portion **833.** The connecting portion **833** may connect the inner side portion **831** and the outer side portion **832.** The connecting portion **833** may elastically connect the inner side portion **831** and the outer side portion **832.** The connecting portion **833** may comprise elasticity. The connecting portion **833** may be an elastic part.

The inner side portion **831** of the upper elastic member **830** may be disposed lower than an outer side portion **832.** As illustrated in FIG. 29, the inner side portion **831** of the upper elastic member **830** may be disposed lower than the outer side portion **832** by a first distance (see a in FIG. 29). The reason why the inner side portion **831** of the upper elastic member **830** is lower than the outer side portion **832** may be due to the pressurizing force of the pre-pressurizing member **230.** Through this structure, the OIS guide ball **820** can be maintained as it is in contact with the pre-pressurizing member **230** of the AF carrier **210** and the OIS carrier **300.**

The lens driving device **10** may comprise a lower elastic member **840.** The lower elastic member **840** may be a 'housing lower surface terminal' or a 'housing lower surface plate'. The lower elastic member **840** may be a leaf spring. The lower elastic member **840** may have elasticity. The lower elastic member **840** may be disposed in the AF moving part **200.** The lower elastic member **840** may be disposed on a lower surface of the AF moving part **200.** The lower elastic member **840** may be disposed on a lower surface of the AF carrier **210.** The lower elastic member **840** may be disposed on the AF carrier **210.** The lower elastic member **840** may be disposed below the AF carrier **210.** The lower elastic member **840** may be disposed below the AF carrier **210.** The lower elastic member **840** may be disposed perpendicular to the optical axis.

The lower elastic member **840** may comprise an outer side portion **841.** The outer side portion **841** may be coupled with the AF moving part **200.**

The lower elastic member **840** may comprise an inner side portion **842.** The inner side portion **842** may be coupled to the wire **850.**

The lower elastic member **840** may comprise a connecting portion **843.** The connecting portion **843** may connect the outer side portion **841** and the inner side portion **842.** The connecting portion **843** may elastically connect the outer side portion **841** and the inner side portion **842.** The connecting portion **843** may comprise elasticity. The connecting portion **843** may be an elastic part.

The lens driving device **10** may comprise a wire **850.** The wire **850** may be a 'side elastic member'. The wire **850** may be a wire. The wire **850** may be a wire spring. The wire **850** may be a suspension wire. The wire **850** may have elasticity. The wire **850** may connect the upper elastic member **830** and the lower elastic member **840.** The wire **850** may elastically connect the upper elastic member **830** and the lower elastic member **840.** The wire **850** may be disposed parallel to an optical axis. The wire **850** may be disposed in a direction of the optical axis.

Hereinafter, auto focus (AF) driving of the lens driving device according to a first embodiment of the present invention will be described with reference to the drawings.

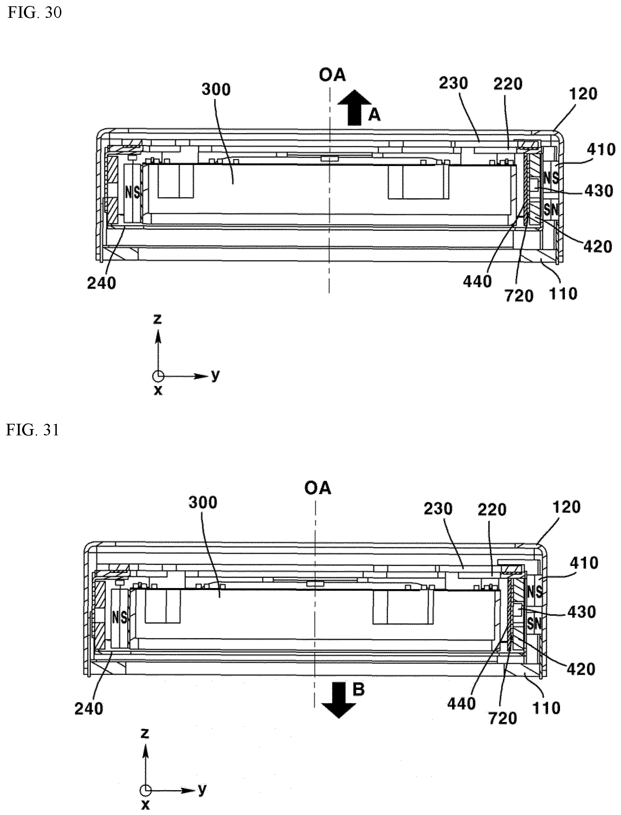

FIGS. 29 to 31 are views for explaining autofocus driving of a lens driving device according to a first embodiment of the present invention. FIG. 29 is a cross-sectional view of a moving part in an initial state in which no current is applied to an AF coil. FIG. 30 is a cross-sectional view illustrating a state in which a moving part moves upward in an optical axis direction when a forward current is applied to an AF coil. FIG. 31 is a cross-sectional view illustrating a moving part moving downward in an optical axis direction when a reverse current is applied to an AF coil.

As illustrated in FIG. 29, the moving part may be disposed at a position spaced apart from both the upper plate **121** and the base **110** of the cover **120** at an initial position where no current is applied to the AF coil **420.** At this time, the moving part may be the AF moving part **200.** In addition, the moving part may comprise the AF moving part **200** and the OIS moving part.

When a forward current is applied to the AF coil **420,** the AF coil **420** may move upward in an optical axis direction due to electromagnetic interaction between the AF coil **420** and the AF magnet **410** (see A in FIG. 30). At this time, the AF carrier **210** together with the AF coil **420** may move upward in an optical axis direction. Furthermore, the OIS carrier 310 and the lens together with the AF carrier **210** may move upward in an optical axis direction. Accordingly, the distance between the lens and the image sensor is changed so that the focus of an image formed on the image sensor through the lens can be adjusted.

When a reverse current is applied to the AF coil **420,** the AF coil **420** may move downward in an optical axis direction due to electromagnetic interaction between the AF coil **420** and the AF magnet **410** (see **B** in FIG. 31). At this time, the AF carrier **210** together with the AF coil **420** may move downward in an optical axis direction. Furthermore, the OIS carrier **310** and the lens together with the AF carrier **210** may move downward in an optical axis direction. Accordingly, the distance between the lens and the image sensor is changed so that the focus of an image formed on the image sensor through the lens can be adjusted.

Meanwhile, during the movement of the AF coil **420,** the AF sensor **430** moves together with the AF coil **420** and detects the strength of the magnetic field of the AF magnet **410** to detect the amount or position of the lens in an optical axis direction. The movement amount or position of the lens in an optical axis direction detected by the AF sensor **430** may be used for autofocus feedback control.

Hereinafter, optical image stabilization (OIS) operation of the lens driving device according to a first embodiment of the present invention will be described with reference to drawings.

FIGS. 32 to 34 are views for explaining hand shake compensation driving of a lens driving device according to a first embodiment of the present invention. FIG. 32 is a cross-sectional view illustrating the appearance of an OIS moving part in an initial state in which no current is applied to an OIS-x coil and an OIS-y coil. FIG. 33 is a cross-sectional view illustrating a state in which an OIS moving part moves in an x-axis direction perpendicular to an optical axis as current is applied to an OIS-x coil. FIG. 34 is a cross-sectional view illustrating a state in which a current is applied to an OIS-y coil so that an OIS moving part moves in a y-axis direction perpendicular to both the optical axis and the x-axis.

As illustrated in FIG. 32, the moving part may be disposed at an initial position in a state in which no current is applied to the OIS-x coil **520** and the OIS-y coil **620.** At this time, the moving part may be the OIS moving part.

When a current is applied to the OIS-x coil **520,** the OIS-x magnet **510** may move in an x-axis direction perpendicular to the optical axis due to electromagnetic interaction between the OIS-x coil **520** and the OIS-x magnet **510** (see **A** in FIG. 33). At this time, the OIS carrier **300** together with the OIS-x magnet **510** may move in an x-axis direction. Furthermore, the lens may move in an x-axis direction together with the OIS carrier **300.** More specifically, when a forward current is applied to the OIS-x coil **520,** the OIS-x magnet **510,** the OIS carrier **300,** and the lens may move in one direction on the x-axis. In addition, when a reverse current is applied to the OIS-x coil **520,** the OIS-x magnet **510,** the OIS carrier **300,** and the lens may move in another direction on the x-axis.

When current is applied to the OIS-y coil **620,** due to the electromagnetic interaction between the OIS-y coil **620** and the OIS-y magnet **610,** the OIS-y magnet **610** can move in a y-axis direction perpendicular to the optical axis (see **B** in FIG. 34). At this time, the OIS carrier **300** together with the OIS-y magnet **610** may move in a y-axis direction. Furthermore, the lens may move in a y-axis direction together with the OIS carrier **300.** More specifically, when a forward current is applied to the OIS-y coil **620,** the OIS-y magnet **610,** the OIS carrier **300,** and the lens may move in one direction on the y-axis. In addition, when a reverse current is applied to the OIS-y coil **620,** the OIS-y magnet **610,** the OIS carrier **300,** and the lens may move in another direction on the y-axis.

Meanwhile, the OIS-x sensor **530** may detect the amount or position of the OIS-x magnet **510** by detecting the strength of the magnetic field of the OIS-x magnet 510. The movement amount or position detected by the OIS-x sensor **530** may be used for feedback control for hand shake compensation in an x-axis direction. The OIS-y sensor **630** may detect the movement amount or position of the OIS-y magnet **610** by detecting the strength of the magnetic field of the OIS-y magnet **610.** The movement amount or position detected by the OIS-y sensor **630** may be used for hand shake compensation feedback control in a y-axis direction.

Hereinafter, a camera device according to a first embodiment of the present invention will be described with reference to the drawings.

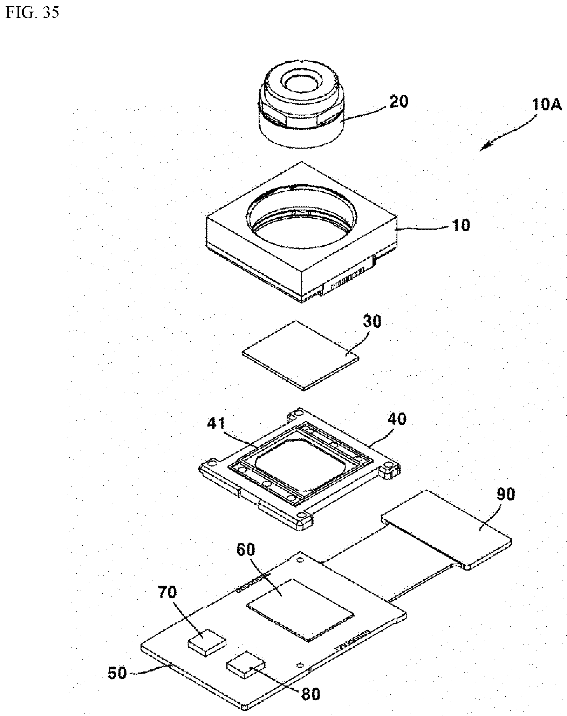

FIG. 35 is an exploded perspective view of a camera device according to a first embodiment of the present invention.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to the OIS carrier **310** of the lens driving device **10.** The lens module **20** may be coupled to the OIS carrier **310** by screw-coupling and/or adhesive. The lens module **20** may move integrally with the OIS carrier **310.**

The camera device **10A** may comprise a filter **30.** The filter **30** may serve to block light of a specific frequency band from entering the image sensor **60** from light passing through the lens module **20.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in base **110.** The filter **30** may comprise an infrared filter. The infrared filter may block light of an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruded part **41** in which the filter **30** is disposed. An opening may be formed in a portion of the sensor base **40** where the filter **30** is disposed so that light passing through the filter **30** may be incident to the image sensor **60.** The adhesive member may couple or attach the base **110** of the lens driving device **10** to the sensor base **40.** The adhesive member may additionally serve to prevent foreign substances from entering the lens driving device **10.** The adhesive member may comprise any one or more of an epoxy, a thermosetting adhesive, and an ultraviolet curable adhesive.

The camera device **10A** may comprise a printed circuit board (PCB) **50.** The printed circuit board **50** may be a substrate or a circuit board. The lens driving device **10** may be disposed on the printed circuit board **50.** A sensor base **40** may be disposed between the printed circuit board **50** and the lens driving device **10.** The printed circuit board **50** may be electrically connected to the lens driving device **10.** An image sensor **60** may be disposed on the printed circuit board **50.** The printed circuit board **50** may comprise various circuits, elements, and control units to convert an image formed by the image sensor **60** into an electrical signal and transmit the converted electrical signal to an external device.

The camera device **10A** may comprise an image sensor **60.** The image sensor **60** may be a component in which the light passing through the lens and the filter **30** is incident to form an image. The image sensor **60** may be mounted on the printed circuit board **50.** The image sensor **60** may be electrically connected to the printed circuit board **50.** For an example, the image sensor **60** may be coupled to the printed circuit board **50** by a surface mounting technology (SMT). As another example, the image sensor **60** may be coupled to the printed circuit board **50** using a flip chip technology. The image sensor **60** may be disposed such that an optical axis coincides with a lens. That is, the optical axis of the image sensor **60** and the optical axis of the lens may be aligned. The image sensor **60** may convert light being irradiated onto an effective image region of the image sensor **60** into an electrical signal. The image sensor **60** may be any one among a charge coupled device (CCD), a metal oxide semiconductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided on the printed circuit board **50.** The motion sensor **70** may output rotational angular velocity information due to the movement of the camera module. The motion sensor **70** may comprise a 2-axis or 3-axis gyro sensor or an angular velocity sensor.

The camera device **10A** may comprise a control unit **80.** The control unit **80** may be disposed in the printed circuit board **50.** The control unit **80** may be electrically connected to the coil **130** of the lens driving device **10.** The control unit **80** may individually control the direction, intensity, and amplitude of current supplied to the coil **130.** The control unit **80** may perform an auto focus function by controlling the lens driving device **10.** The control unit **80** may be electrically connected to the Hall sensor **140.** The control unit **80** may detect the position of the mover **200** through the Hall sensor **140** and perform autofocus feedback control for the lens driving device **10.**

The camera device **10A** may comprise a connector **90.** The connector **90** may be electrically connected to the printed circuit board **50.** The connector **90** may comprise a port for electrical connection with an external device.

Hereinafter, an optical apparatus according to a first embodiment of the present invention will be described with reference to drawings.

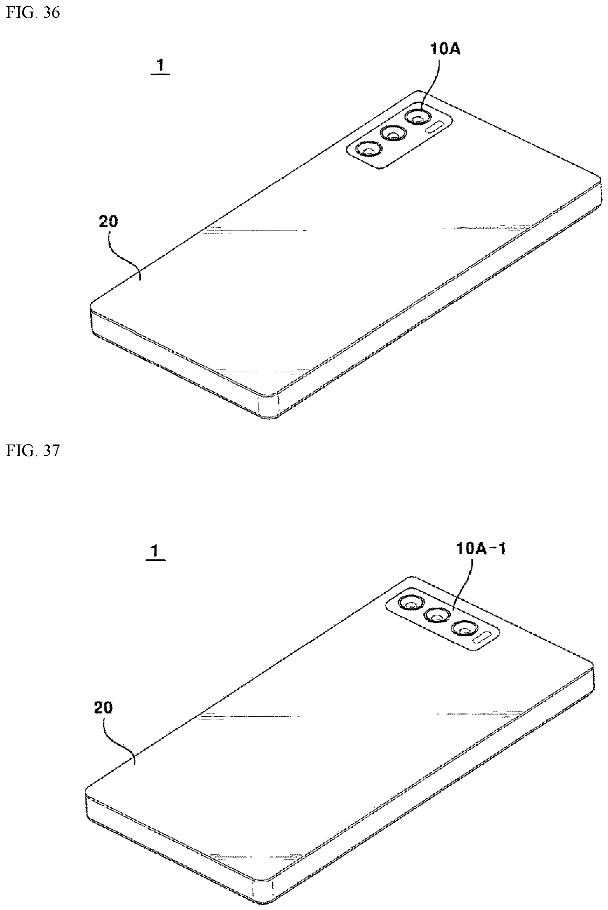

FIG. 36 is a perspective view of an optical apparatus according to a first embodiment of the present invention; and FIG. 37 is a perspective view of an optical apparatus according to a modified embodiment.

The optical apparatus **1** is a mobile phone, mobile phone, portable terminal, mobile terminal, smart phone, smart pad, portable smart device, digital camera, laptop computer, digital broadcasting terminal, personal digital assistants (PDAs), portable multimedia player (PMP), and navigation. The optical apparatus **1** may comprise any device for photographing images or photos.

The optical apparatus **1** may comprise a main body **20.** The optical apparatus **1** may comprise a camera device **10A.** The camera device **10A** may be disposed on the main body **20.** The camera device **10A** may photograph a subject. The optical apparatus **1** may comprise a display. The display may be disposed on the main body **20.** The display may output at least one of a video and an image photographed by the camera device **10A.** The display may be disposed on a first surface of the main body **20.** The camera device **10A** may be disposed on at least one of a first surface of the main body **20** and a second surface opposite to the first surface. As illustrated in FIG. 36, in the camera device **10A,** triple cameras may be disposed in a vertical direction. As illustrated in FIG. 37, in the camera device **10A-1,** triple cameras may be disposed in a horizontal direction.

Hereinafter, the component of a lens driving device according to a second embodiment of the present invention will be described with reference to the drawings.

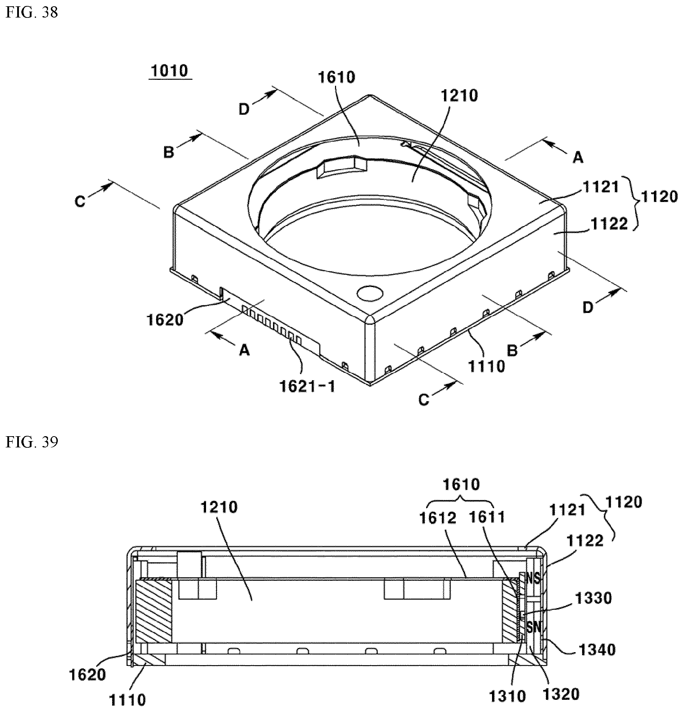

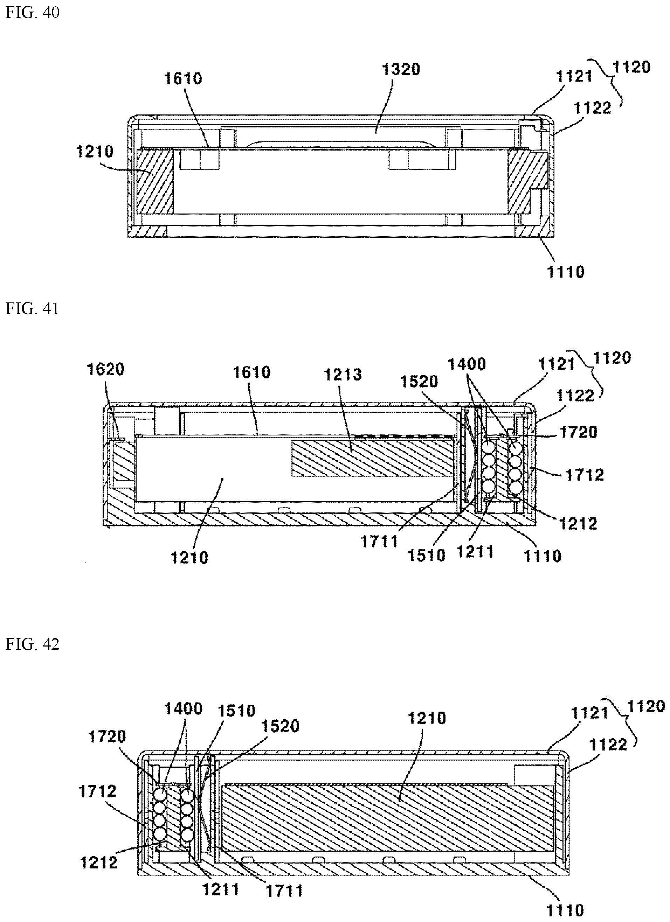

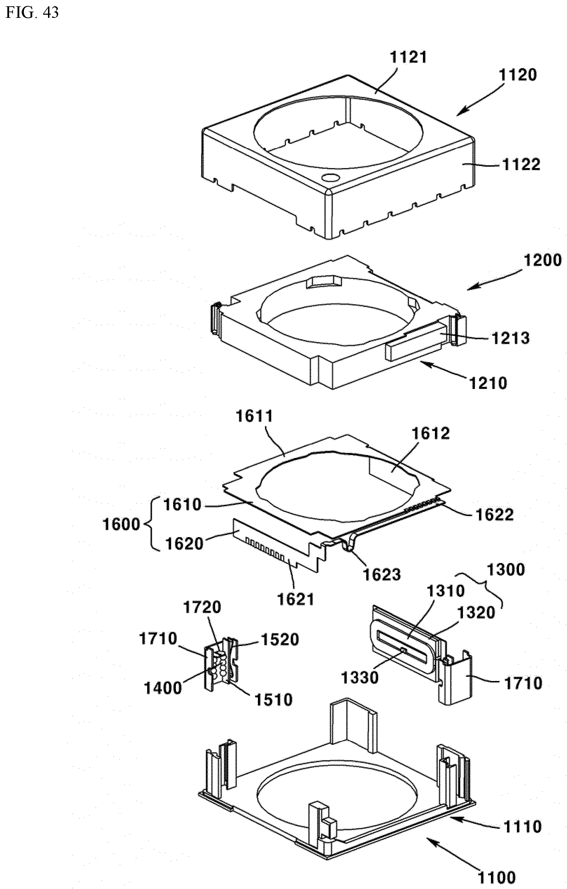

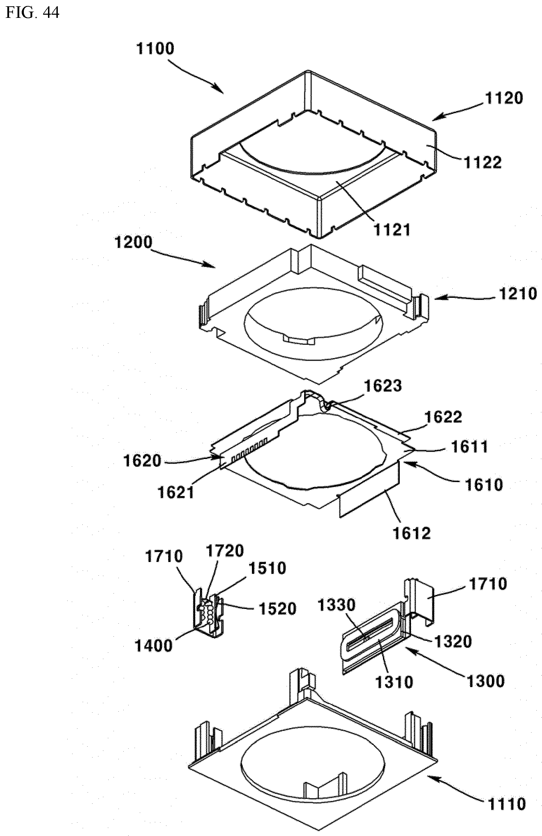

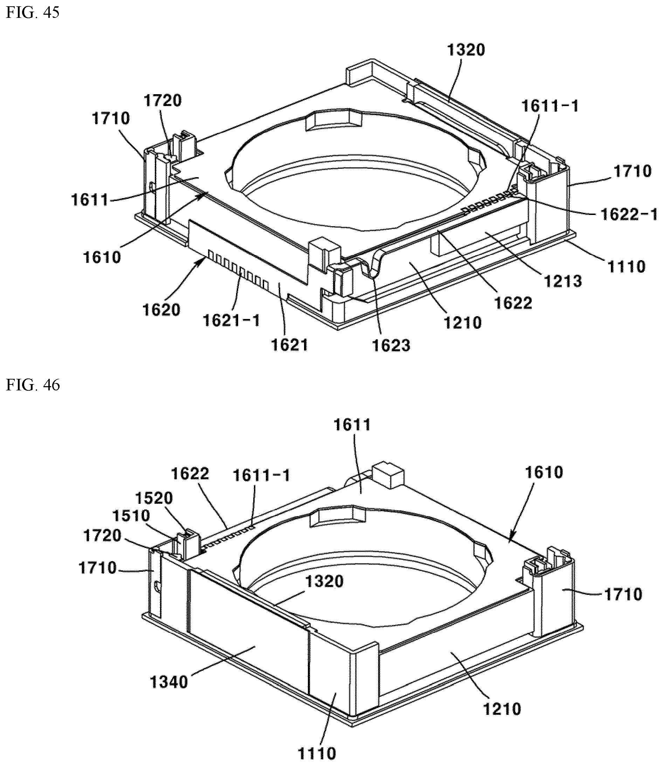

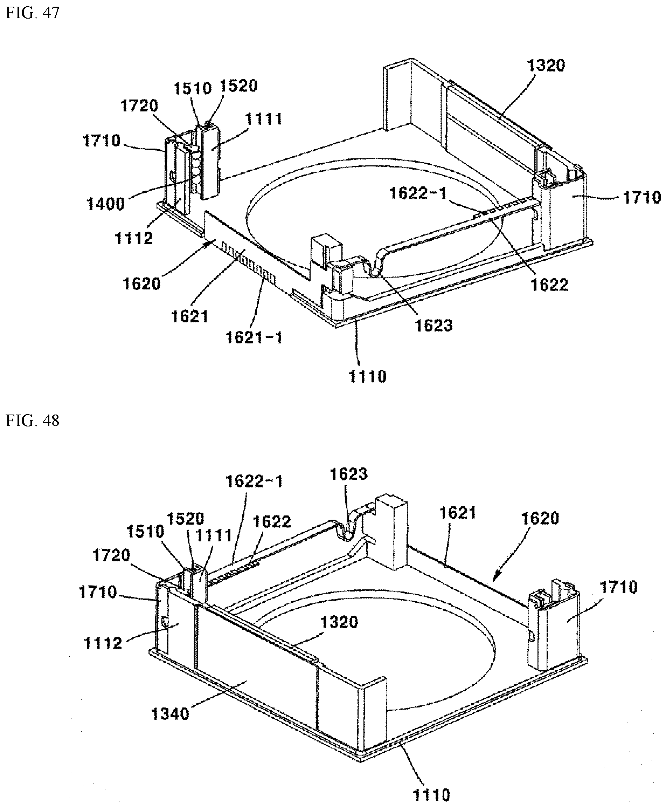

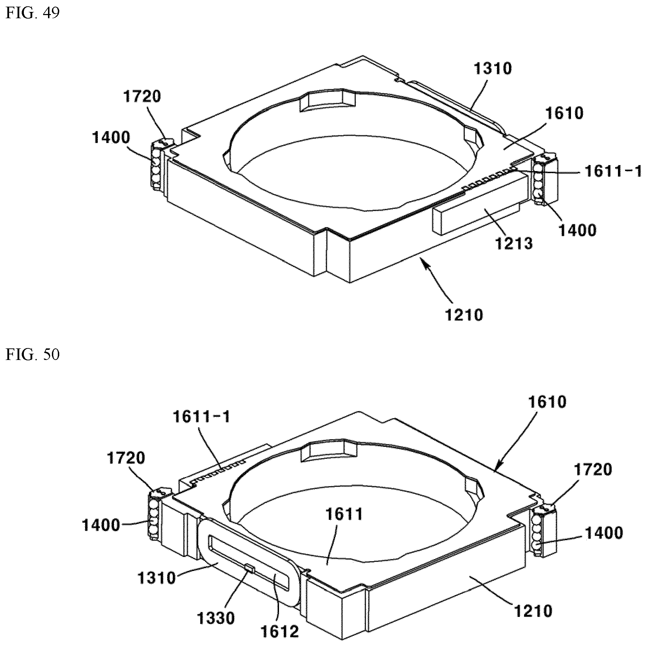

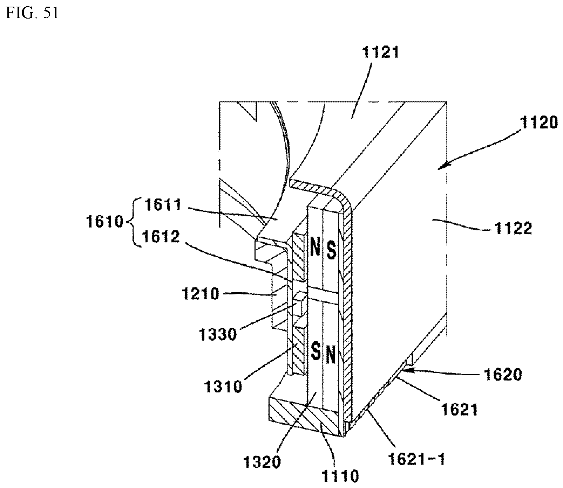

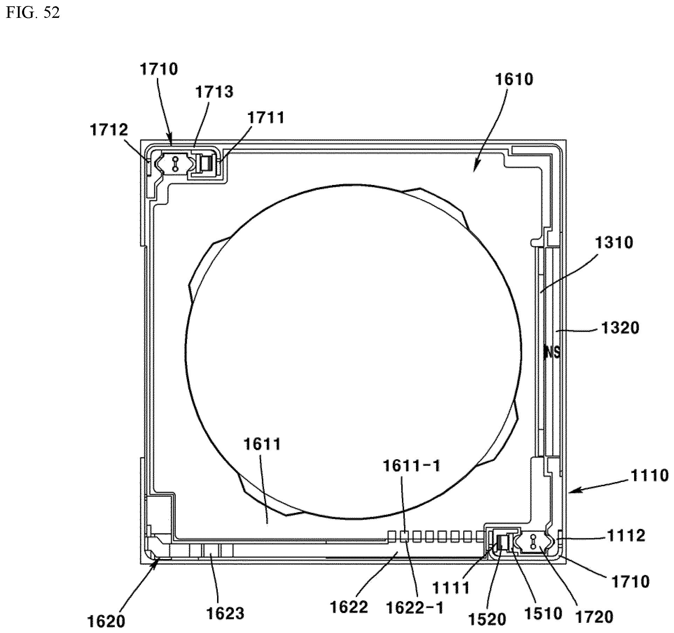

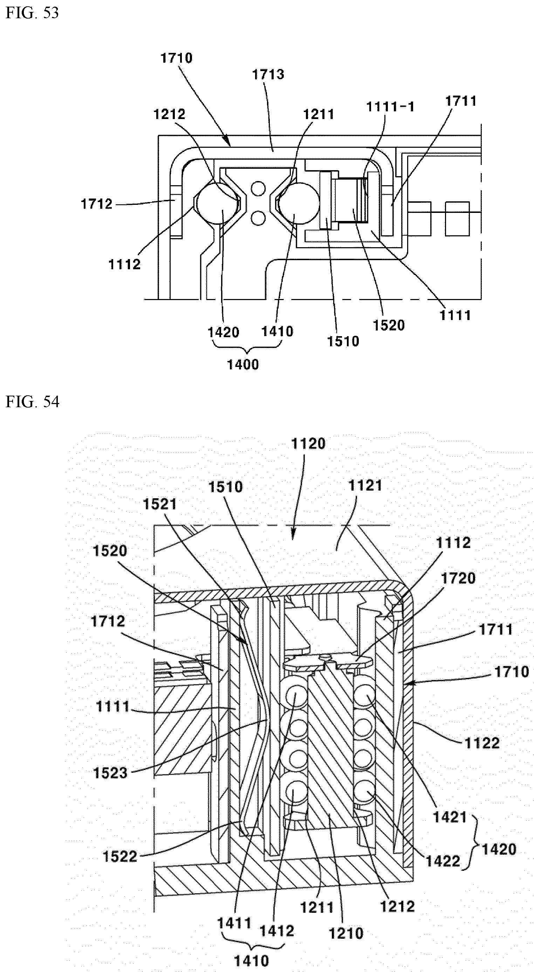

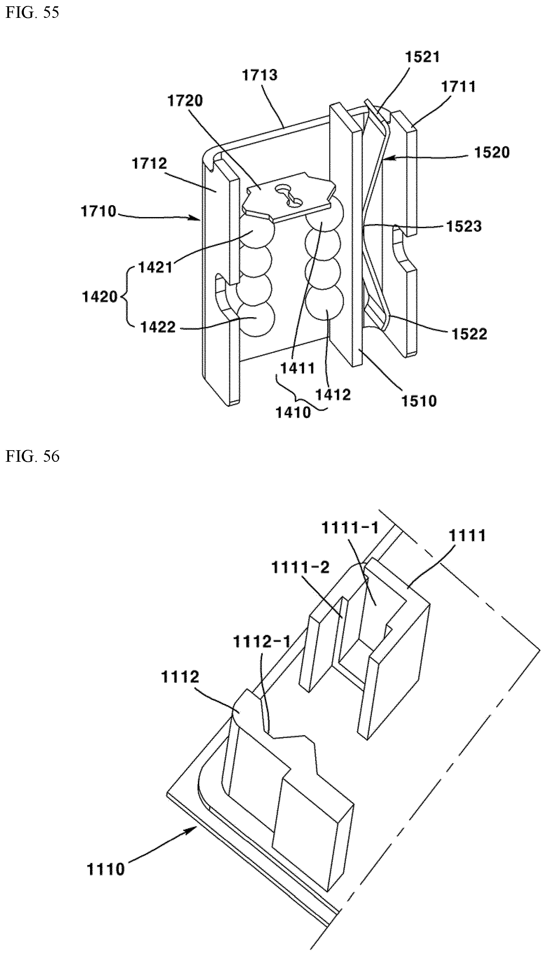

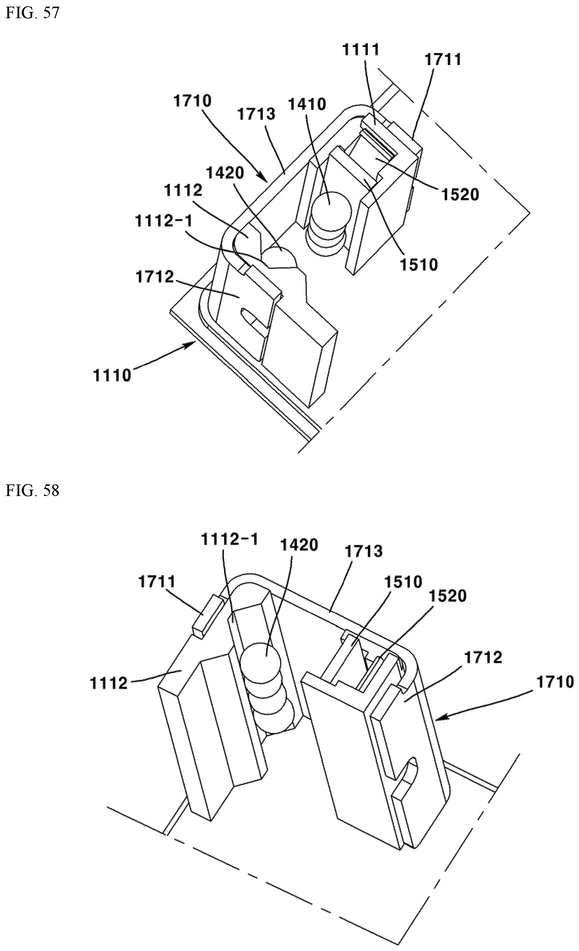

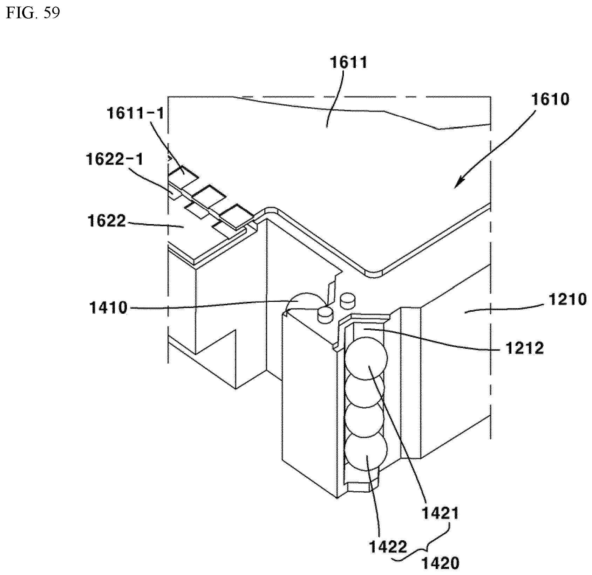

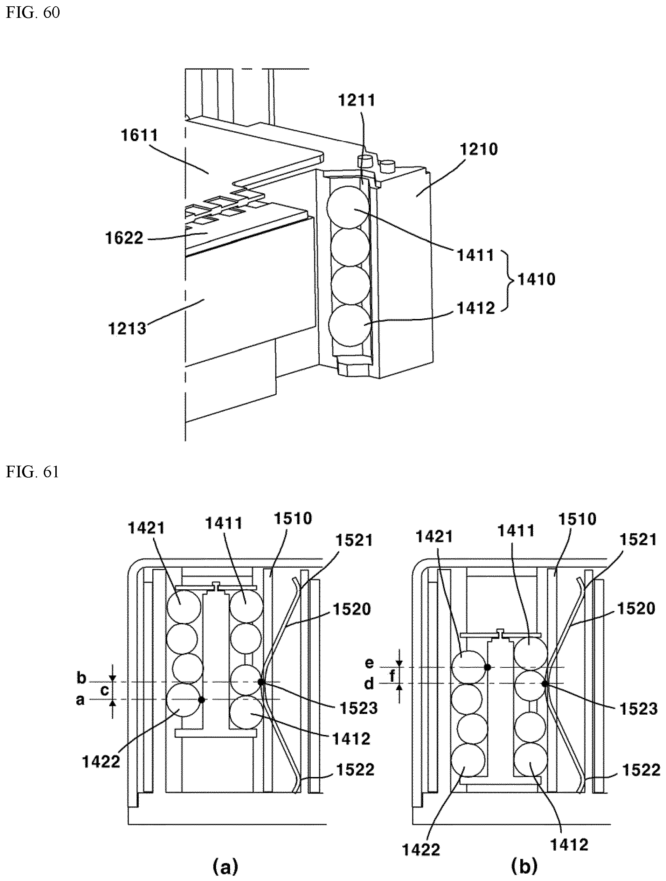

FIG. 38 is a perspective view of a lens driving device according to a second embodiment of the present invention; FIG. 39 is a sectional view seen from A-A in FIG. 38; FIG. 40 is a sectional view seen from B-B in FIG. 38; FIG. 41 is a sectional view seen from C-C in FIG. 38; FIG. 42 is a cross-sectional view seen from D-D in FIG. 38; FIG. 43 is an exploded perspective view of a lens driving device according to a second embodiment of the present invention; FIG. 44 is an exploded perspective view of FIG. 43 viewed from another direction; FIG. 45 is a perspective view of a state in which a cover is omitted from a lens driving device according to a second embodiment of the present invention; FIG. 46 is a perspective view of FIG. 45 viewed from another direction; FIG. 47 is a perspective view illustrating a fixed part and related components of a lens driving device according to a second embodiment of the present invention; FIG. 48 is a perspective view of FIG. 47 viewed from another direction; FIG. 49 is a perspective view illustrating a moving part and related components of a lens driving device according to a second embodiment of the present invention; FIG. 50 is a perspective view of FIG. 49 viewed from another direction; FIG. 51 is a cross-sectional perspective view illustrating a driving part and related components of a lens driving device according to a second embodiment of the present invention; FIG. 52 is a plan view of a state in which a cover is omitted from a lens driving device according to a second embodiment of the present invention; FIG. 53 is an enlarged plan view of a part of FIG. 52 in a state where the cover is omitted; FIG. 54 is a cross-sectional perspective view illustrating a ball and related components of a lens driving device according to a second embodiment of the present invention; FIG. 55 is a perspective view illustrating a ball and related components of a lens driving device according to a second embodiment of the present invention; FIG. 56 is a perspective view illustrating a ball accommodating structure of a base of a lens driving device according to a second embodiment of the present invention; FIG. 57 is a perspective view illustrating a state in which the ball, plate member, elastic member, and reinforcing member are disposed in FIG. 56; FIG. 58 is a perspective view of FIG. 57 viewed from another direction; FIG. 59 is a perspective view illustrating a moving part and a ball of a lens driving device according to a second embodiment of the present invention; FIG. 60 is a perspective view of FIG. 59 viewed from another direction; and FIG. 61(a) is a view comparing the heights of the ball and the pressurizing point in a state in which the moving part moves upward, and FIG. 61(b) is a diagram comparing the heights of the ball and the pressurizing point in a state in which the moving part moves downward.

The lens driving device **1010** may be a voice coil motor (VCM). The lens driving device **1010** may be a lens driving motor. The lens driving device **1010** may be a lens driving actuator. The lens driving device **1010** may comprise an AF module. The lens driving device **1010** may comprise an AF actuator.

The lens driving device **1010** may comprise a fixed part **1100.** The fixed part **1100** may be a relatively fixed part when the moving part **1200** moves. The moving part **1200** may move against the fixed part **1100.**

The lens driving device **1010** may comprise a base **1110.** The fixed part **1100** may comprise a base **1110.** The base **1110** may be disposed below the holder **1210.** The base **1110** may be coupled with cover **1120.** The holder **1210** may be disposed on the base **1110.** The holder **1210** may be disposed on a lower plate portion of the base **1110.** The AF carrier **1210** may be disposed inside the base **1110.** The holder **1210** may be disposed inside the side wall part **1112** of the base **1110.**

The base **1110** may comprise a lower plate portion. The lower plate portion of the base **1110** may support a lower surface of the moving part **1200.** The lower plate portion of the base **1110** may support a lower surface of the holder **1210.**

The base **1110** may comprise a pillar part **1111.** The pillar part **1111** may be extended from an upper surface of the lower plate portion.

The base **1110** may comprise an inner groove **1111-1.** The pillar part **1111** may comprise an inner groove **1111-1.** The inner groove **1111-1** may be formed in the pillar part **1111.** The inner groove **1111-1** may be a 'ball accommodating groove'. An inner ball **1410** may be disposed in the inner groove **1111-1.** The inner groove **1111-1** may be directly in contact with the inner ball **1410.** The inner groove **1111-1** may comprise a plurality of grooves. The inner groove **1111-1** may comprise two grooves. The two grooves may be disposed parallel to each other. The two grooves may be disposed in a diagonal direction from each other with respect to an optical axis.

The base **1110** may comprise an outer wall portion **1112.** The outer wall portion **1112** may be a 'side portion'. The outer wall portion **1112** may be a 'side plate'. The outer wall portion **1112** may be a 'side wall'. The outer wall portion **1112** of the base **1110** may be extended from an upper surface of the lower plate portion.

The base **1110** may comprise an outer groove **1112-1.** The outer wall portion **1112** may comprise an outer groove **1112-1.** The outer groove **1112-1** may be formed to face the inner groove **1111-1.** The outer groove **1112-1** may face the inner groove **1111-1.** The outer groove **1112-1** may be a 'ball accommodating groove'. A ball **1400** may be disposed in the outer groove **1112-1.** An outer ball **1420** may be disposed in the outer groove **1112-1.** The outer groove **1112-1** may directly in contact with the ball **1400.** The outer groove **1112-1** may be disposed in an optical axis direction. The outer groove **1112-1** may comprise a plurality of grooves. The outer groove **1112-1** may comprise two grooves. The two grooves may be disposed parallel to each other. The two grooves may be disposed in a diagonal direction from each other with respect to an optical axis. The outer groove **1112-1** may be disposed at an opposite side of the inner groove **1111-1.** The outer groove **1112-1** may have a shape corresponding to the inner groove **1111-1.** The outer groove **1112-1** and the inner groove **1111-1** may be formed to have the same length in an optical axis direction.

The base **1110** may comprise a protruded part. The protruded part may be protruded outward. A connecting portion **1623** of the outer substrate **1620** may be disposed above the protruded part. A groove may be formed in the protruded part so as not to interfere even when the connecting portion **1623** of the outer substrate **1620** moves.

The base **1110** may comprise a step. The step may be formed on a lower end portion of an outer side surface of the base **1110.** The step may be protruded from an outer side surface of the base **1110.** The side plate **1122** of the cover **1120** may be disposed in a step of the base **1110.**

The lens driving device **1010** may comprise a cover **1120.** The fixed part **1100** may comprise a cover **1120.** The cover **1120** may be disposed on the base **1110.** The cover **1120** may be disposed on the base **1110.** The cover **1120** may be coupled to the base **1110.** The cover **1120** may be fixed to the base **1110.** The cover **1120** may accommodate the holder **1210** therein. The cover **1120** may be a shield member. The cover **1120** may be a shield can.

The cover **1120** may comprise an upper plate **1121.** The upper plate **1121** may be disposed on a moving part **1200.** The upward movement of the moving part **1200** may be limited by contacting of the moving part **1200** with the upper plate **1121.** The upper plate **1121** may comprise a hole through which light passes.

The cover **1120** may comprise a side plate **1122.** The side plate **1122** may be extended from the upper plate **1121.** The side plate **1122** may be disposed on the base **1110.** The side plate **1122** may be disposed on a step portion being protruded from a lower end portion of an outer side surface of the base **1110.** The side plate **1122** may comprise a plurality of side plates. The side plate **1122** may comprise four side plates. The side plate **1122** may comprise a first side plate and a second side plate being disposed opposite to each other, and a third side plate and a fourth side plate being disposed opposite to each other.

The lens driving device **1010** may comprise a moving part **1200.** The moving part **1200** may be disposed in the fixed part **1100.** The moving part **1200** may be disposed inside the fixed part **1100.** The moving part **1200** may be disposed on the fixed part **1100.** The moving part **1200** may be movably disposed in the fixed part **1100.** The moving part **1200** may move based on the fixed part **1100** by the driving part **1300.** The moving part **1200** may move in an optical axis direction against the fixed part **1100** by the driving part **1300.** The moving part **1200** can move in an optical direction. The moving part **1200** can move during AF driving. A lens may be coupled to the moving part **1200.**

The lens driving device **1010** may comprise a holder **1210.** The moving part **1200** may comprise a holder **1210.** The holder **1210** may be an 'AF holder'. The holder **1210** may be a 'bobbin'. The holder **1210** may be disposed inside the base **1110.** The holder **1210** may be disposed on the base **1110.** The holder **1210** may be disposed inside the cover **1120.** The holder **1210** may be movably disposed. The holder **1210** may be movably disposed in an optical axis direction.

The holder **1210** may comprise an inner groove **1211.** The inner groove **1211** may be a 'ball accommodating groove'. A ball **1400** may be disposed in the inner groove **1211.** An inner ball **1410** may be disposed in the inner groove **1211.** The inner groove **1211** may be directly in contact with the ball **1400.** The inner groove **1211** may be disposed in an optical axis direction. The inner groove **1211** may guide the ball **1400** to move in an optical axis direction. The inner groove **1211** may comprise a plurality of grooves. The inner groove **1211** may comprise two grooves. The two grooves may be disposed parallel to each other. The two grooves may be disposed in a diagonal direction from each other with respect to an optical axis.

The holder **1210** may comprise an outer groove **1212.** The outer groove **1212** may be a 'ball accommodating groove'. A ball **1400** may be disposed in the outer groove **1212.** An outer ball **1420** may be disposed in the outer groove **1212.** The outer groove **1212** may be directly in contact with the ball **1400.** The outer groove **1212** may be disposed in an optical axis direction. The outer groove **1212** may guide the ball **1400** to move in an optical axis direction. The outer groove **1212** may comprise a plurality of grooves. The outer groove **1212** may comprise two grooves. The two grooves may be disposed parallel to each other. The two grooves may be disposed in a diagonal direction with respect to an optical axis. The outer groove **1212** may be disposed at an opposite side of the inner groove **1211.** The outer groove **1212** may have a shape corresponding to the inner groove **1211.** The outer groove **1212** and the inner groove **1211** may be formed to have the same length in an optical axis direction.

The holder **1210** may comprise a protruded part **1213.** The protruded part **1213** may be formed on an outer side surface of the holder **1210.** The protruded part **1213** may be protruded outward from the holder **1210.** At least a portion of the connecting portion **1623** of the outer substrate **1620** may be disposed on an upper surface of the protruded part **1213.** At least a portion of the coupling portion **1622** of the outer substrate **1620** may be disposed on an upper surface of the protruded part **1213.**

The lens driving device **1010** may comprise a driving part **1300.** The driving part **1300** may move the moving part **1200** in an optical axis direction. The driving part **1300** may move the holder **1210** in an optical axis direction. The driving part **1300** may move the holder **1210** in an optical axis direction through electromagnetic force. The driving part **1300** may comprise a coil **1310** and a magnet **1320.** The coil **1310** and the magnet **1320** may move the moving part **1200** in an optical axis direction.

The lens driving device **1010** may comprise a coil **1310.** The driving part **1300** may comprise a coil **1310.** The coil **1310** may interact with magnet **1320.** The coil **1310** may face the magnet **1320.** The coil **1310** and the magnet **1320** may face each other. The coil **1310** may be disposed at a position corresponding to the magnet **1320.** The coil **1310** may be overlapped with the magnet **1320** in a direction perpendicular to the optical axis. The coil **1310** may be disposed in the inner substrate **1610.** The coil **1310** may be disposed in the side plate portion **1612** of the inner substrate **1610.** The coil **1310** may be disposed in holder **1210.** The coil **1310** may be disposed in the holder **1210** through the inner substrate **1610.** The coil **1310** may move together with the holder **1210.**

In a second embodiment of the present invention, the coil **1310** can move in an optical axis direction. The coil **1310** may move in an optical axis direction through interaction with the magnet **1320.** The coil **1310** may move together with the moving part **1200.** The coil **1310** may move in an optical axis direction together with the moving part **1200.** During the AF driving process, the coil **1310** may move together with the moving part **1200** in an optical axis direction. The coil **1310** may be disposed in the moving part **1200.** The coil **1310** may be fixed to the moving part **1200.** The coil **1310** may be coupled to the moving part **1200.**

The lens driving device **1010** may comprise a magnet **1320.** The driving part **1400** may comprise a magnet **1320.** The magnet **1320** may be a 'magnet'. The magnet **1320** may be a permanent magnet. The magnet **1320** may be disposed in the fixed part **1100.** The magnet **1320** may be disposed on the base **1110.** The magnet **1320** may be disposed in the cover **1120.** The magnet **1320** may be disposed in the side plate **1122** of the cover **1120.** The magnet **1320** may be disposed on an outer side surface of the base **1110.** The magnet **1320** may be disposed on an inner side surface of the base **1110.** The magnet **1320** may be fixed to the base **1110.** The magnet **1320** may be coupled to the base **1110.** The magnet **1320** may be attached to the base **1110** with an adhesive. The magnet **1320** may be disposed inside the cover **1120.** The magnet **1320** may interact with the coil **1310.** The magnet **1320** may interact with the coil **1310** electromagnetically. The magnet **1320** may be disposed at a position corresponding to the coil **1310.** The magnet **1320** and the coil **1310** may face each other. The magnet **1320** may face the coil **1310.** The magnet **1320** may be overlapped with the coil **1310** in a direction perpendicular to the optical axis.

The magnet **1320** may be a 4-pole magnet. The magnet **1320** may comprise a 4-pole magnetized magnet. The magnet **1320** may comprise a first magnet part comprising an N pole and an S pole, and a second magnet part comprising an N pole and an S pole. The first magnet part and the second magnet part may be disposed in a vertical direction. The first magnet part and the second magnet part are disposed spaced apart from each other in a vertical direction, and a neutral part may be disposed between the first magnet part and the second magnet part.

The lens driving device **1010** may comprise a sensor **1330.** The driving part **1300** may comprise a sensor **1330.** The sensor **1330** may be a Hall sensor. The sensor **1330** may be disposed in the inner substrate **1610.** The sensor **1330** may detect the magnet **1320.** The sensor **1330** may detect movement of the magnet **1320.** The movement amount or position of the magnet **1320** detected by the sensor **1330** may be used for feedback of auto focus driving. The sensor **1330** may be disposed in the moving part **1200.** The sensor **1330** may be disposed in a holder **1210.** The sensor **1330** may be disposed in the holder **1210** through the inner substrate **1610.** The sensor **1330** may move together with the moving part **1200.**

The sensor **1330** may be a driver IC. The driver IC may comprise a sensing unit. The sensing unit may comprise a Hall IC. The driver IC may be electrically connected to the coil **1310.** The driver IC may supply current to the coil **1310.**

The sensor **1330** may be disposed inside the coil **1310.** The sensor **1330** may be overlapped with a neutral portion of the magnet **1320** in a direction perpendicular to the optical axis. As a modified embodiment, the sensor **1330** may be disposed outside the coil **1310.**

The lens driving device **1010** may comprise a yoke **1340.** The yoke **1340** may be disposed at a position corresponding to the magnet **1320.** The yoke **1340** may be disposed in the magnet **1320.** The yoke **1340** may be disposed between the magnet **1320** and the side plate **1122** of the cover **1120.** The yoke **1340** may be disposed on an outer surface of the magnet **1320.** The inner surface of the magnet **1320** may face the coil **1310.** Through this, the yoke **1340** may increase electromagnetic interaction force between the magnet **1320** and the coil **1310** by minimizing leakage flux of the magnet **1320.**

The lens driving device **1010** may comprise a guide member. The guide member may comprise a ball **1400.** The guide member may comprise a shaft. The guide member may comprise a cylindrical member. The guide member may guide the movement of the moving part **1200** against the fixed part **1100** in a specific direction. In a modified embodiment, the ball **1400** of the second embodiment of the present invention can be replaced with a shaft. In this case, a tilt phenomenon of the moving part **1200** can be prevented.

The lens driving device **1010** may comprise a ball **1400.** The ball **1400** may guide the movement of the moving part **1200** against the fixed part **1100** in an optical axis direction. The ball **1400** may guide the movement of the holder **1210** against the base **1110** in an optical axis direction. The ball **1400** may be disposed between the fixed part **1100** and the moving part **1200.** The ball **1400** may be disposed between the base **1110** and the holder **1210.** The ball **1400** may be disposed between the base **1110** and the holder **1210** in an x direction. Or, the ball **1400** may be disposed between the base **1110** and the holder **1210** in a y direction. The ball **1400** may be disposed in a groove of the base **1110.** The ball **1400** may be disposed in a groove of the holder **1210.** The ball **1400** may have a spherical shape. The ball **1400** may be formed of metal. Grease may be applied to the surface of the ball **1400.**

The ball **1400** may be disposed at a first corner of the base **1110.** The ball **1400** may be disposed at a second corner in a diagonal direction of the first corner of the base **1110.** The ball **1400** may be disposed at each of the first corner and the second corner of the base **1110.** The first corner region and the second corner region of the fixed part **1100** may be disposed in diagonal directions with respect to an optical axis. The ball **1400** may be disposed in the first corner region and the second corner region of the fixed part **1100.** Two sets of balls **1400** may be disposed at each of the first corner and the second corner of the base **1110.** At this time, one set may comprise 4 balls. The two sets may be disposed at an opposite side of the pillar part of the holder **1210** from each other.

The ball **1400** may comprise an inner ball **1410.** The inner ball **1410** may be disposed in the pillar part **1111** of the base **1110.** The inner ball **1410** may be disposed in the inner groove **1111-1** of the base **1110.** The inner ball **1410** may be disposed in the inner groove **1211** of the holder **1210.** The inner ball **1410** may be disposed in the inner groove **1211** of the moving part **1200.** The inner ball **1410** may be disposed in the inner groove **1111-1** of the base **1110** and the inner groove **1211** of the holder **1210.** The inner ball **1410** may be disposed between the inner groove **1111-1** of the base **1110** and the inner groove **1211** of the holder **1210.** The inner ball **1410** may be disposed between the moving part **1200** and the pillar part **1111** of the fixed part **1100.**

The ball **1400** may comprise an outer ball **1420.** The outer ball **1420** may be disposed 1n the outer wall portion **1112** of the base **1110.** The outer ball **1420** may be disposed in the outer groove **1112-1** of the base **1110.** The outer ball **1420** may be disposed in the outer groove **1212** of the holder **1210.** The outer ball **1420** may be disposed in the outer groove **1112-1** of the base **1110** and the outer groove **1212** of the holder **1210.** The outer ball **1420** may be disposed between the outer groove **1112-1** of the base **1110** and the outer groove **1212** of the holder **1210.** The outer ball **1420** may be disposed between the outer groove **1112-1** of the fixed part **1100** and the outer groove **1212** of the moving part **1200.** The outer ball **1420** may be disposed between the outer wall portion **1112** of the moving part **1200** and the fixed part **1100.**

The inner ball **1410** may comprise a plurality of inner balls **1410.** The plurality of inner balls **1410** may be disposed in an optical axis direction. The inner ball **1410** may comprise four inner balls **1410.** The inner ball **1410** may comprise first to fourth inner balls. Two of the four inner balls **1410** may have a large diameter and the other two may have a small diameter. The two balls with a large diameter can be disposed at the uppermost and the lowermost places. That is, the two balls with a small diameter may be disposed between the two balls with a large diameter.

The inner ball **1410** may comprise the uppermost inner ball **1411.** The uppermost inner ball **1411** may be disposed at the highest place among the inner balls **1410.** The uppermost inner ball **1411** may be disposed to be closest to the upper plate **1121** of the cover **1120** among the inner balls **1410.** The inner ball **1410** may comprise the lowermost inner ball **1412.** The lowermost inner ball **1412** may be disposed at the lowest place among the inner balls **1410.** The lowermost inner ball **1412** may be disposed to be closest to the lower part of the base **1110** among the inner balls **1410.** The plurality of inner balls **1410** may comprise balls having a smaller diameter than each of the uppermost inner ball **1411** and the lowermost inner ball **1412.** The plurality of inner balls **1410** may comprise balls being disposed between the uppermost inner ball **1411** and the lowermost inner ball **1412.**

The outer ball **1420** may comprise a plurality of outer balls **1420.** The plurality of outer balls **1420** may be disposed in an optical axis direction. The outer ball **1420** may comprise four outer balls **1420.** The outer ball **1420** may comprise first to fourth outer balls. Two of the four outer balls **1420** may have a large diameter and the other two may have a small diameter. The two balls with a large diameter can be disposed at the highest and the lowest places. That is, the two balls with a small diameter may be disposed between the two balls with a large diameter.

The outer ball **1420** may comprise an uppermost outer ball **1421.** The uppermost outer ball **1421** may be placed at the highest place among the outer balls **1420.** The uppermost outer ball **1421** may be disposed to be closest to the upper plate **1121** of the cover **1120** among the outer balls **1420.** The outer ball **1420** may comprise a lowermost outer ball **1422.** The lowermost outer ball **1422** may be disposed at the lowest place among the outer balls **1420.** The lowermost outer ball **1422** may be disposed to be closest to the lower plate of the base **1110** among the outer balls **1420.** The plurality of outer balls **1420** may comprise balls having a smaller diameter than each of the uppermost outer ball **1421** and the lowermost outer ball **1422.** The plurality of outer balls **1420** may comprise balls being disposed between the uppermost outer ball **1421** and the lowermost outer ball **1422.**

The height of the point where the elastic member **1520** pressurizes the plate member **1510** is lower than the height of the ball being disposed lower among the uppermost inner ball **1411** and the uppermost outer ball **1421,** and may be higher than the height of the ball being disposed higher among the lowermost inner ball **1412** and the lowermost outer ball **1422.** More specifically, as shown in FIG. 61(a), when the moving part **1200** moves upward, the height **b** of the point where the elastic member **1520** pressurizes the plate member **1510** may be higher than the height **a** of the ball being disposed higher among the lowermost inner ball **1422** and the lowermost outer ball **1412.** A gap **c** may exist at a height between the two points. In addition, as shown in FIG. 61(b), when the moving part **1200** moves downward, the height **e** of the point where the elastic member **1520** pressurizes the plate member **1510** may be lower than the height **d** of the ball being disposed lower among the uppermost inner ball **1421** and uppermost outer ball **1411.** A gap **f** may exist at a height between the two points. Through this, generation of a moment being generated when the elastic member **1520** pressurizes the plate member **1510** may be prevented or minimized. That is, a phenomenon in which the plate member **1510** is tilted or separated may be prevented.

The lens driving device **1010** may comprise a pressurizing member. The pressurizing member may be a 'ball pressurizing member'. The pressurizing member may pressurize the ball **1400.** The pressurizing member may be formed to pressurize the ball. The ball **1400** pressurized by the pressurizing member may be held between the fixed part **1100** and the moving part **1200.** The ball **1400** pressurized by the pressurizing member may be held between the base **1110** and the holder **1210.** The pressurizing member may keep the ball **1400** to be in contact with the fixed part **1100** and the moving part **1200.** The pressurizing member may keep the ball **1400** in a state being in contact with the base **1110** and the holder **1210.**

The lens driving device **1010** may comprise a plate member **1510.** The pressurizing member may comprise the plate member **1510.** The plate member **1510** may be disposed on the ball **1400.** The plate member **1510** may be disposed in the elastic member **1520.** The plate member **1510** may be disposed on the base **1110.** The plate member **1510** may be disposed between the elastic member **1520** and the ball **1400.** The plate member **1510** may pressurize the ball **1400** toward the holder **1210** by the elastic member **1520.** The plate member **1510** may be disposed between the ball **1400** and the fixed part **1100.** The plate member **1510** may be disposed between the inner ball **1410** and the pillar part **1111** of the fixed part **1100.**

The lens driving device **1010** may comprise an elastic member **1520.** The pressurizing member may comprise an elastic member **1520.** The elastic member **1520** may be a spring. The elastic member **1520** may be a tapered spring. The elastic member **1520** may be disposed in the fixed part **1100.** The elastic member **1520** may pressurize the ball **1400** toward the moving part **1200.** The elastic member **1520** may pressurize the plate member **1510** toward the ball **1400.** The elastic member **1520** may be disposed between the plate member **1510** and the fixed part **1100.** The elastic member **1520** may push the plate member **1510** against the fixed part **1100.** The elastic member **1520** may pressurize the plate member **1510** in a direction opposite to the fixed part **1100.** The elastic member **1520** may be disposed between the plate member **1510** and the pillar part **1111** of the fixed part **1100.** The elastic member **1520** may be disposed in the inner groove **1111-1** of the fixed part **1100.**

As a modified embodiment, the elastic member **1520** may be disposed in the moving part **1200.** At this time, the elastic member **1520** may pressurize the ball **1400** toward the fixed part **1100.** The elastic member **1520** may be disposed on one of the fixed part **1100** and the moving part **1200** to pressurize the ball **1400** toward the other one of the fixed part **1100** and the moving part **1200.** The elastic member **1520** may pressurize the plate member **1510.** The elastic member **1520** may be disposed between the plate member **1510** and the base **1110.** The elastic member **1520** may be disposed between the ball **1400** and the base **1110.** The elastic member **1520** may be disposed on the base **1110.** The elastic member **1520** may be disposed in the inner groove **1111-1** of the base **1110.** The elastic member **1520** may pressurize the ball **1400** toward the holder **1210.** Through this, the contact state of the ball **1400** between the plate member **1510** and the holder **1210** may be maintained.

The elastic member **1520** may comprise a bent part. The bent part may comprise a bent shape. The bent part may comprise a plurality of bent parts. The bent part may comprise three bent parts. The elastic member **1520** may be bent at least three times. The elastic member **1520** may comprise an upper bent part **1521.** The elastic member **1520** may comprise a lower bent part **1522.** The elastic member **1520** may comprise a connection bent part **1523.** The connection bent part **1523** may be disposed between the upper bent part **1521** and the lower bent part **1522.** The upper bent part **1521** may form an obtuse angle. The lower bent part **1522** may form an obtuse angle. The connection bent part **1523** may form an obtuse angle. The upper bent part **1521** may be disposed in the fixed part **1100.** The lower bent part **1522** may be disposed in the fixed part **1100.** The connection bent part **1523** may be disposed in the plate member **1510.** Through this structure, the elastic member **1520** may push the plate member **1510** against the fixed part **1100.** The connection bent part **1523** may be in contact with the plate member **1510** to pressurize the plate member **1510** toward the ball **1400.**

The lens driving device **1010** may comprise a substrate **1600.** The substrate **1600** may comprise a flexible printed circuit board (FPCB). The substrate **1600** may be electrically connected to the coil **1310.** The substrate **1600** may be electrically connected to the sensor **1330.**

The lens driving device **1010** may comprise an inner substrate **1610.** The inner substrate **1610** may be electrically connected to the coil **1310.** The inner substrate **1610** may be electrically connected to the sensor **1330.** The inner substrate **1610** may be disposed on the moving part **1200.** The inner substrate **1610** may be disposed on the holder **1210.** The inner substrate **1610** may be fixed to the holder **1210.** The inner substrate **1610** may be coupled to the holder **1210.** The inner substrate **1610** may be attached to the holder **1210** with an adhesive. The inner substrate **1610** may comprise a flexible substrate. The inner substrate **1610** may comprise a flexible printed circuit board (FPCB). The inner substrate **1610** may comprise an elastic portion. The inner substrate **1610** may comprise an elastic member.

The inner substrate **1610** may comprise an upper plate portion **1611.** The upper plate portion **1611** may be disposed on the moving part **1200.** The upper plate portion **1611** may be disposed on an upper surface of the moving part **1200.** The upper plate portion **1611** may be disposed on the holder **1210.** The upper plate portion **1611** may be disposed on an upper surface of the holder **1210.** The upper plate portion **1611** may be disposed between the holder **1210** and the upper plate **1121** of the cover **1120.**

The inner substrate **1610** may comprise a terminal **1611-1.** The terminal **1611-1** may be disposed on the upper plate portion **1611** of the inner substrate **1610.** The terminal **1611-1** may be electrically connected to the coil **1310.** The terminal **1611-1** may be electrically connected to the sensor **1330.** The terminal **1611-1** of the inner substrate **1610** may be electrically connected to a terminal **1622-1** of the outer substrate **1620.** The terminal **1611-1** of the inner substrate **1610** may be connected to the terminal **1622-1** of the outer substrate **1620** through a conductive member. The terminal **1611-1** of the inner substrate **1610** may be coupled to the terminal **1622-1** of the outer substrate **1620** through soldering.

The inner substrate **1610** may comprise a side plate portion **1612.** The side plate portion **1612** may be disposed on a side surface of the holder **1210.** The side plate portion **1612** may be disposed on the side surface of the moving part **1200.** The side plate portion **1612** may be disposed on an outer side surface of the holder **1210.** The side plate portion **1612** may be disposed on an outer side surface of the moving part **1200.** The side plate portion **1612** may be extended from the upper plate portion **1611.** The side plate portion **1612** may be extended downward from the upper plate portion **1611.** The side plate portion **1612** may be bent from the upper plate portion **1611.** A coil **1310** may be disposed on the side plate portion **1612.** A sensor **1330** may be disposed on the side plate portion **1612.** The side plate portion **1612** may be disposed between the coil **1310** and the holder **1210.**

Although the inner substrate **1610** has been described as a separate component from the moving part **1200,** the inner substrate **1610** may be comprised in the moving part **1200.**

The lens driving device **1010** may comprise an outer substrate **1620.** The outer substrate **1620** may be disposed on the base **1110.** The outer substrate **1620** may be electrically connected to the coil **1310.** The outer substrate **1620** may be electrically connected to the sensor **1330.** The outer substrate **1620** may connect the holder **1210** and the base **1110.** The outer substrate **1620** may elastically connect the holder **1210** and the base **1110.** The outer substrate **1620** may movably support the holder **1210** relative to the base **1110.** The outer substrate **1620** may guide the holder **1210** to move in an optical axis direction with respect to the base **1110.** The outer substrate **1620** may comprise a flexible substrate. The outer substrate **1620** may comprise a flexible printed circuit board (FPCB). The outer substrate **1620** may comprise an elastic portion. The outer substrate **1620** may comprise an elastic member. The outer substrate **1620** may be disposed on the fixed part **1100.**

The outer substrate **1620** may comprise an outer side portion **1621.** The outer side portion **1621** may be disposed on the base **1110.** The outer side portion **1621** may be disposed on a side surface of the base **1110.** The outer side portion **1621** may be disposed on an outer side surface of the base **1110.**

The outer substrate **1620** may comprise a terminal **1621-1.** The outer side portion **1621** of the outer substrate **1620** may comprise a terminal **1621-1.** The terminal **1621-1** may be electrically connected to the terminal **1622-1.** The terminal **1621-1** may be disposed at a lower end of the base **1110.** The terminal **1621-1** may be coupled to the printed circuit board **1050.** The terminal **1621-1** may be coupled to a terminal of the printed circuit board **1050** through soldering. The terminal **1621-1** may be coupled to a terminal of the printed circuit board **1050** through a conductive member. The terminal **1621-1** may be connected to a terminal of the printed circuit board **1050.** The terminal **1621-1** may be electrically connected to a terminal of the printed circuit board **1050.**

The outer substrate **1620** may comprise a coupling portion **1622.** The coupling portion **1622** may be coupled to the inner substrate **1610.** The coupling portion **1622** may move together with the inner substrate **1610.** The coupling portion **1622** may move together with the holder **1210.**

The outer substrate **1620** may comprise a terminal **1622-1.** The coupling portion **1622** of the outer substrate **1620** may comprise a terminal **1622-1.** The terminal **1622-1** may be coupled with the terminal **1611-1** of the inner substrate **1610.** The terminal **1622-1** of the outer substrate **1620** may be coupled to the terminal **1611-1** of the inner substrate **1610** through soldering. The terminal **1622-1** of the outer substrate **1620** may be coupled to the terminal **1611-1** of the inner substrate **1610** through a conductive member. The terminal **1622-1** of the outer substrate **1620** may be connected to the terminal **1611-1** of the inner substrate **1610.** The terminal **1622-1** of the outer substrate **1620** may be electrically connected to the terminal **1611-1** of the inner substrate **1610.**

The outer substrate **1620** may comprise a connecting portion **1623.** The connecting portion **1623** may be an 'extended portion'. The connecting portion **1623** may be a 'leg portion'. The connecting portion **1623** may be extended from the outer side portion **1621.** The connecting portion **1623** may be extended from the coupling portion **1622.** The connecting portion **1623** may connect the outer side portion **1621** and the coupling portion **1622.** At least a portion of the connecting portion **1623** may move together with the holder **1210.** At least a portion of the connecting portion **1623** may move together with the inner substrate **1610.** At least a portion of the connecting portion **1623** may be disposed perpendicular to the optical axis direction. The connecting portion **1623** of the outer substrate **1620** may be coupled to the inner substrate **1610** so that the inner substrate **1610** can move in an optical axis direction. The connecting portion **1623** may comprise a bent shape. The connecting portion **1623** may comprise a bent portion. The connecting portion **1623** may comprise a U-shaped portion.

The lens driving device **1010** may comprise a reinforcing member **1710.** The reinforcing member **1710** may be disposed on the base **1110.** The reinforcing member **1710** may be disposed to reinforce the strength of the base **1110.** The reinforcing member **1710** may prevent damage to the base **1110.** The reinforcing member **1710** can prevent the pillar part **1111** of the base **1110** from damages. The reinforcing member **1710** may prevent the outer wall portion **1112** of the base **1110** from damages. The reinforcing member **1710** may have elasticity. The reinforcing member **1710** may be formed of metal. The reinforcing member **1710** may comprise a shape bent at least twice. The reinforcing member **1710** may be formed in the shape of a symbol '⊂' when viewed from above. The reinforcing member **1710**may be opened inward.

The reinforcing member **1710** may comprise an inner side portion **1711.** The inner side portion **1711** may be disposed on an opposite side of the inner groove **1111-1** of the pillar part **1111** of the fixed part **1100.** The reinforcing member **1710** may comprise an outer side portion **1712.** The outer side portion **1712** may be disposed on an opposite side of the outer groove **1112-1** of the outer wall portion **1112** of the fixed part **1100.** The reinforcing member **1710** may comprise a connecting portion **1713.** The connecting portion **1713** may connect the inner side portion **1711** and the outer side portion **1712.**

The lens driving device **1010** may comprise a cover **1720.** The cover **1720** may be disposed above the ball **1400.** The cover **1720** may be overlap with the ball **1400** in an optical axis direction. The cover **1720** may be overlapped with the inner ball **1410** in an optical axis direction. The cover **1720** may be overlapped with the outer ball **1420** in an optical axis direction. The cover **1720** may be disposed on the inner groove **1211** and the outer groove **1212** of the holder **1210** to prevent the ball **1400** from being separated upward.

Hereinafter, a configuration of a lens driving device according to a modified embodiment will be described with reference to drawings.

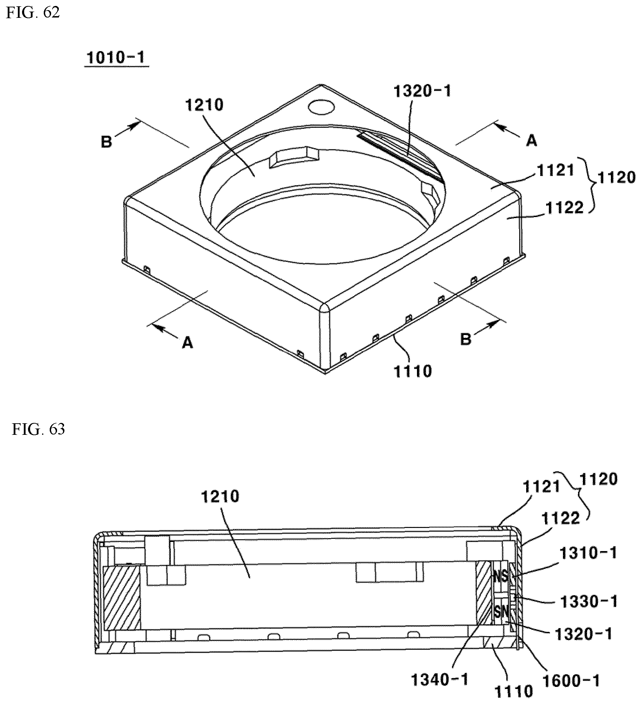

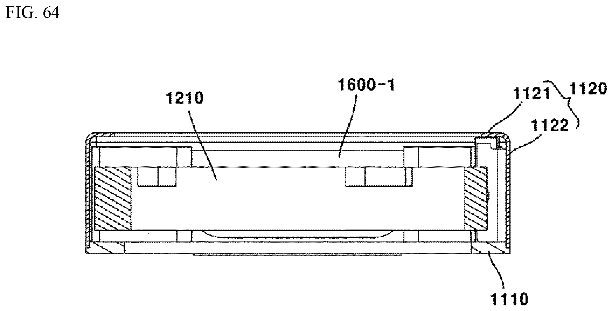

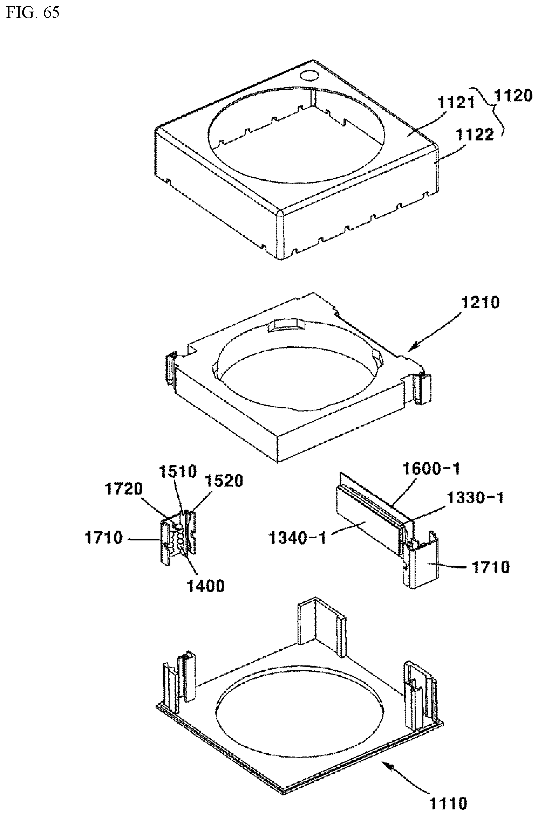

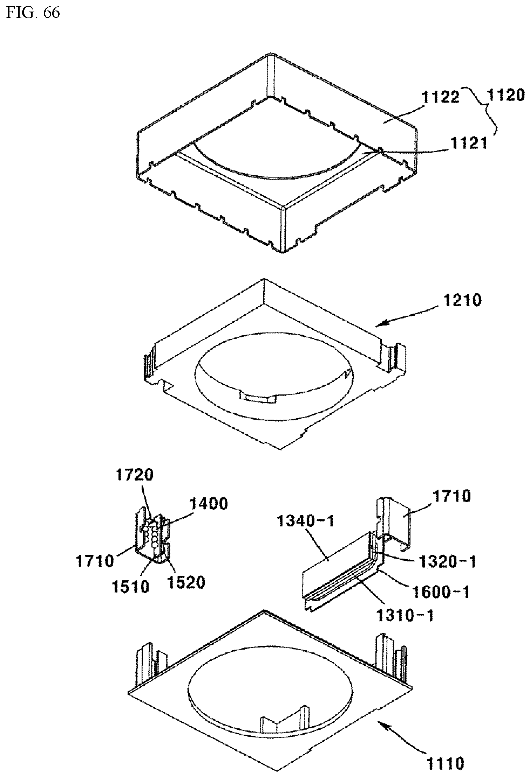

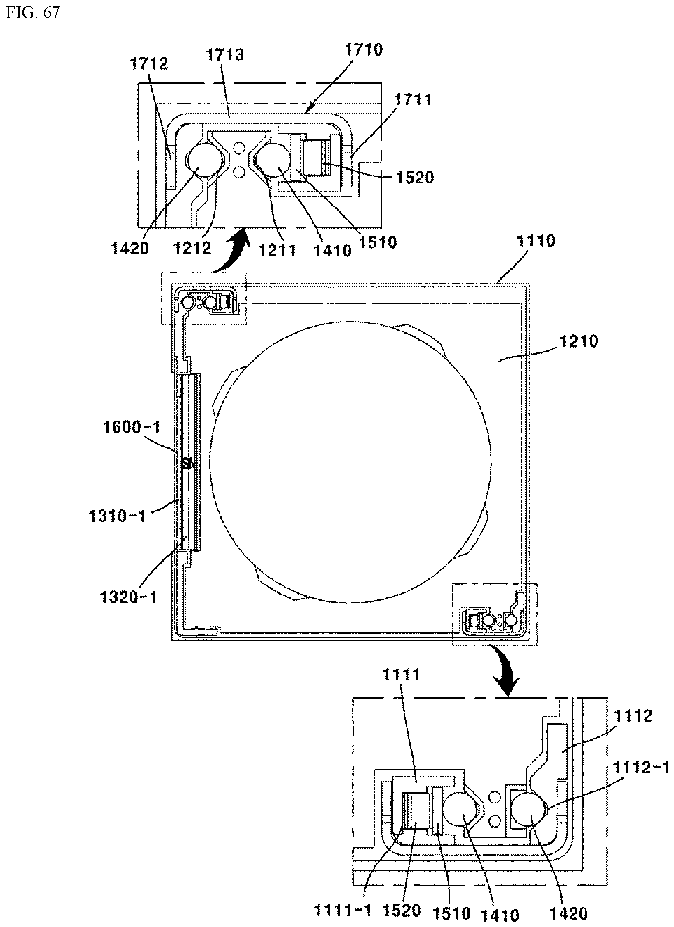

FIG. 62 is a perspective view of a lens driving device according to a modified embodiment; FIG. 63 is a sectional view seen from A-A in FIG. 62; FIG. 64 is a sectional view seen from B-B in FIG. 62; FIG. 65 is an exploded perspective view of a lens driving device according to a modified embodiment; FIG. 66 is an exploded perspective view of FIG. 65 viewed from another direction; and FIG. 67 is a plan view and a partially enlarged view of a state in which a cover is omitted from a lens driving device according to a modified embodiment.

The lens driving device **110-1** according to a modified embodiment may comprise a fixed part **1100.** The description of the fixed part **1100** in a second embodiment of the present invention can be analogously applied to the description of the fixed part **1100.**

The lens driving device **110-1** according to the modified embodiment may comprise a moving part **1200.** The description for the moving part **1200** in a second embodiment of the present invention can be analogously applied to the description for the moving part **1200.**

The lens driving device **110-1** according to a modified embodiment may comprise a driving part. In a modified embodiment, compared to a second embodiment of the present invention, the positions of the coil and the magnet may be reversed. That is, in a modified embodiment, the coil **1310-1** may be disposed on the fixed part **1100** and the magnet **1320-1** may be disposed on the moving part **1200.**

The lens driving device **110-1** may comprise a coil **1310-1.** The driving part may comprise a coil **1310-1.** The coil **1310-1** may be disposed on the substrate **1600-1.** The coil **1310-1** may be disposed on the fixed part **1100.** The coil **1310-1** may be disposed on the base **1110.** The coil **1310-1** may be disposed on the cover **1120.** The coil **1310-1** may be disposed on the outer side of the magnet **1320-1.** The coil **1310-1** may be disposed between the side plate **1122** of the cover **1120** and the magnet **1320-1.** The coil **1310-1** may be fixed. The fixed state of the coil **1310-1** can be maintained even during AF driving.

The lens driving device **110-1** may comprise a magnet **1320-1.** The driving part may comprise a magnet **1320-1.** The magnet **1320-1** may be disposed on the moving part **1200.** The magnet **1320-1** may be disposed on the holder **1210.** The magnet **1320-1** may be disposed between the coil **1310-1** and the holder **1210.** The magnet **1320-1** may be disposed inside the coil **1310-1.** The magnet **1320-1** may be overlapped with the coil 1310-1 in a direction perpendicular to the optical axis. The magnet **1320-1** may face the coil **1310-1.** The magnet **1320-1** and the coil **1310-1** may face each other. The magnet **1320-1** may be disposed at a position corresponding to the coil **1310-1.** The magnet **1320-1** may interact with the coil **1310-1.** The magnet **1320-1** may interact electromagnetically with the coil **1310-1.** The magnet **1320-1** may move. The magnet **1320-1** may be movably disposed. The magnet **1320-1** may move during AF driving. The magnet **1320-1** may move together with the holder **1210.** The magnet **1320-1** may move in an optical axis direction.

The lens driving device **110-1** may comprise a sensor **1330-1.** The driving part may comprise the sensor **1330-1.** The sensor **1330-1** may detect the magnet **1320-1.** The sensor **1330-1** may be disposed on the substrate **1600-1.** The sensor **1330-1** may be disposed inside the coil **1310-1.** The sensor **1330-1** may be a Hall sensor. The movement amount or position of the magnet **1320-1** detected by the sensor **1330-1** may be used for feedback of autofocus driving.

The lens driving device **110-1** may comprise a yoke **1340-1.** The driving part may comprise a yoke **1340-1.** The yoke **1340-1** may be disposed at a position corresponding to the magnet **1320-1.** The yoke **1340-1** may be disposed on the magnet **1320-1.** The yoke **1340-1** may be disposed between the magnet **1320** and the holder **1210.** The yoke **1340-1** may be disposed on an inner surface of the magnet **1320-1.** The outer surface of the magnet **1320-1** may face the coil **1310-1.** Through this, the yoke **1340-1** can increase the electromagnetic interaction force between the magnet **1320-1** and the coil **1310-1** by minimizing leakage flux of the magnet **1320-1.**

The lens driving device **110-1** may comprise a substrate **1600-1.** The substrate **1600-1** may be disposed on the fixed part **1100.** The substrate **1600-1** may be disposed on the base **1110.** The substrate **1600-1** may be disposed on the cover **1120.** The substrate **1600-1** may be disposed on the side plate **1122** of the cover **1120.** The substrate **1600-1** may be disposed on an inner surface of the side plate **1122** of the cover **1120.** The substrate **1600-1** may be disposed on an outer surface of the side plate **1122** of the cover **1120.** The substrate **1600-1** may be disposed parallel to an optical axis. A coil **1310-1** and a sensor **1330-1** may be disposed on the substrate **1600-1.** The substrate **1600-1** may comprise a printed circuit board. The substrate **1600-1** may comprise a flexible printed circuit board (FPCB).

The lens driving device **110-1** according to a modified embodiment may comprise a ball **1400.** The description of the ball **1400** in a second embodiment of the present invention can be analogously applied to the description of the ball **1400.**

The second embodiment and the modified embodiment of the present invention have advantages in that there is no centering force of the yoke in the optical axis direction by using tapered springs when compared to the comparative example pressurizing the ball through the attractive force between the yoke and the magnet. In addition, by disposing the balls **1400** diagonally, it is possible to prevent the moving part **1200** from being rotated or tilted and to secure necessary adhesion. However, as a modified embodiment, both sets of balls **1400** may be disposed on one side of the fixed part **1100,** not in a diagonal direction. As another modified embodiment, the ball **1400** may be used as a shaft structure to minimize the tilt of the module, that is, the moving part **1200.**

Hereinafter, auto focus (AF) driving of a lens driving device according to a second embodiment of the present invention will be described with reference to drawings.

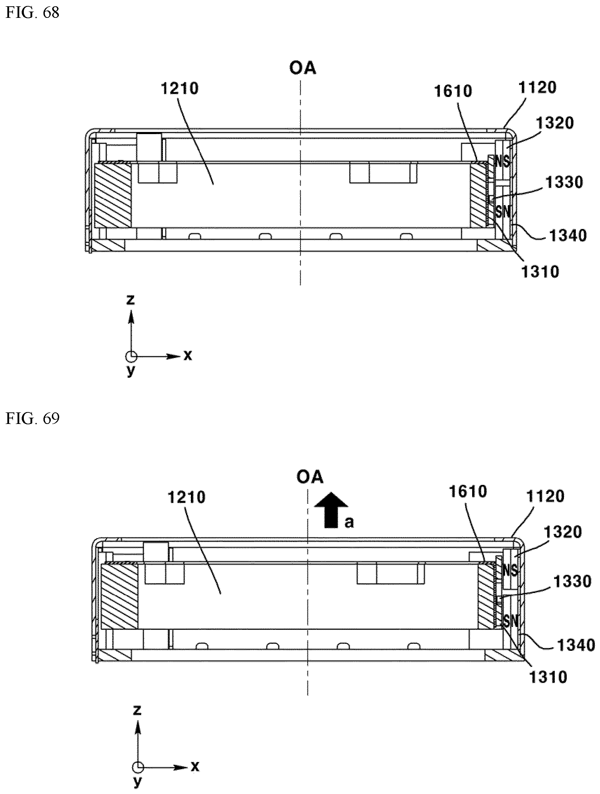

FIGS. 68 to 70 are views for explaining autofocus driving of a lens driving device according to a second embodiment of the present invention. FIG. 68 is a cross-sectional view of a moving part in an initial state in which no current is applied to the AF coil. FIG. 69 is a cross-sectional view illustrating a state in which a moving part moves upward in an optical axis direction when a forward current is applied to an AF coil. FIG. 70 is a cross-sectional view illustrating a moving part moving downward in an optical axis direction when a reverse current is applied to the AF coil.

As illustrated in FIG. 68, the moving part **1200** may be disposed at a position spaced apart from both the upper plate **1121** and the base **1110** of the cover **1120** in an initial position where no current is applied to the coil **1310.**

When a forward current is applied to the coil **1310,** the coil **1310** may move upward in an optical axis direction due to electromagnetic interaction between the coil **1310** and the magnet **1320** (see a in FIG. 69). At this time, the holder **1210** together with the coil **1310** may move upward in an optical axis direction. Furthermore, the lens may move upward together with the holder **1210** in an optical axis direction. Accordingly, the distance between the lens and the image sensor is changed so that the focus of an image being formed on the image sensor through the lens can be adjusted.

When a reverse current is applied to the coil **1310,** the coil **1310** may move downward in an optical axis direction due to electromagnetic interaction between the coil **1310** and the magnet **1320** (see **b** in FIG. 70). At this time, the holder **1210** together with the coil **1310** may move downward in an optical axis direction. Furthermore, the lens together with the holder **1210** may move downward in an optical axis direction. Accordingly, the distance between the lens and the image sensor is changed so that the focus of an image being formed on the image sensor through the lens can be adjusted.

Meanwhile, in the process of moving the coil **1310,** the sensor **1330** moves together with the coil **1310** and detects the intensity of the magnetic field of the magnet **1320** to detect the amount or position of the lens moving in an optical axis direction. The movement amount or position of the lens in an optical axis direction detected by the sensor **1330** may be used for autofocus feedback control.

Hereinafter, auto focus (AF) driving of a lens driving device according to a modified embodiment will be described with reference to drawings.

FIGS. 71 to 73 are diagrams for explaining autofocus driving of a lens driving device according to a second embodiment of the present invention. FIG. 71 is a cross-sectional view illustrating the state of the moving part in an initial state in which no current is applied to the AF coil. FIG. 72 is a cross-sectional view illustrating a state in which a moving part moves upward in an optical axis direction when a forward current is applied to an AF coil. FIG. 73 is a cross-sectional view illustrating a moving part being moved downward in an optical axis direction when a reverse current is applied to the AF coil.

As illustrated in FIG. 71, the moving part **1200** may be disposed at a position spaced apart from both the upper plate **1121** and the base **1110** of the cover **1120** in an initial position where no current is applied to the coil **1310-1.**

When a forward current is applied to the coil **1310-1,** the magnet **1320-1** may move upward in an optical axis direction due to electromagnetic interaction between the coil **1310-1** and the magnet **1320-1** (see **a** in FIG. 72). At this time, the holder **1210** together with the magnet **1320-1** may move upward in an optical axis direction. Furthermore, the lens may move upward together with the holder **1210** in an optical axis direction. Accordingly, the distance between the lens and the image sensor is changed so that the focus of an image being formed on the image sensor through the lens can be adjusted.

When a reverse current is applied to the coil **1310-1,** the magnet **1320-1** can move downward in an optical axis direction due to electromagnetic interaction between the coil **1310-1** and the magnet **1320-1** (see **b** in FIG. 73). At this time, the holder **1210** together with the magnet **1320-1** may move downward in an optical axis direction. Furthermore, the lens together with the holder **1210** may move downward in an optical axis direction. Accordingly, the distance between the lens and the image sensor is changed so that the focus of an image being formed on the image sensor through the lens can be adjusted.

Meanwhile, during the movement process of the magnet **1320-1,** the sensor **1330-1** may detect the amount or position of the lens moving in the optical axis direction by detecting the strength of the magnetic field of the magnet **1320-1.** The movement amount or position of the lens in the optical axis direction detected by the sensor **1330-1** may be used for autofocus feedback control.

Hereinafter, a camera device according to a second embodiment of the present invention will be described with reference to the drawings.

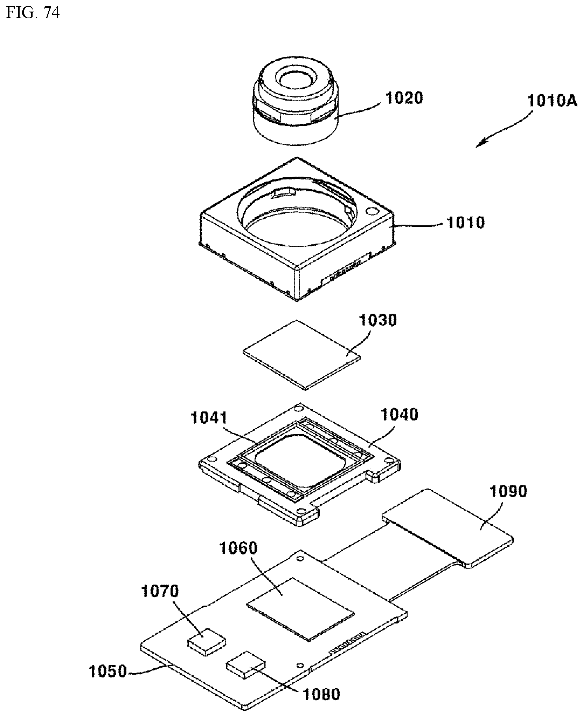

FIG. 74 is an exploded perspective view of a camera device according to a second embodiment of the present invention.

The camera device **1010A** may comprise a camera module.

The camera device **1010A** may comprise a lens module **1020.** The lens module **1020** may comprise at least one lens. The lens may be disposed at a position corresponding to the image sensor **1060.** The lens module **1020** may comprise a lens and a barrel. The lens module **1020** may be coupled to the holder **1210** of the lens driving device **1010.** The lens module **1020** may be coupled to the holder **1210** by screw-coupling and/or an adhesive. The lens module **1020** may move integrally with the holder **1210.**

The camera device **1010A** may comprise a filter **1030.** The filter **1030** may serve to block light of a specific frequency band from entering the image sensor **1060** from light passing through the lens module **1020.** The filter **1030** may be disposed parallel to an x-y plane. The filter **30** may be disposed between the lens module **1020** and the image sensor **1060.** The filter **1030** may be disposed in the sensor base **1040.** In a modified embodiment, the filter **1030** may be disposed in base **1110.** The filter **1030** may comprise an infrared filter. The infrared filter may block light of an infrared region from being incident on the image sensor **1060.**

The camera device **1010A** may comprise a sensor base **1040.** The sensor base **1040** may be disposed between the lens driving device **1010** and the printed circuit board **1050.** The sensor base **1040** may comprise a protruded part **1041** in which the filter **1030** is disposed. An opening may be formed in a portion of the sensor base **1040** where the filter **1030** is disposed so that light passing through the filter **1030** may be incident to the image sensor **1060.** The adhesive member may couple or attach the base **1110** of the lens driving device **1010** to the sensor base **1040.** The adhesive member may additionally serve to prevent foreign substances from entering the lens driving device **1010.** The adhesive member may comprise any one or more of an epoxy, a thermosetting adhesive, and an ultraviolet curable adhesive.

The camera device **1010A** may comprise a printed circuit board (PCB) **1050.** The printed circuit board **1050** may be a substrate or a circuit board. The lens driving device **1010** may be disposed on the printed circuit board **1050.** A sensor base **1040** may be disposed between the printed circuit board **1050** and the lens driving device **1010.** The printed circuit board **1050** may be electrically connected to the lens driving device **1010.** An image sensor **1060** may be disposed on the printed circuit board **1050.** The printed circuit board **1050** may comprise various circuits, elements, and control units to convert an image formed by the image sensor **1060** into an electrical signal and transmit the converted electrical signal to an external device.

The camera device **1010A** may comprise an image sensor **1060.** The image sensor **1060** may be a component in which the light passing through the lens and the filter **1030 is** incident to form an image. The image sensor **1060** may be mounted on the printed circuit board **1050.** The image sensor **1060** may be electrically connected to the printed circuit board **1050.** For an example, the image sensor **1060** may be coupled to the printed circuit board **1050** by a surface mounting technology (SMT). As another example, the image sensor **1060** may be coupled to the printed circuit board **1050** using a flip chip technology. The image sensor **1060** may be disposed such that an optical axis coincides with a lens. That is, the optical axis of the image sensor **1060** and the optical axis of the lens may be aligned. The image sensor **1060** may convert light being irradiated onto an effective image region of the image sensor **1060** into an electrical signal. The image sensor **1060** may be any one among a charge coupled device (CCD), a metal oxide semi-conductor (MOS), a CPD, and a CID.

The camera device **1010A** may comprise a motion sensor **1070.** The motion sensor **1070** may be mounted on a printed circuit board **1050.** The motion sensor **1070** may be electrically connected to a control unit **1080** through a circuit pattern provided on the printed circuit board **1050.** The motion sensor **1070** may output rotational angular velocity information due to the movement of the camera module. The motion sensor **1070** may comprise a 2-axis or 3-axis gyro sensor or an angular velocity sensor.

The camera device **1010A** may comprise a control unit **1080.** The control unit **1080** may be disposed in the printed circuit board **1050.** The control unit **1080** may be electrically connected to the coil **1310** of the lens driving device **1010.** The control unit **1080** may individually control the direction, intensity, and amplitude of current supplied to the coil **1310.** The control unit **1080** may perform an auto focus function and/or hand shake correction function by controlling the lens driving device **1010.** Furthermore, the control unit **1080** may perform autofocus feedback control and/or hand shake correction feedback control for the lens driving device **1010.**

The camera device **1010A** may comprise a connector **1090.** The connector **1090** may be electrically connected to the printed circuit board **1050.** The connector **1090** may comprise a port for electrically connecting to an external device.

Hereinafter, an optical apparatus according to a second embodiment of the present invention will be described with reference to the drawings.

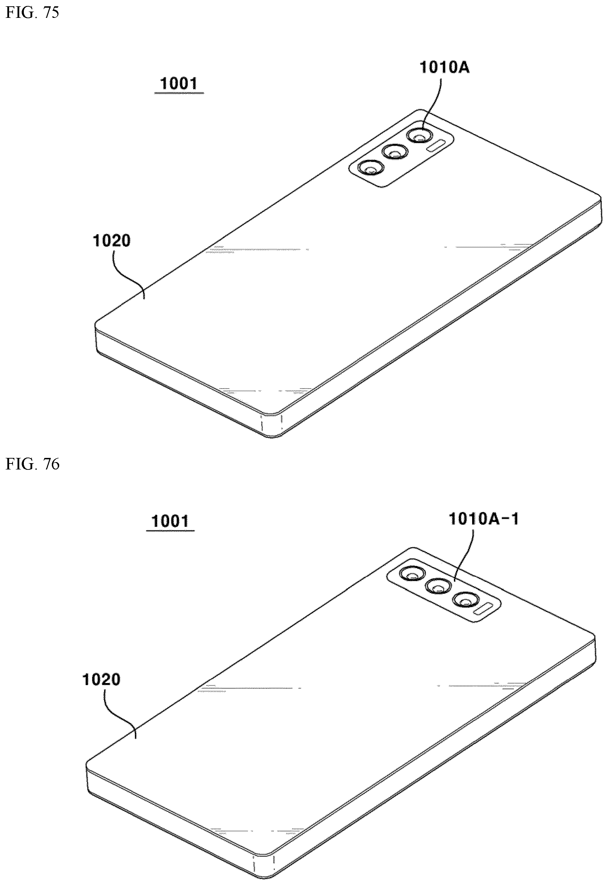

FIG. 75 is a perspective view of an optical apparatus according to a second embodiment of the present invention; and FIG. 76 is a perspective view of an optical apparatus according to a modified embodiment.

The optical apparatus **1001** is a mobile phone, mobile phone, portable terminal, mobile terminal, smart phone, smart pad, portable smart device, digital camera, laptop computer, digital broadcasting terminal, personal digital assistants (PDAs), portable multimedia player (PMP), and navigation. The optical apparatus **001** may comprise any device for photographing images or photos.

The optical apparatus **1001** may comprise a main body **1020.** The optical apparatus **1001** may comprise a camera device **1010A.** The camera device **1010A** may be disposed on the main body **1020.** The camera device **1010A** may photograph a subject. The optical apparatus **1001** may comprise a display. The display may be disposed on the main body **1020.** The display may output at least one of a video and an image photographed by the camera device **1010A.** The display may be disposed on a first surface of the main body **1020.** The camera device **1010A** may be disposed on at least one of a first surface of the main body **1020** and a second surface opposite to the first surface. As illustrated in FIG. 74, in the camera device **1010A,** triple cameras may be disposed in a vertical direction. As illustrated in FIG. 76, in the camera device **1010A-1,** triple cameras may be disposed in a horizontal direction.

Although the first embodiment and the second embodiment have been separately described above, some configurations of the first embodiment and some configurations of the second embodiment may be used interchangeably. That is, some configurations of the first embodiment may be replaced with corresponding configurations of the second embodiment. In addition, some configurations of the second embodiment may be replaced with corresponding configurations of the first embodiment. In addition, the third embodiment of the present invention may comprise some configurations of the first embodiment and some configurations of the second embodiment together.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a base;
a housing disposed on the base;
a bobbin disposed in the housing;
a first ball disposed between a side surface of the housing and the base;
a second ball disposed between the housing and an upper side of the bobbin;
a first elastic member coupled with a portion of the upper side of the bobbin;
a second elastic member coupled with a lower side of the housing; and
a wire connecting the first elastic member and the second elastic member.

2. The lens driving device of claim 1, wherein the base comprises a first guide configured to guide the first ball to move.

3. The lens driving device of claim 2, wherein the side surface of the housing comprises a second guide configured to guide the first ball to move.

4. The lens driving device of claim 3, wherein the first guide and the second guide comprise a groove.

5. The lens driving device of claim 1, wherein the housing comprises a first housing comprising an upper plate having a metal member and a second housing disposed on the first housing and having a protrusion configured to guide the second ball.

6. A lens driving device comprising:
a fixed part;
a first moving part disposed in the fixed part;
a second moving part disposed in the first moving part;
a first driving part configured to move the first moving part in an optical axis direction; and
a second driving part configured to move the second moving part in a direction perpendicular to the optical axis direction,
wherein the first driving part comprises a first driving unit disposed on the first moving part and a second driving unit disposed on the fixed part, and
wherein the second driving part comprises a third driving unit disposed on the second moving part and a fourth driving unit disposed on the first moving part.

7. The lens driving device of claim 6, wherein the fourth driving unit comprises a coil.

8. The lens driving device of claim 7, wherein the coil is configured to move together with the first moving part.

9. The lens driving device of claim 7, wherein the first driving unit comprises a first magnet, and
wherein the second driving unit comprises a first coil.

10. The lens driving device of claim 7, wherein the second driving part comprises a fifth driving unit disposed on the second moving part and spaced apart from the third driving unit, and a sixth driving unit disposed on the first moving part and spaced apart from the fourth driving unit.
